(19)

Europäisches
Patentamt
European
Patent Office
Office européen
des brevets

(11) **EP 4 611 369 A1**

(12) **EUROPEAN PATENT APPLICATION**
published in accordance with Art. 153(4) EPC

(43) Date of publication:
**03.09.2025 Bulletin 2025/36**

(21) Application number: **23884251.2**

(22) Date of filing: **29.06.2023**

(51) International Patent Classification (IPC):
***H04N 19/132*** *(2014.01)*     ***H04N 19/186*** *(2014.01)*

(52) Cooperative Patent Classification (CPC):
**H04N 19/132; H04N 19/176; H04N 19/186;
H04N 19/42; H04N 19/44**

(86) International application number:
**PCT/CN2023/104087**

(87) International publication number:
**WO 2024/093312 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022  CN 202211350403**

(71) Applicant: **Huawei Technologies Co., Ltd.
Shenzhen, Guangdong 518129 (CN)**

(72) Inventors:
• **SONG, Yi
  Shenzhen, Guangdong 518129 (CN)**

• **DI, Peiyun
  Shenzhen, Guangdong 518129 (CN)**
• **YANG, Haitao
  Shenzhen, Guangdong 518129 (CN)**
• **CHEN, Shaolin
  Shenzhen, Guangdong 518129 (CN)**
• **YU, Huangqi
  Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **IMAGE CODING METHOD AND APPARATUS, AND IMAGE DECODING METHOD AND APPARATUS**

(57)     This application provides a picture encoding and decoding method and apparatus. The picture encoding method in this application includes: obtaining a to-be-processed picture block, where a dimension of the picture block is 2×2, and a sampling format of the picture block is YUV4:4:4; downsampling a chroma component of the picture block to obtain a first picture block, where a sampling format of the first picture block is YUV4:2:2, and a first chroma pixel and a second chroma pixel in a first chroma component of the first picture block are obtained based on a third chroma pixel and a fourth chroma pixel in four pixels in a first chroma component of the picture block; splitting a chroma component of the first picture block to obtain a second picture block and a UV11 picture block, where a sampling format of the second picture block is YUV4:2:0; performing encoding based on the second picture block to obtain a base layer bitstream; and performing encoding based on the UV11 picture block to obtain an enhancement layer bitstream. This application can ensure normal display of a picture, and adapt to network fluctuation, thereby improving transmission efficiency and display effect.

FIG. 9

**Description**

This application claims priority to Chinese Patent Application No. 202211350403.X, filed with the China National Intellectual Property Administration on October 31, 2022 and entitled "PICTURE ENCODING AND DECODING METHOD AND APPARATUS", which is incorporated herein by reference in its entirety.

**TECHNICAL FIELD**

This application relates to video encoding and decoding technologies, and in particular, to a picture encoding and decoding method and apparatus.

**BACKGROUND**

Usually, YUV4:2:0 is used for most pictures input to an encoder for encoding. A standard video codec based on YUV4:2:0 is widely used in various products, for example, a video application (application, APP), a mobile phone (chip), and a television (chip). A high-sampling-rate chroma component YUV usually is a chroma component sampling rate higher than that of YUV4:2:0, for example, YUV4:4:4 or YUV4:2:2.

Therefore, it is a common requirement to encode a high-sampling-rate chroma component YUV picture by using an existing standard video codec based on YUV4:2:0. In a related technology, an encoder side downsamples a YUV4:4:4 picture to obtain a YUV4:2:0 picture, and performs picture encoding. A decoder side reconstructs the obtained YUV4:2:0 picture, and then upsamples the YUV4:2:0 picture to restore the YUV4:4:4 picture.

However, in existing methods, computational complexity is high, and subjective effect of the restored YUV4:4:4 picture is poor.

**SUMMARY**

This application provides a picture encoding and decoding method and apparatus, to ensure normal display of a picture, and adapt to network fluctuation, thereby improving transmission efficiency.

According to a first aspect, this application provides a picture encoding method, including: obtaining a to-be-processed picture block, where a dimension of the picture block is $2\times2$, and a sampling format of the picture block is YUV4:4:4; downsampling a chroma component of the picture block to obtain a first picture block, where a sampling format of the first picture block is YUV4:2:2, and a first chroma pixel and a second chroma pixel in a first chroma component of the first picture block are obtained based on a third chroma pixel and a fourth chroma pixel in four pixels in a first chroma component of the picture block; splitting a chroma component of the first picture block to obtain a second picture block and a UV11 picture block, where a sampling format of the second picture block is YUV4:2:0; encoding the second picture block to obtain a base layer bitstream; and encoding the UV11 picture block to obtain an enhancement layer bitstream.

In this embodiment of this application, an encoder side obtains, based on the picture block in the YUV4:4:4 format, the picture block in the YUV4:2:0 format and the UV11 picture block including only a chroma component (the UV11 picture block includes one pixel used to represent a first chroma component and one pixel used to represent a second chroma component), and performs base layer encoding and enhancement layer encoding respectively on the picture block in the YUV4:2:0 format and the UV11 picture block. Layered encoding and decoding can ensure a basic display requirement of the picture block. To be specific, after a base layer reconstructed block is obtained at a decoding layer, subjective effect similar to that of a common YUV4:2:0 picture block can be achieved, and display effect of a picture can be ensured even if a decoder side does not receive the enhancement layer bitstream, that is, normal display of the picture is ensured. In addition, when network quality is stable, the decoder side can receive and decode the base layer bitstream and the enhancement layer bitstream, to achieve better display effect. A combination of a base layer and an enhancement layer can adapt to network fluctuation, thereby improving transmission efficiency. In a process of obtaining the picture block in the YUV4:2:0 format, the chroma component of the picture block in the YUV4:4:4 format may be first downsampled to obtain the picture block in the YUV4:2:2 format. Two pixels in a chroma component of the picture block in the YUV4:2:2 format are obtained based on two of four pixels in a same-type chroma component of the picture block in the YUV4:4:4 format. In this way, during bitstream encoding, only information about the two pixels in the chroma component may be encoded without encoding all the four pixels in the chroma component, to reduce bitstream overheads.

In a related video coding technology, a picture block may be a largest coding unit (largest coding unit, LCU) in an entire frame of picture. The entire frame of picture may be any picture frame in a picture sequence included in a video being processed by an encoder. The picture frame is not split, and a dimension of the picture frame is a dimension of a complete picture frame. In the H.265 standard, before video encoding is performed, an original picture frame is split into a plurality of coding tree units (coding tree units, CTUs). The CTU is a largest coding unit for video encoding, and may be split into CUs of different dimensions in a quad-tree manner. The CTU, as the largest coding unit, is also referred to as an LCU.

Alternatively, the picture block may be an entire frame of picture. Alternatively, the picture block may be a region of interest (region of interest, ROI) in an entire frame of picture, that is, a picture region that needs to be processed and that is specified in the picture.

In this embodiment of this application, the to-be-processed picture block may be a picture block with a dimension of $2\times2$. In other words, after the picture block in the foregoing video coding technology is further split, a plurality of picture blocks with a dimension of $2\times2$ may be obtained. In this embodiment of this application, any $2\times2$ picture block may be used as the to-be-processed picture block, to perform chroma component processing.

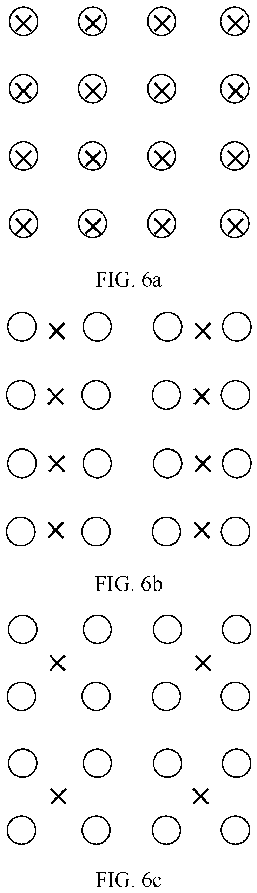

In addition, the sampling format of the to-be-processed picture block in this embodiment of this application is YUV4:4:4 (refer to FIG. 6a). To be specific, the to-be-processed picture block includes a luma component, the first chroma component, and a second chroma component, and the three components have a same sampling rate. The luma component includes four pixels, and the first chroma component and the second chroma component each also include four pixels. It should be noted that the to-be-processed picture block in this embodiment of this application may alternatively be in another 4:4:4 sampling format, for example, YCbCr. This is not specifically limited.

For ease of description, in this specification, an upper left pixel, an upper right pixel, a lower left pixel, and a lower right pixel of a picture block are sequentially numbered 0, 1, 2, and 3. However, it should be understood that the numbers are merely used as an example, and do not constitute a limitation on locations of the pixels.

In addition, a fifth chroma pixel and a sixth chroma pixel in a second chroma component of the first picture block are obtained based on a seventh chroma pixel and an eighth chroma pixel in four pixels in a second chroma component of the picture block.

The first chroma component is a component U, and the second chroma component is a component V; or the first chroma component is a component V, and the second chroma component is a component U.

The following uses the first chroma component as an example to describe a processing process of the chroma component of the picture block. It may be understood that, for a processing process of the second chroma component, refer to this.

The sampling format of the first picture block is YUV4:2:2 (refer to FIG. 6b). To be specific, the first picture block includes a luma component, the first chroma component, and the second chroma component, and sampling rates of the three components are different. The luma component includes four pixels, and the first chroma component and the second chroma component each include two pixels.

In this embodiment of this application, the first chroma pixel and the second chroma pixel in the first chroma component of the first picture block are obtained based on the third chroma pixel and the fourth chroma pixel in the four pixels in the first chroma component of the picture block.

The third chroma pixel and the fourth chroma pixel may be obtained in the following three manners:

Manner 1: The third chroma pixel and the fourth chroma pixel are determined based on a value of n1, where n1 is determined based on chroma values of the four pixels, n1 represents a type of chrominance of the first chroma component of the picture block, and n1 is a positive integer.

That is, the chroma values of the four pixels in the first chroma component of the to-be-processed picture block are obtained; it is determined, based on the chroma values of the four pixels, that the first chroma component of the picture block includes n1 types of chrominance, where n1 is a positive integer; and the third chroma pixel and the fourth chroma pixel are determined based on the value of n1.

The first chroma component of the picture block includes n1 types of chrominance, where n1 is determined based on N, and N is a quantity of absolute values of chroma value differences that are greater than a first threshold (preset) and that are in absolute values of chroma value differences between every two of the four pixels.

After six chroma value differences are compared, the value of N is obtained:

When N=0, n1=1;
when $0<N\leq4$, n1=2;
when N=5, n1=3; or
when N=6, n1=4.

It should be noted that, in this embodiment of this application, the value of n1 may alternatively be obtained by using another method. This is not specifically limited.

Manner 2: The third chroma pixel and the fourth chroma pixel are two pixels with a largest chroma value difference in the four pixels.

Absolute values of chroma value differences between every two of the four pixels are calculated, to obtain absolute values of six chroma value differences. The absolute values of the six chroma value differences are compared, to determine a largest value in the absolute values. Therefore, two pixels with the largest value obtained through calculation are the third chroma pixel and the fourth chroma pixel.

Manner 3: The third chroma pixel and the fourth chroma pixel are two pixels at diagonal locations in the four pixels.

For example, the third chroma pixel and the fourth chroma pixel may be the pixels 0 and 3, or the third chroma pixel and the fourth chroma pixel may be the pixels 1 and 2.

In this embodiment of this application, after the third chroma pixel and the fourth chroma pixel are determined, a chroma value of the first chroma pixel and a chroma value of the second chroma pixel in the first chroma component of the first picture block may be further obtained based on a chroma value of the third chroma pixel and a chroma value of the fourth chroma pixel. This can implement downsampling of the first chroma component of the picture block, thereby obtaining the first chroma component of the first picture block.

Optionally, the chroma value of the third chroma pixel and the chroma value of the fourth chroma pixel are first obtained; a first weight value corresponding to the third chroma pixel and a second weight value corresponding to the fourth chroma pixel are obtained; weighting is performed on the chroma value of the third chroma pixel and the chroma value of the fourth chroma pixel based on the first weight value and the second weight value, to obtain the chroma value of the first chroma pixel; and the chroma value of the fourth chroma pixel is determined as the chroma value of the second chroma pixel.

It can be learned that, in this embodiment of this application, the chroma value of the first chroma pixel is obtained through weighting (which may also be referred to as filtering) based on the chroma value of the third chroma pixel and the chroma value of the fourth chroma pixel. The chroma value of the fourth chroma pixel may be directly used as the chroma value of the second chroma pixel, so that the decoder side can restore the chroma value of the third chroma pixel, and better upsampling interpolation effect is obtained.

It should be noted that the chroma value of the third chroma pixel may alternatively be used as the chroma value of the second chroma pixel. In addition, in this embodiment of this application, the foregoing method may also be used to perform weighting based on the chroma value of the third chroma pixel and the chroma value of the fourth chroma pixel to obtain the chroma value of the second chroma pixel, and then determine the chroma value of the third chroma pixel or the chroma value of the fourth chroma pixel as the chroma value of the first chroma pixel. This is not specifically limited.

In a possible implementation, to obtain the first weight value corresponding to the third chroma pixel and the second weight value corresponding to the fourth chroma pixel, luma values of four pixels in the luma component of the picture block may be first obtained; and then the first weight value and the second weight value are obtained based on distribution of the luma values of the four pixels in the luma component of the picture block.

It can be learned that, in this embodiment of this application, the first weight value and the second weight value may be determined by using the luma component of the picture block as a reference basis. A general idea may include: A luma value of a first luma pixel and a luma value of a second luma pixel are measured with reference to the distribution of the luma values of the four pixels in the luma component of the picture block, a weight value corresponding to a luma value that is closer to a luma value of a third luma pixel and a luma value of a fourth luma pixel and that is in the luma value of the first luma pixel and the luma value of the second luma pixel is larger, and a weight value corresponding to a luma value that is farther from the luma value of the third luma pixel and the luma value of the fourth luma pixel and that is in the luma value of the first luma pixel and the luma value of the second luma pixel is smaller. The first luma pixel and the second luma pixel are pixels that are in the luma component of the picture block and that are respectively located at same locations as the third chroma pixel and the fourth chroma pixel, for example, the pixels 0 and 3. The luma value of the third luma pixel and the fourth luma pixel are the other two pixels in the luma component of the picture block, for example, the pixels 1 and 2. In this way, a chroma pixel is obtained in a weighted averaging manner, so that it can be ensured that a chroma plane including the chroma pixel seems smooth in subjective effect.

The sampling format of the second picture block is YUV4:2:0 (refer to FIG. 6c). To be specific, the second picture block includes a luma component, a first chroma component, and a second chroma component, and sampling rates of the three components are different. The luma component includes four pixels, and the first chroma component and the second chroma component each include one pixel.

Therefore, the second picture block and the UV11 picture block may be obtained by splitting the first picture block. The UV11 picture block includes the one pixel used to represent the first chroma component and the one pixel used to represent the second chroma component. For example, the first chroma component and the second chroma component of the first picture block each include two pixels. A chroma value of one of the pixels may be obtained through the foregoing filtering, and the one pixel may be split into a chroma component of the second picture block, the pixel that directly uses a chroma value of the original pixel is split into a pixel in the UV11 picture block. In this way, the second picture block or a reconstructed block obtained based on the second picture block can achieve subjective effect and encoding compression efficiency that are similar to those of the common YUV4:2:0 picture block.

A combination of a component U and a component V in a picture block in a YUV4:4:4 sampling format is referred to as a UV44 picture block. The component U includes four pixels that are in the picture block and that are used to represent the component U, and the component V includes four pixels that are in the picture block and that are used to represent the component V. A UVij picture block includes i pixels used to represent a component U and j pixels used to represent a component V, where j and j are non-negative integers. For example, the UV11 picture block includes the one pixel used to represent the first chroma component U and the one pixel used to represent the second chroma component V. Based on this, a chroma component of the picture block in the YUV4:2:0 sampling format may be considered as the UV11 picture block, and a chroma component of the picture block in the YUV4:2:2 sampling format may be considered as a UV22 picture block.

It should be noted that, in this embodiment of this application, the pixel on which filtering is performed may alternatively be split into a pixel in the UV11 picture block, and the pixel that directly uses the chroma value of the original pixel is split into a chroma component of the second picture block. This is not specifically limited.

In this embodiment of this application, the second picture block may be encoded to obtain the base layer bitstream, and the UV11 picture block may be encoded to obtain the enhancement layer bitstream. The encoding the second picture block is not limited to directly encoding the second picture block. Instead, the second picture block may be encoded via a standard video encoder, or the second picture block may be encoded via another existing or future encoder. This is not specifically limited.

In addition, the encoding the UV11 picture block is not limited to directly encoding the UV11 picture block. Instead, during encoding of the UV11 picture block, encoding guidance and reference may be performed with reference to encoding information of the base layer and the reconstructed block obtained based on the second picture block. For example, a chroma component of the reconstructed block may be used as a prediction reference, and a block split mode of a chroma component of the base layer may be used to guide block splitting.

Optionally, the UV11 picture block may be encoded without reference to the encoding information of the base layer and the reconstructed block obtained based on the second picture block.

In a possible implementation, in this embodiment of this application, phase sampling information may be obtained, where the phase sampling information includes information indicating a location of the third chroma pixel and a location of the fourth chroma pixel; and then the phase sampling information is encoded.

In the foregoing embodiment, after the third chroma pixel and the fourth chroma pixel are determined, the decoder side may be notified of the locations of the two chroma pixels based on the phase sampling information. The phase sampling information may include an identifier of a phase sampling mode, for example, a mode 0 (representing that the locations of the third chroma pixel and the fourth chroma pixel are in the pixels 0 and 3), a mode 1 (representing that the locations of the third chroma pixel and the fourth chroma pixel are in the pixels 0 and 1), and a mode 2 (representing that the locations of the third chroma pixel and the fourth chroma pixel are in the pixels 1 and 2). The phase sampling information may alternatively include pixel codes that correspond to the third chroma pixel and the fourth chroma pixel, for example, the pixels 0 and 3, or the pixels 1 and 2. An implementation of the phase sampling information is not specifically limited in embodiments of this application.

In this embodiment of this application, the phase sampling information may be encoded, written into a bitstream, and transmitted to the decoder side. Alternatively, the phase sampling information may be written into a file and transmitted to the decoder side. In addition, the phase sampling information may be transmitted to the decoder side in another manner. This is not specifically limited.

In a possible implementation, in this embodiment of this application, weight information may be obtained, where the weight information includes information indicating the first weight value and the second weight value; and then the weight information is encoded.

The weight information may include the first weight value and the second weight value, for example, $w1=0.75$, and $w2=0.25$. The weight information may alternatively include preset identifiers of several modes of the first weight value and the second weight value, for example, a mode 0 (representing $w1=0.75$ and $w2=0.25$). An implementation of the weight information is not specifically limited in embodiments of this application.

In this embodiment of this application, the weight information may be encoded, written into a bitstream, and transmitted to the decoder side. Alternatively, the weight information may be written into a file and transmitted to the decoder side. In addition, the weight information may be transmitted to the decoder side in another manner. This is not specifically limited.

According to a second aspect, this application provides a picture decoding method, including: obtaining a base layer bitstream and an enhancement layer bitstream; parsing the base layer bitstream to obtain a first reconstructed block (corresponding to a second picture block on an encoder side, where the first reconstructed block may be, for example, a reconstructed value corresponding to the second picture block, or may be referred to as a reconstructed block corresponding to the second picture block), where a dimension of the first reconstructed block is $2\times2$, and a sampling format of the first reconstructed block is YUV4:2:0; parsing the enhancement layer bitstream to obtain a UV11 reconstructed block (corresponding to a UV11 picture block on the encoder side, where the UV11 reconstructed block may be, for example, a reconstructed value corresponding to the UV11 picture block, or may be referred to as a reconstructed block corresponding to the UV11 picture block); combining the first reconstructed block and the UV11 reconstructed block to obtain a second reconstructed block (corresponding to a first picture block on the encoder side, where the second reconstructed block may be, for example, a reconstructed value corresponding to the first picture block, or may be referred to as a reconstructed block corresponding to the first picture block), where a sampling format of the second reconstructed block is YUV4:2:2; and upsampling a chroma component of the second reconstructed block to obtain a target reconstructed block, where a sampling format of the target reconstructed block is YUV4:4:4, and a first chroma pixel, a second chroma pixel, a third chroma pixel, and a fourth chroma pixel in a first chroma component of the target reconstructed block are obtained based on a fifth chroma pixel and a sixth chroma pixel in a first chroma component of the second reconstructed block.

In this embodiment of this application, a decoder side separately decodes the base layer bitstream and the enhancement layer bitstream to obtain the reconstructed block in the YUV4:2:0 format and the UV11 reconstructed block including only a chroma component, and obtains the picture block in the YUV4:4:4 format based on the two reconstructed blocks. Layered encoding and decoding can ensure a basic display requirement of the picture block. To be specific, after a base layer reconstructed block is obtained at a decoding layer, subjective effect similar to that of a common YUV4:2:0 picture block can be achieved, and display effect of a picture can be ensured even if the decoder side does not receive the enhancement layer bitstream, to ensure normal display of the picture. In addition, a combination of a base layer and an enhancement layer can adapt to network fluctuation, thereby improving transmission efficiency. In a process of obtaining the picture block in the YUV4:4:4 format, the picture block in the YUV4:2:2 format may be first obtained, and then the chroma component of the reconstructed block in the YUV4:2:2 format is upsampled to obtain the reconstructed block in the YUV4:4:4 format. Four pixels in a chroma component of the reconstructed block in the YUV4:4:4 format are obtained based on two pixels in a same-type chroma component of the reconstructed block in the YUV4:2:2 format. In this way, during bitstream decoding, only information about the two pixels may be obtained without obtaining, through decoding, all four pixels of the chroma component, to reduce a bitstream and improve decoding efficiency.

In this embodiment of this application, a luma component of the target reconstructed block is derived from a luma component of the first reconstructed block, and a chroma component of the target reconstructed block is an upsampled chroma component.

The sampling format of the first reconstructed block is YUV4:2:0 (refer to FIG. 6c). To be specific, the first reconstructed block includes the luma component, a first chroma component, and a second chroma component, and sampling rates of the three components are different. The luma component includes four pixels, and the first chroma component and the second chroma component each include one pixel.

In this embodiment of this application, the base layer bitstream may be decoded by using a standard video decoding technology, or the base layer bitstream may be decoded by using another existing or future decoding technology. This is not specifically limited.

The decoder side may perform decoding by using a decoder corresponding to an encoder used by the encoder side. Therefore, the sampling format of the first reconstructed block obtained by decoding the base layer bitstream is YUV4:2:0. As shown on the encoder side, chroma values of the pixels of the first chroma component and the second chroma component of the first reconstructed block may be obtained through filtering. In this way, the first reconstructed block may achieve subjective effect and encoding compression efficiency that are similar to those of the common YUV4:2:0 picture block, and the display effect of the picture can be ensured even if the decoder side does not receive the enhancement layer bitstream.

Optionally, decoding guidance and reference may be performed with reference to decoding information of the base layer and the first reconstructed block during decoding of the enhancement layer bitstream. For example, a chroma component of the first reconstructed block may be used as a prediction reference, and a block split mode of the chroma component of the first reconstructed block may be used to guide block splitting.

Optionally, the enhancement layer bitstream may be decoded without reference to decoding information of the first reconstructed block and the first reconstructed block.

In this embodiment of this application, an existing standard decoder or a non-standard decoder may be used for a decoding manner of the enhancement layer bitstream. This is not limited herein.

The decoder side may perform decoding by using the decoder corresponding to the encoder used by the encoder side. Therefore, the UV11 reconstructed block is obtained by decoding the enhancement layer bitstream.

The sampling format of the second reconstructed block is YUV4:2:2 (refer to FIG. 6b). To be specific, the second reconstructed block includes a luma component, the first chroma component, and a second chroma component, and sampling rates of the three components are different. The luma component includes four pixels, and the first chroma component and the second chroma component each include two pixels.

A combination of the first reconstructed block and the UV11 reconstructed block may increase a quantity of pixels included in each of the first chroma component and the second chroma component of the first reconstructed block from 1 to 2, to obtain the second reconstructed block. In this embodiment of this application, the combination may include implementations such as arrangement according to a specific rule and splicing. This is not specifically limited.

In addition, a seventh chroma pixel, an eighth chroma pixel, a ninth chroma pixel, and a tenth chroma pixel in a second chroma component of the target reconstructed block are obtained based on an eleventh chroma pixel and a twelfth chroma pixel in the second chroma component of the second reconstructed block.

The first chroma component is a component U, and the second chroma component is a component V; or the first chroma component is a component V, and the second chroma component is a component U.

The following uses the first chroma component as an example to describe a processing process of the chroma component of the second reconstructed block. It may be understood that, for a processing process of the second chroma component, refer to this.

In this embodiment of this application, the first chroma pixel, the second chroma pixel, the third chroma pixel, and the fourth chroma pixel in the first chroma component of the target reconstructed block are obtained based on the fifth chroma pixel and the sixth chroma pixel in the first chroma component of the second reconstructed block.

In this embodiment of this application, decoding may be performed to obtain phase sampling information, where the phase sampling information includes information indicating a location of the first chroma pixel corresponding to the fifth chroma pixel and a location of the second chroma pixel corresponding to the sixth chroma pixel; and the first chroma pixel and the second chroma pixel are determined based on the phase sampling information.

The first chroma component of the second reconstructed block includes the fifth chroma pixel and the sixth chroma pixel, and the two pixels may correspond to two of the four pixels included in the first chroma component of the target reconstructed block. Therefore, locations of the two pixels (numbers of the pixels) in a 2×2 picture block need to be first determined.

The phase sampling information may include an identifier of a phase sampling mode, for example, a mode 0 (representing that the locations of the first chroma pixel and the second chroma pixel are in pixels 0 and 3), a mode 1 (representing that the locations of the first chroma pixel and the second chroma pixel are in pixels 0 and 1), and a mode 2 (representing that the locations of the first chroma pixel and the second chroma pixel are in pixels 1 and 2). The phase sampling information may alternatively include pixel codes that correspond to the first chroma pixel and the second chroma pixel, for example, the pixels 0 and 3, or the pixels 1 and 2. An implementation of the phase sampling information is not specifically limited in embodiments of this application.

In this embodiment of this application, after the first chroma pixel and the second chroma pixel are determined, a chroma value of the first chroma pixel and a chroma value of the second chroma pixel in the first chroma component of the target reconstructed block may be further obtained based on a chroma value of the fifth chroma pixel and a chroma value of the sixth chroma pixel. In this way, the two pixels of the first chroma component of the second reconstructed block may be first obtained.

The chroma value of the fifth chroma pixel and the chroma value of the sixth chroma pixel are first obtained; a first weight value of the fifth chroma pixel and a second weight value of the sixth chroma pixel are obtained; deweighting is performed on the chroma value of the fifth chroma pixel and the chroma value of the sixth chroma pixel based on the first weight value and the second weight value, to obtain the chroma value of the first chroma pixel; and the chroma value of the sixth chroma pixel is determined as the chroma value of the second chroma pixel.

It can be learned that, in this embodiment of this application, the chroma value of the first chroma pixel is obtained through deweighting (which may also be referred to as de-filtering) based on the chroma value of the fifth chroma pixel and the chroma value of the sixth chroma pixel. The chroma value of the sixth chroma pixel may be directly used as the chroma value of the second chroma pixel, so that the decoder side can restore the chroma value of the second chroma pixel, and better upsampling interpolation effect is obtained.

In this embodiment of this application, the decoder side may obtain the first weight value of the fifth chroma pixel and the second weight value of the sixth chroma pixel by using the following two methods:

Method 1: Decoding is performed to obtain weight information, where the weight information includes information indicating the first weight value and the second weight value; and information about the first weight value and the second weight value is obtained based on the weight information.

Method 2: Luma values of the four pixels in the luma component of the second reconstructed block are first obtained; and then the first weight value and the second weight value are obtained based on distribution of the luma values of the four pixels in the luma component of the second reconstructed block.

Because the first chroma component of the target reconstructed block includes the four pixels, after the first chroma pixel and the second chroma pixel are obtained, upsampling further needs to be performed to obtain the other two chroma pixels (the third chroma pixel and the fourth chroma pixel).

In a possible implementation, four neighboring luma pixels of a target luma pixel in the luma component of the target reconstructed block are first obtained, where the target luma pixel corresponds to a target chroma pixel (the third chroma pixel or the fourth chroma pixel), the four neighboring luma pixels correspond to four neighboring chroma pixels in the chroma component of the target reconstructed block, the four neighboring chroma pixels are respectively located above, below, on the left, or on the right of the target chroma pixel, and chroma values of the four neighboring chroma pixels have been obtained; a luma value of the target luma pixel and luma values of the four neighboring luma pixels are obtained; and a chroma value of the target chroma pixel is obtained based on the luma value of the target luma pixel and the luma values of the four neighboring luma pixels.

Four locations included in a 2×2 picture block are used as a correspondence basis. In the luma component, the first chroma component, and the second chroma component, upper left pixels correspond to each other, upper right pixels correspond to each other, lower left pixels correspond to each other, and lower right pixels correspond to each other. For example, if the target chroma pixel is an upper left pixel of the first chroma component, the target luma pixel is an upper left pixel of the luma component.

The four neighboring chroma pixels meet two conditions. One condition is that the four neighboring chroma pixels are respectively located above, below, on the left, or on the right of the target chroma pixel, and the other condition is that the chroma values of the four neighboring chroma pixels have been obtained. For descriptions that the chroma values of the four neighboring chroma pixels have been obtained, refer to the following embodiments.

In this embodiment of this application, the chroma value of the target chroma pixel may be obtained by using the following two methods:

Method 1: Differences between the luma value of the target luma pixel and the luma values of the four neighboring luma pixels are separately calculated; four weight values are obtained based on the differences between the luma value of the target luma pixel and the luma values of the four neighboring luma pixels; and weighting is performed on the chroma values of the four neighboring chroma pixels based on the four weight values to obtain the chroma value of the target chroma pixel.

Method 2: When there is a luma boundary around the target luma pixel or there is a chroma boundary around the target chroma pixel, a first quantity of neighboring luma pixels whose luminance is similar to that of the target luma pixel in the four neighboring luma pixels is obtained; and the chroma value of the target chroma pixel is obtained based on the first quantity.

In a possible implementation, when the phase sampling information is obtained, a difference between the chroma value of the target chroma pixel and the chroma value of the first chroma pixel is obtained, where the target chroma pixel is the third chroma pixel or the fourth chroma pixel; and when the difference is greater than a third threshold, the chroma value of the first chroma pixel is used as the chroma value of the target chroma pixel.

According to a third aspect, this application provides an encoding apparatus, including: an obtaining module, configured to obtain a to-be-processed picture block, where a dimension of the picture block is $2 \times 2$, and a sampling format of the picture block is YUV4:4:4; a processing module, configured to: downsample a chroma component of the picture block to obtain a first picture block, where a sampling format of the first picture block is YUV4:2:2, and a first chroma pixel and a second chroma pixel in a first chroma component of the first picture block are obtained based on a third chroma pixel and a fourth chroma pixel in four pixels in a first chroma component of the picture block; and split a chroma component of the first picture block to obtain a second picture block and a UV11 picture block, where a sampling format of the second picture block is YUV4:2:0; a base layer encoding module, configured to encode the second picture block to obtain a base layer bitstream; and an enhancement layer encoding module, configured to encode the UV11 picture block to obtain an enhancement layer bitstream.

In a possible implementation, the third chroma pixel and the fourth chroma pixel are determined based on a value of n1, n1 is determined based on chroma values of the four pixels, n1 represents a type of chrominance of the first chroma component of the picture block, and n1 is a positive integer.

In a possible implementation, when n1=1, n1=3, or n1=4, the third chroma pixel and the fourth chroma pixel are two pixels at preset locations in the four pixels; or when n1=2, the third chroma pixel is a pixel at a preset location in the four pixels, and the fourth chroma pixel is a pixel, in the four pixels, that has a largest chroma value difference from the third chroma pixel.

In a possible implementation, n1 is determined based on N, and N is a quantity of chroma value differences that are greater than a first threshold and that are in chroma value differences between every two of the four pixels; and

when N=0, n1=1;
when 0<N≤4, n1=2;
when N=5, n1=3; or
when N=6, n1=4.

In a possible implementation, the third chroma pixel and the fourth chroma pixel are two pixels with a largest chroma value difference in the four pixels.

In a possible implementation, the third chroma pixel and the fourth chroma pixel are two pixels at diagonal locations in the four pixels.

In a possible implementation, the processing module is further configured to: obtain a first weight value corresponding to the third chroma pixel and a second weight value corresponding to the fourth chroma pixel; perform weighting on a chroma value of the third chroma pixel and a chroma value of the fourth chroma pixel based on the first weight value and the second weight value, to obtain a chroma value of the first chroma pixel; and determine the chroma value of the fourth chroma pixel as a chroma value of the second chroma pixel.

In a possible implementation, the processing module is specifically configured to: obtain luma values of four pixels in a luma component of the picture block; and obtain the first weight value and the second weight value based on distribution of the luma values of the four pixels in the luma component of the picture block.

In a possible implementation, the processing module is further configured to encode phase sampling information, where the phase sampling information includes information indicating a location of the third chroma pixel and a location of the fourth chroma pixel.

In a possible implementation, the processing module is further configured to encode weight information, where the weight information includes information indicating the first weight value and the second weight value.

In a possible implementation, a fifth chroma pixel and a sixth chroma pixel in a second chroma component of the first picture block are obtained based on a seventh chroma pixel and an eighth chroma pixel in four pixels in a second chroma component of the picture block.

In a possible implementation, the first chroma component is a component U, and the second chroma component is a component V; or the first chroma component is a component V, and the second chroma component is a component U.

According to a fourth aspect, this application provides a decoding apparatus, including: an obtaining module, configured to obtain a base layer bitstream and an enhancement layer bitstream; a base layer decoding module, configured to parse the base layer bitstream to obtain a first reconstructed block, where a dimension of the first reconstructed block is 2×2, and a sampling format of the first reconstructed block is YUV4:2:0; an enhancement layer decoding module, configured to parse the enhancement layer bitstream to obtain a UV11 reconstructed block; and a processing module, configured to: combine the first reconstructed block and the UV11 reconstructed block to obtain a second reconstructed block, where a sampling format of the second reconstructed block is YUV4:2:2; and upsample a chroma component of the second reconstructed block to obtain a target reconstructed block, where a sampling format of the target reconstructed block is YUV4:4:4, and a first chroma pixel, a second chroma pixel, a third chroma pixel, and a fourth chroma pixel in a first chroma component of the target reconstructed block are obtained based on a fifth chroma pixel and a sixth chroma pixel in a first chroma component of the second reconstructed block.

In a possible implementation, the processing module is further configured to: perform decoding to obtain phase sampling information, where the phase sampling information includes information indicating a location of the first chroma pixel corresponding to the fifth chroma pixel and a location of the second chroma pixel corresponding to the sixth chroma pixel; and determine the first chroma pixel and the second chroma pixel based on the phase sampling information.

In a possible implementation, the processing module is specifically configured to: obtain a chroma value of the fifth chroma pixel and a chroma value of the sixth chroma pixel; obtain a first weight value of the fifth chroma pixel and a second weight value of the sixth chroma pixel; perform deweighting on the chroma value of the fifth chroma pixel and the chroma value of the sixth chroma pixel based on the first weight value and the second weight value, to obtain a chroma value of the first chroma pixel; and determine the chroma value of the sixth chroma pixel as a chroma value of the second chroma pixel.

In a possible implementation, the processing module is specifically configured to: perform decoding to obtain weight information, where the weight information includes information indicating the first weight value and the second weight value; and obtain information about the first weight value and the second weight value based on the weight information.

In a possible implementation, the processing module is specifically configured to: obtain luma values of four pixels in a luma component of the second reconstructed block; and obtain the first weight value and the second weight value based on distribution of the luma values of the four pixels in the luma component of the second reconstructed block.

In a possible implementation, the processing module is specifically configured to: obtain four neighboring luma pixels of a target luma pixel in a luma component of the target reconstructed block, where the target luma pixel corresponds to a target chroma pixel, the four neighboring luma pixels correspond to four neighboring chroma pixels in a chroma component of the target reconstructed block, the four neighboring chroma pixels are respectively located above, below, on the left, or on the right of the target chroma pixel, and chroma values of the four neighboring chroma pixels have been obtained; obtain a luma value of the target luma pixel and luma values of the four neighboring luma pixels; and obtain a chroma value of the target chroma pixel based on the luma value of the target luma pixel and the luma values of the four neighboring luma pixels, where the target chroma pixel is the third chroma pixel or the fourth chroma pixel.

In a possible implementation, the processing module is specifically configured to: separately calculate differences between the luma value of the target luma pixel and the luma values of the four neighboring luma pixels; obtain four weight values based on the differences between the luma value of the target luma pixel and the luma values of the four neighboring luma pixels; and perform weighting on the chroma values of the four neighboring chroma pixels based on the four weight values to obtain the chroma value of the target chroma pixel.

In a possible implementation, the processing module is specifically configured to: when there is a luma boundary around the target luma pixel or there is a chroma boundary around the target chroma pixel, obtain a first quantity of neighboring luma pixels whose luminance is similar to that of the target luma pixel in the four neighboring luma pixels; and obtain the chroma value of the target chroma pixel based on the first quantity.

In a possible implementation, the processing module is further configured to: when the phase sampling information is obtained, obtain a difference between the chroma value of the target chroma pixel and the chroma value of the first chroma pixel, where the target chroma pixel is the third chroma pixel or the fourth chroma pixel; and when the difference is greater than a third threshold, use the chroma value of the first chroma pixel as the chroma value of the target chroma pixel.

In a possible implementation, a seventh chroma pixel, an eighth chroma pixel, a ninth chroma pixel, and a tenth chroma pixel in a second chroma component of the target reconstructed block are obtained based on an eleventh chroma pixel and a twelfth chroma pixel in a second chroma component of the second reconstructed block.

In a possible implementation, the first chroma component is a component U, and the second chroma component is a component V; or the first chroma component is a component V, and the second chroma component is a component U.

According to a fifth aspect, this application provides an encoder, including: one or more processors; and a non-transitory computer-readable storage medium coupled to the processor and storing a program executed by the processor. When the program is executed by the processor, the encoder is enabled to perform the method according to any one of the first aspect.

According to a sixth aspect, this application provides a decoder, including: one or more processors; and a non-transitory computer-readable storage medium coupled to the processor and storing a program executed by the processor. When the program is executed by the processor, the decoder is enabled to perform the method according to any one of the second aspect.

According to a seventh aspect, this application provides a computer-readable storage medium, including program code. The program code is executed by a computer device, to perform the method according to any one of the first aspect and the second aspect.

According to an eighth aspect, this application provides a computer-readable storage medium, including a bitstream coded by using the method according to any one of the first aspect and the second aspect.

According to a ninth aspect, this application provides a coding system, including an encoder and a decoder. The encoder may be the encoder according to the fifth aspect, and the decoder may be the decoder according to the sixth aspect.

## BRIEF DESCRIPTION OF DRAWINGS

FIG. 1A is an example block diagram of a coding system 10 according to an embodiment of this application;

FIG. 1B is an example block diagram of a video coding system 40 according to an embodiment of this application;

FIG. 2 is an example block diagram of a video encoder 20 according to an embodiment of this application;

FIG. 3 is an example block diagram of a video decoder 30 according to an embodiment of this application;

FIG. 4 is an example block diagram of a video coding device 400 according to an embodiment of this application;

FIG. 5 is a diagram of an example of a level of scalable video coding according to this application;

FIG. 6a to FIG. 6c are diagrams of common sampling formats of pictures in YUV formats;

FIG. 7a and FIG. 7b are diagrams of phases;

FIG. 8 is an example block diagram of a picture encoding and decoding architecture according to an embodiment of this application;

FIG. 9 is a flowchart of a process 900 of a picture encoding method according to this application;

FIG. 10 is an example flowchart of a picture decoding method according to this application;

FIG. 11a is a diagram of an encoding framework;

FIG. 11b is a diagram of a decoding framework;

FIG. 12a is a diagram of adaptive pixel sampling for chrominance;

FIG. 12b is a diagram of an adaptive pixel sampling method for a first chroma component;

FIG. 12c is a diagram of performing pixel location restoration based on chroma sampling information;

FIG. 12d is a diagram of selecting a neighborhood of a vacant pixel in a sampling mode "0";

FIG. 12e is a diagram of selecting a neighborhood of a vacant pixel in a sampling mode "1";

FIG. 12f is a diagram of selecting a neighborhood of a vacant pixel in a sampling mode "2";

FIG. 13a is a diagram of an encoding framework;

FIG. 13b is a diagram of a decoding framework;

FIG. 14a is a diagram of sampling using fixed pixels at cross locations;

FIG. 14b is a diagram of restoring a location of a pixel of a first chroma component of a YUV4:4:4 reconstructed block in a sampling mode of an encoder side;

FIG. 15a shows an adaptive pixel sampling process for chrominance;

FIG. 15b is a diagram of restoring a location of a pixel of a first chroma component of a YUV4:4:4 reconstructed block;

FIG. 15c is a diagram of selecting a vacant neighboring chroma pixel in a sampling mode "0";

FIG. 15d is a diagram of selecting a vacant neighboring chroma pixel in a sampling mode "1";

FIG. 15e is a diagram of selecting a vacant neighboring chroma pixel in a sampling mode "2";

FIG. 16 is a diagram of a structure of an encoding apparatus 1600 according to an embodiment of this application; and

FIG. 17 is a diagram of a structure of a decoding apparatus 1700 according to an embodiment of this application.

## DESCRIPTION OF EMBODIMENTS

To make objectives, technical solutions, and advantages of this application clearer, the following clearly and completely describes the technical solutions in this application with reference to accompanying drawings in this application. It is clear that the described embodiments are merely a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms such as "first" and "second" are merely intended for distinguishing and description, and shall not be understood as indicating or implying relative importance, or indicating or implying a sequence. In addition, terms "include", "have", and any variant thereof are intended to cover non-exclusive inclusion, for example, include a series of steps or units. A method, system, product, or device is not necessarily limited to those steps or units expressly listed, but may include another step or unit not expressly listed or inherent to such a process, method, product, or device.

It should be understood that, in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally represents an "or" relationship between associated objects. "At least one of the following items (pieces)" or a similar expression thereof indicates any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

Video coding typically refers to processing of a sequence of pictures, where the sequence of pictures forms a video or a video sequence. In the field of video coding, terms "picture (picture)", "frame (frame)", and "image (image)" may be used as synonyms. Video coding (or coding in general) includes two parts: video encoding and video decoding. Video encoding is performed on a source side, and typically includes processing (for example, by compression) an original video picture to reduce an amount of data required for representing the video picture (for more efficient storage and/or transmission). Video decoding is performed on a destination side, and typically includes inverse processing in comparison with processing of an encoder to reconstruct the video picture. "Coding" of a video picture (or a picture in general) in embodiments should be understood as "encoding" or "decoding" of a video picture or a video sequence. A combination of an encoding part and a decoding part is also referred to as encoding and decoding (encoding and decoding, CODEC).

In a case of lossless video coding, an original video picture can be reconstructed. In other words, a reconstructed video picture has same quality as the original video picture (assuming that no transmission loss or other data loss occurs during storage or transmission). In a case of lossy video coding, further compression is performed through quantization and the like, to reduce an amount of data required for representing a video picture, and the video picture cannot be completely reconstructed on a decoder side. In other words, quality of a reconstructed video picture is lower or poorer than that of the original video picture.

Several video coding standards are used for "lossy hybrid video encoding and decoding" (that is, spatial prediction and temporal prediction in pixel domain are combined with 2D transform coding for applying quantization in transform domain). Each picture of a video sequence is typically partitioned into a set of non-overlapping blocks, and coding is typically performed at a block level. To be specific, at an encoder, a video is usually processed, that is, encoded, at a block (video block) level. For example, a prediction block is generated through spatial (intra) prediction and temporal (inter) prediction, the prediction block is subtracted from a current block (block being processed or to be processed) to obtain a residual block, and the residual block is transformed in the transform domain and quantized to reduce an amount of data that is to be transmitted (compressed). At a decoder side, an inverse processing part relative to the encoder is applied to an encoded block or a compressed block to reconstruct the current block for representation. Furthermore, the encoder needs to duplicate processing steps of the decoder such that the encoder and the decoder generate same predictions (for example, intra prediction and inter prediction) and/or reconstruct pixels for processing, namely, encoding a subsequent block.

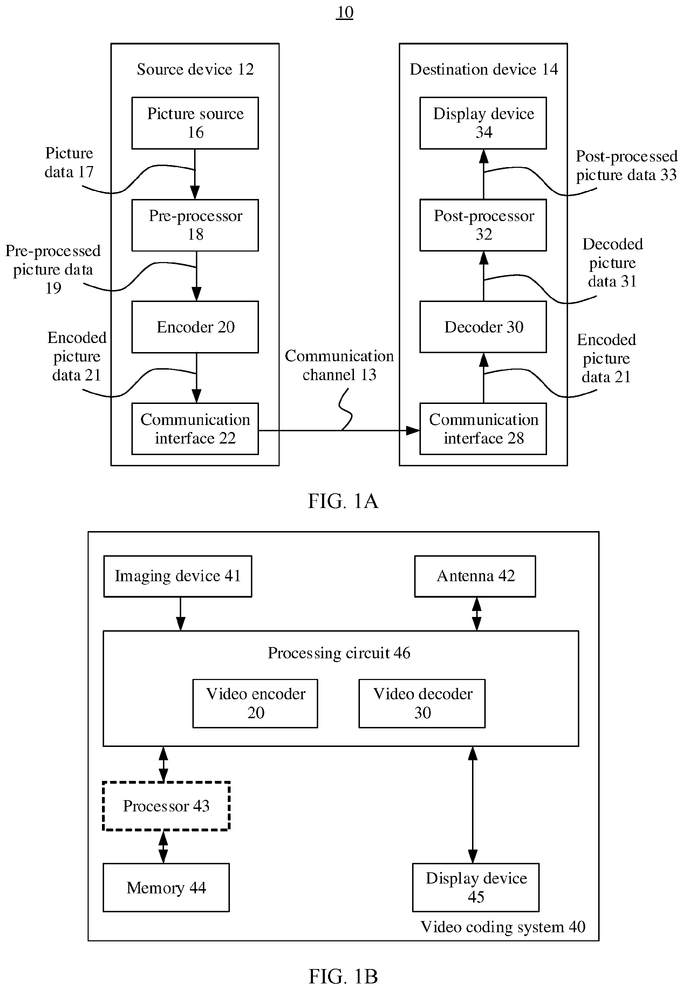

In the following embodiment of a coding system 10, an encoder 20 and a decoder 30 are described with reference to FIG. 1A to FIG. 3.

FIG. 1A is an example block diagram of the coding system 10 according to an embodiment of this application, for example, a video coding system 10 (or the coding system 10 for short) that can use a technology in this application. A video encoder 20 (or the encoder 20 for short) and a video decoder 30 (or the decoder 30 for short) of the video coding system 10 represent devices that may be configured to perform techniques in accordance with various examples described in this application.

As shown in FIG. 1A, the coding system 10 includes a source device 12. The source device 12 is configured to provide encoded picture data 21, for example, an encoded picture for a destination device 14 for decoding the encoded picture data 21.

The source device 12 includes the encoder 20, and may additionally, that is, optionally, include a picture source 16, a pre-processor (or pre-processing unit) 18, for example, a picture pre-processor, and a communication interface (or communication unit) 22.

The picture source 16 may include or be any type of picture capturing device for capturing a real-world picture and the like, and/or any type of a picture generating device, for example, a computer-graphics processing unit for generating a computer animated picture, or any type of device for obtaining and/or providing a real-world picture, a computer generated picture (for example, a screen content, a virtual reality (virtual reality, VR) picture), and/or any combination thereof (for example, an augmented reality (augmented reality, AR) picture). The picture source may be any type of memory or storage storing any of the foregoing pictures.

For distinguishing of processing performed by the pre-processor (or the pre-processing unit) 18, a picture (or picture data) 17 may also be referred to as an original picture (or original picture data) 17.

The pre-processor 18 is configured to: receive the original picture data 17 and perform pre-processing on the original picture data 17, to obtain a pre-processed picture (or pre-processed picture data) 19. Pre-processing performed by the pre-processor 18 may, for example, include trimming, color format conversion (for example, conversion from RGB to YCbCr), color correction, or de-noising. It may be understood that the pre-processing unit 18 may be optional component.

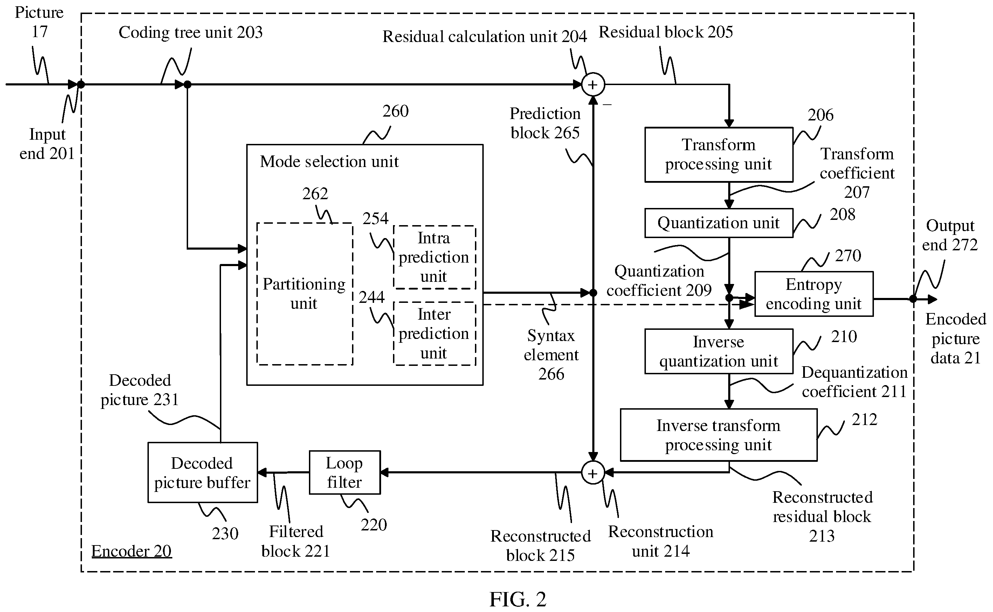

The video encoder (or encoder) 20 is configured to: receive the pre-processed picture data 19 and provide the encoded picture data 21 (further descriptions are described below based on FIG. 2 and the like).

The communication interface 22 of the source device 12 may be configured to: receive the encoded picture data 21 and transmit the encoded picture data 21 (or any further processed version thereof) over a communication channel 13 to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32, and a display device 34.

The communication interface 28 of the destination device 14 is configured to: receive the encoded picture data 21 (or any further processed version thereof) directly from the source device 12 or from any other source device like a storage device, for example, an encoded picture data storage device, and provide the encoded picture data 21 to the decoder 30.

The communication interface 22 and the communication interface 28 may be configured to transmit or receive the encoded picture data (or encoded data) 21 via a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to package the encoded picture data 21 into an appropriate format, for example, a packet, and/or process the encoded picture data using any kind of transmission encoding or processing for transmission over a communication link or communication network.

The communication interface 28, forming the counterpart of the communication interface 22, may be, for example, configured to receive the transmitted data and process the transmitted data using any kind of corresponding transmission decoding or processing and/or de-packaging to obtain the encoded picture data 21.

Both the communication interface 22 and the communication interface 28 may be configured as unidirectional communication interfaces as indicated by the arrow for the communication channel 13 in FIG. 1A pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

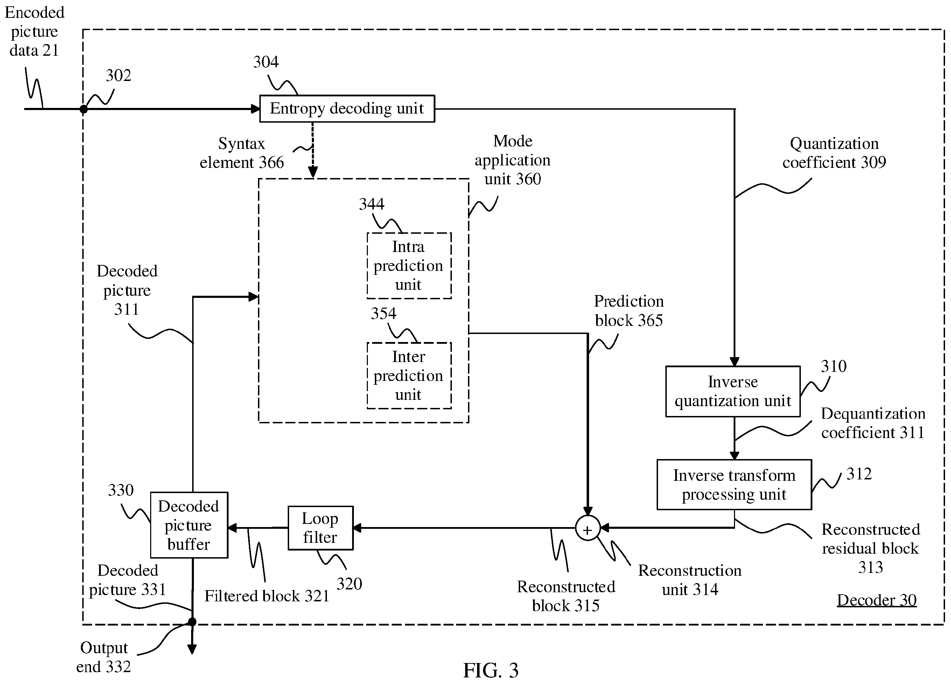

The video decoder (or decoder) 30 is configured to: receive the encoded picture data 21 and provide decoded picture data (or decoded picture data) 31 (further descriptions will be described below based on FIG. 3 and the like).

The post-processor 32 is configured to post-process the decoded picture data 31 (also referred to as reconstructed picture data), for example, the decoded picture, to obtain post-processed picture data 33, for example, a post-processed picture. The post-processing performed by the post-processing unit 32 may include, for example, color format conversion (for example, conversion from YCbCr to RGB), color correction, trimming, or re-sampling, or any other processing, for example, for preparing the decoded picture data 31 for display, for example, by the display device 34.

The display device 34 is configured to receive the post-processed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of other display.

Although FIG. 1A shows that the source device 12 and the destination device 14 are independent devices. However, the device embodiment may also include both the source device 12 and the destination device 14 or include functions of both the source device 12 and the destination device 14, that is, include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

As will be apparent for a skilled person based on the description, existence and (exact) division into different units or functions in the source device 12 and/or the destination device 14 shown in FIG. 1A may vary depending on an actual device and application.

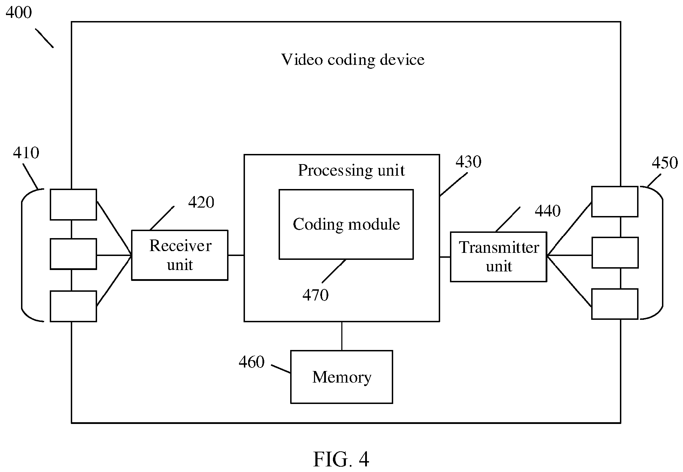

The encoder 20 (for example, the video encoder 20) or the decoder 30 (for example, the video decoder 30) or both the encoder 20 and the decoder 30 may be implemented by a processing circuit as shown in FIG. 1B, for example, one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, dedicated processors for video coding, or any combination thereof. The encoder 20 may be implemented via a processing circuit 46 to embody various modules as discussed with respect to the encoder 20 in FIG. 2 and/or any other encoder system or subsystem described in this specification. The decoder 30 may be implemented via the processing circuit 46 to embody various modules as discussed with respect to the decoder 30 in FIG. 3 and/or any other decoder system or subsystem described in this specification. The processing circuit 46 may be configured to perform various operations discussed below. As shown in FIG. 4, if a part of techniques are implemented in software, a device may store instructions of the software in a suitable computer-readable storage medium, and execute the instructions in hardware using one or more processors, to perform the techniques of the present invention. Either of the video encoder 20 and the video decoder 30 may be integrated as part of a combined encoder/decoder (encoder/decoder, CODEC) in a single device, for example, as shown in FIG. 1B.

The source device 12 and the destination device 14 may include any of a wide range of devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content services servers or content delivery servers), broadcast receiver devices, broadcast transmitter devices, or the like, and may use no or any type of operating system. In some cases, the source device 12 and the destination device 14 may be equipped with components for wireless communication. Therefore, the source device 12 and the destination device 14 may be wireless communication devices.

In some cases, the video coding system 10 shown in FIG. 1A is merely an example. The techniques of this application may apply to video coding settings (for example, video encoding or video decoding) that do not necessarily include any data communication between an encoding device and a decoding device. In other examples, data is retrieved from a local memory, sent over a network, or the like. A video encoding device may encode data and store encoded data into a memory, and/or a video decoding device may retrieve the data from the memory and decode the data. In some examples, encoding and decoding are performed by devices that do not communicate with each other, but simply encode data into a memory and/or retrieve data from the memory and decode the data.

FIG. 1B is an example block diagram of a video coding system 40 according to an embodiment of this application. As shown in FIG. 1B, the video coding system 40 may include an imaging device 41, a video encoder 20, a video decoder 30 (and/or a video encoder/decoder implemented by the processing circuit 46), an antenna 42, one or more processors 43, one or more memories 44, and/or a display device 45.

As shown in FIG. 1B, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a non-volatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented by using a logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may be included in the video encoder 20 implemented by the processing circuit 46, to embody various modules discussed with reference to FIG. 2 and/or any other encoder system or subsystem described in this specification. The logic circuit may be configured to perform various operations discussed in this specification.

In some examples, the video decoder 30 may be implemented by the processing circuit 46 in a similar manner, to implement various modules discussed with reference to the video decoder 30 in FIG. 3 and/or any other decoder system or subsystem described in this specification. In some examples, the video decoder 30 implemented by using a logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to embody various modules discussed with reference to FIG. 3 and/or any other decoder system or subsystem described in this specification.

In some examples, the antenna 42 may be configured to receive an encoded bitstream of video data. As discussed, the encoded bitstream may include data, an indicator, an index value, mode selection data, or the like related to video frame encoding described in this specification, for example, data related to encoding partitioning (for example, a transform coefficient or a quantization transform coefficient, an optional indicator (as discussed), and/or data defining the encoding partitioning). The video coding system 40 may further include the video decoder 30 that is coupled to the antenna 42 and that is configured to decode the encoded bitstream. The display device 45 is configured to present a video frame.

It should be understood that, in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may perform entropy encoding on the syntax element to obtain an encoded video bitstream. In such examples, the video decoder 30 may parse such syntax element and correspondingly decode the related video data.

For ease of description, embodiments of the present invention are described with reference to versatile video coding (versatile video coding, VVC) reference software or high-efficiency video coding (high-efficiency video coding, HEVC) developed by the joint collaboration team on video coding (joint collaboration team on video coding, JCT-VC) constituted by the ITU-T video coding experts group (video coding experts group, VCEG) and the ISO/IEC motion picture experts group (motion picture experts group, MPEG). A person of ordinary skill in the art understands that embodiments of the present invention are not limited to the HEVC or the VVC.

Encoder and encoding method

FIG. 2 is an example block diagram of the video encoder 20 according to an embodiment of this application. As shown in FIG. 2, the video encoder 20 includes an input end (or input interface) 201, a residual calculation unit 204, a transform processing unit 206, a quantization unit 208, an inverse quantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254, and a partitioning unit 262. The inter prediction unit 244 may include a motion estimation unit and a motion compensation unit (which are not shown). The video encoder 20 shown in FIG. 2 may also be referred to as a hybrid video encoder or a video encoder based on a hybrid video codec.

The residual calculation unit 204, the transform processing unit 206, the quantization unit 208, and the mode selection unit 260 form a forward signal path of the encoder 20, whereas the inverse quantization unit 210, the inverse transform processing unit 212, the reconstruction unit 214, a buffer 216, the loop filter 220, the decoded picture buffer (decoded picture buffer, DPB) 230, the inter prediction unit 244, and the intra prediction unit 254 form a backward signal path of the encoder, where the backward signal path of the encoder 20 corresponds to a signal path of a decoder (refer to the decoder 30 in FIG. 3). The inverse quantization unit 210, the inverse transform processing unit 212, the reconstruction unit 214, the loop filter 220, the decoded picture buffer 230, the inter prediction unit 244, and the intra prediction unit 254 further form a "built-in decoder" of the video encoder 20.

Picture and picture partitioning (picture and block)

The encoder 20 may be configured to receive, for example, via the input end 201, a picture (or picture data) 17, for example, a picture in a sequence of pictures forming a video or video sequence. The received picture or picture data may also be a pre-processed picture (or pre-processed picture data) 19. For ease of simplicity, the picture 17 is used in the following descriptions. The picture 17 may also be referred to as a current picture or to-be-encoded picture (in particular in video coding to distinguish the current picture from other pictures, for example, previously encoded and/or decoded pictures of a same video sequence, namely, a video sequence that also includes the current picture).

A (digital) picture is or may be considered as a two-dimensional array or matrix including pixels with intensity values. A sample in the array may also be referred to as a pixel (pixel or pel) (short for a picture element). Quantities of pixels of the array or the picture in horizontal and vertical directions (or axes) determine a dimension and/or resolution of the picture. For representation of color, three color components are usually used, to be specific, the picture may be represented as or include three pixel arrays. In an RBG format or color space, a picture includes a corresponding red, green and blue pixel array. However, in video coding, each pixel is usually represented in a luma/chroma format or color space, for example, YCbCr, which includes a luma component indicated by Y (sometimes represented by L) and two chroma components represented by Cb and Cr. The luminance (luma) component Y represents luma or gray level intensity (for example, both are the same in a gray-scale picture), while the two chrominance (chrominance, chroma for short) components Cb and Cr represent chroma or color information components. Accordingly, a picture in a YCbCr format includes a luma pixel array of luma pixel values (Y), and two chroma pixel arrays of chroma values (Cb and Cr). A picture in an RGB format may be converted or transformed into a picture in a YCbCr format, and vice versa. The process is also referred to as color transform or conversion. If a picture is monochrome, the picture may include only a luma pixel array. Accordingly, a picture may be, for example, a luma pixel array in a monochrome format or a luma pixel array and two corresponding chroma pixel arrays in a 4:2:0, 4:2:2, and 4:4:4 color format.

In an embodiment, the embodiment of the video encoder 20 may include a picture partitioning unit (not shown in FIG. 2), configured to partition the picture 17 into a plurality of (typically non-overlapping) picture blocks 203. These blocks may also be referred to as root blocks, macro blocks (H.264/AVC), coding tree blocks (Coding Tree Blocks, CTBs), or coding tree units (Coding Tree Units, CTUs) in the H.265/HEVC and VVC standards. The partitioning unit may be configured to use a same block dimension for all pictures of a video sequence and a corresponding grid defining the block dimension, or to change a block dimension between pictures or picture subsets or groups of pictures, and partition each picture into corresponding blocks.

In other embodiments, the video encoder may be configured to directly receive the block 203 of the picture 17, for example, one, several or all blocks forming the picture 17. The picture block 203 may also be referred to as a current picture block or a to-be-encoded picture block.

Like the picture 17, the picture block 203 is also or may be considered as a two-dimensional array or matrix including pixels with intensity values (pixel values), although of a smaller dimension than the picture 17. In other words, the block 203 may include one pixel array (for example, a luma array in case of a monochrome picture 17, or a luma or chroma array in case of a color picture) or three pixel arrays (for example, one luma array and two chroma arrays in case of a color picture 17) or any other quantity and/or type of arrays depending on a color format applied. Quantities of pixels of the block 203 in the horizontal and vertical directions (or axes) define the dimension of the block 203. Accordingly, a block may be an array of M×N (M columns×N rows) pixels, an array of M×N transform coefficients, or the like.

In an embodiment, the video encoder 20 shown in FIG. 2 may be configured to encode the picture 17 block by block, for example, encode and predict each block 203.

In an embodiment, the video encoder 20 shown in FIG. 2 may be further configured to partition and/or encode the picture by using slices (also referred to as video slices), where the picture may be partitioned or encoded by using one or more slices (typically non-overlapping). Each slice may include one or more blocks (for example, coding tree units CTUs) or one or more groups of blocks (for example, tiles (tiles) in the H.265/HEVC/VVC standard and bricks (bricks) in the VVC standard).

In an embodiment, the video encoder 20 shown in FIG. 2 may be further configured to partition and/or encode the picture by using slices/tile groups (also referred to as video tile groups) and/or tiles (also referred to as video tiles). The picture may be partitioned or encoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Residual calculation

The residual calculation unit 204 is configured to calculate a residual block 205 based on the picture block 203 and a prediction block 265 (further details about the prediction block 265 are provided later), for example, by subtracting pixel values of the prediction block 265 from pixel values of the picture block 203 sample by sample (pixel by pixel), to obtain the residual block 205 in pixel domain.

Transform

The transform processing unit 206 is configured to apply a transform, for example, a discrete cosine transform (discrete cosine transform, DCT) or discrete sine transform (discrete sine transform, DST), on the pixel values of the residual block 205 to obtain transform coefficients 207 in transform domain. The transform coefficients 207 may also be referred to as transform residual coefficients and represent the residual block 205 in transform domain.

The transform processing unit 206 may be configured to apply integer approximations of DCT/DST, such as transforms specified in the H.265/HEVC. Compared with an orthogonal DCT transform, such integer approximations are usually scaled based on a factor. To preserve a norm of a residual block which is processed by using forward and inverse transforms, an additional scale factor is applied as a part of the transform process. The scale factor is usually selected based on some constraints, for example, the scale factor is a power of two for a shift operation, a bit depth of the transform coefficient, or a tradeoff between accuracy and implementation costs. For example, a specific scale factor is specified for the inverse transform by the inverse transform processing unit 212 at the encoder 20 side (and a corresponding inverse transform by, for example, an inverse transform processing unit 312 at the decoder 30 side), and correspondingly, a corresponding scale factor may be specified for the forward transform by the transform processing unit 206 at the encoder 20 side.

In an embodiment, the video encoder 20 (correspondingly, the transform processing unit 206) may be configured to output a transform parameter like one or more transform types, for example, directly output the transform parameter or output the transform parameter after the transform parameter is encoded or compressed by the entropy encoding unit 270, so that, for example, the video decoder 30 may receive and use the transform parameter for decoding.

Quantization

The quantization unit 208 is configured to quantize the transform coefficients 207 to obtain quantization transform coefficients 209, for example, by applying scalar quantization or vector quantization. The quantization transform coefficients 209 may also be referred to as quantization residual coefficients 209.

The quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for the scalar quantization, different scales may be used to implement finer or coarser quantization. A smaller quantization step corresponds to finer quantization, and a larger quantization step corresponds to coarser quantization. An appropriate quantization step may be indicated by a quantization parameter (quantization parameter, QP). For example, the quantization parameter may be an index to a predefined set of appropriate quantization steps. For example, a smaller quantization parameter may correspond to finer quantization (a smaller quantization step) and a larger quantization parameter may correspond to coarser quantization (a larger quantization step), or vice versa. The quantization may include division by a quantization step and a corresponding and/or inverse dequantization, for example, by the inverse quantization unit 210, may include multiplication by the quantization step. In embodiments according to some standards such as HEVC, a quantization parameter may be used to determine the quantization step. Generally, the quantization step may be calculated based on a quantization parameter and through a fixed point approximation of an equation including division. Additional scale factors may be introduced for quantization and dequantization to restore the norm of the residual block, where the norm of the residual block may be modified because of a scale used in the fixed point approximation of the equation for the quantization step and the quantization parameter. In an example implementation, a scale of the inverse transform may be combined with a scale of the dequantization. Alternatively, customized quantization tables may be used and signaled from the encoder to the decoder, for example, in a bitstream. The quantization is a lossy operation, where a larger quantization step indicates a larger loss.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 may receive and use the quantization parameter for decoding.

Inverse quantization

The inverse quantization unit 210 is configured to apply the inverse quantization of the quantization unit 208 on the quantization coefficients to obtain dequantization coefficients 211, for example, by applying an inverse scheme of the quantization scheme applied by the quantization unit 208 based on or using the same quantization step as the quantization unit 208. The dequantization coefficients 211 may also be referred to as dequantization residual coefficients 211 and correspond to the transform coefficients 207. However, the dequantization coefficients 211 are typically not identical to the transform coefficients due to the loss by quantization.

Inverse transform

The inverse transform processing unit 212 is configured to apply the inverse transform of the transform applied by the transform processing unit 206, for example, an inverse discrete cosine transform (discrete cosine transform, DCT) or inverse discrete sine transform (discrete sine transform, DST), to obtain a reconstructed residual block 213 (or corresponding dequantization coefficients 213) in pixel domain. The reconstructed residual block 213 may also be referred to as a transform block 213.

Reconstruction

The reconstruction unit 214 (for example, an adder 214) is configured to add the transform block 213 (namely, the reconstructed residual block 213) to the prediction block 265 to obtain a reconstructed block 215 in the pixel domain, for example, by adding the pixel values of the reconstructed residual block 213 and the pixel values of the prediction block 265.

Filtering

A loop filter unit 220 (also referred to as the "loop filter" 220 for short) is configured to filter the reconstructed block 215 to obtain a filtered block 221, or usually configured to filter a reconstructed pixel to obtain a filtered pixel value. For example, the loop filter unit is configured to perform smooth pixel conversion or improve video quality. The loop filter unit 220 may include one or more loop filters such as a de-blocking filter, a sample-adaptive offset (sample-adaptive offset, SAO) filter, or one or more other filters such as an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process called luma mapping with chroma scaling (luma mapping with chroma scaling, LMCS) (namely, an adaptive in-loop reshaper) is added. This process is performed before de-blocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 220 is shown in FIG. 2 as being a loop filter, in other configurations, the loop filter unit 220 may be implemented as a post-loop filter. The filtered block 221 may also be referred to as a filtered reconstructed block 221.

In an embodiment, the video encoder 20 (correspondingly, the loop filter unit 220) may be configured to output loop filter parameters (such as a SAO filter parameter, an ALF filter parameter, or an LMCS parameter), for example, directly output the loop filter parameters or output the loop filter parameters after entropy encoding is performed on the loop filter parameters by the entropy encoding unit 270, so that, for example, the decoder 30 may receive and use a same loop filter parameter or different loop filter parameters for decoding.

Decoded picture buffer

The decoded picture buffer (decoded picture buffer, DPB) 230 may be a reference picture memory that stores reference picture data for use by the video encoder 20 during video data encoding. The DPB 230 may be formed by any of a variety of memory devices, such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or another type of memory device. The decoded picture buffer 230 may be configured to store one or more filtered blocks 221. The decoded picture buffer 230 may be further configured to store other previously filtered blocks, for example, previously reconstructed and filtered blocks 221, of a same current picture or of different pictures such as previously reconstructed blocks, and may provide complete previously reconstructed, for example, decoded pictures (and corresponding reference blocks and pixels) and/or a partially reconstructed current picture (and a corresponding reference block and pixel), for example, for inter prediction. The decoded picture buffer 230 may be further configured to store one or more unfiltered reconstructed blocks 215, or generally store unfiltered reconstructed pixels, for example, a reconstructed block 215 not filtered by the loop filter unit 220, or a reconstructed block or a reconstructed pixel on which no any other processing is performed.

Mode selection (partitioning and prediction)

The mode selection unit 260 includes the partitioning unit 262, the inter prediction unit 244, and the intra prediction unit 254, and is configured to receive or obtain original picture data, for example, the original block 203 (the current block 203 of the current picture 17), and reconstructed block data, for example, filtered and/or unfiltered reconstructed pixels or reconstructed blocks of the same (current) picture and/or from one or more previously decoded pictures, for example, from the decoded picture buffer 230 or other buffers (for example, a column buffer, not shown in the figure). The reconstructed block data is used as reference picture data for prediction, for example, inter prediction or intra prediction, to obtain the prediction block 265 or a prediction value 265.

The mode selection unit 260 may be configured to determine or select a partitioning for a prediction mode (for example, an intra or inter prediction mode) of a current block (including non-partitioning) and generate a corresponding prediction block 265, which is used for calculation of the residual block 205 and for the reconstruction of the reconstructed block 215.

In an embodiment, the mode selection unit 260 may be configured to select the partitioning and the prediction mode (for example, from those supported by or available for the mode selection unit 260), which provides best matching or a minimum residual (the minimum residual refers to better compression for transmission or storage), or minimum signaling overheads (the minimum signaling overheads refer to better compression for transmission or storage), or a minimum residual and minimum signaling overheads are considered or balanced in the prediction mode. The mode selection unit 260 may be configured to determine the partitioning and prediction mode based on rate distortion optimization (rate distortion Optimization, RDO), that is, select the prediction mode that provides a minimum rate distortion optimization. The terms "best", "lowest", "optimal" and the like in this specification do not necessarily mean "best", "lowest", "optimal" in general, but may also refer to situations in which termination or selection criteria are met. For example, values that exceed or fall below a threshold or other restrictions may result in "suboptimal selections" but reduce complexity and processing time.

In other words, the partitioning unit 262 may be configured to partition a picture of a video sequence into a sequence of coding tree units (coding tree units, CTUs), and the CTU 203 may be further partitioned into smaller block partitions or sub-blocks (which form the blocks again), for example, iteratively using quad-tree partitioning (quad-tree partitioning, QT), binary-tree partitioning (binary-tree partitioning, BT), triple-tree partitioning (triple-tree partitioning, TT), or any combination thereof, and to perform, for example, prediction for each of the block partitions or sub-blocks, where mode selection includes selection of a tree structure of the partitioned block 203 and a prediction mode applied to each of the block partitions or sub-blocks.

The following describes in detail partitioning (for example, performed by the partitioning unit 262) and prediction (for example, performed by the inter prediction unit 244 and the intra prediction unit 254) that are performed by the video encoder 20.

Partitioning

The partitioning unit 262 may partition (or split) a coding tree unit 203 into smaller partitions, for example, square or rectangular small blocks. For a picture that has three pixel arrays, a CTU includes a block of N×N luma pixels together with two corresponding blocks of chroma pixels.

In the H.265/HEVC video coding standard, a frame of picture is partitioned into non-overlapping CTUs. A CTU dimension may be set to 64×64 (the CTU dimension may alternatively be set to another value, for example, in JVET reference software JEM, the CTU dimension is increased to 128×128 or 256×256). A 64×64 CTU includes a rectangular pixel array with 64 columns and 64 pixels per column, and each pixel includes a luma component or/and a chroma component.

In the H.265, a QT-based CTU splitting method is used, a CTU is used as a root node (root) of the QT, and the CTU is recursively split into several leaf nodes (leaf nodes) in a QT split manner. One node corresponds to one picture region. If a node is not split, the node is referred to as a leaf node, and a picture region corresponding to the node is a CU. If the node is further split, the picture region corresponding to the node may be split into four regions of a same dimension (a length and a width of each region are half of a length and a width of the split region), each region corresponds to one node, and whether these nodes are further split needs to be separately determined. Whether a node is to be split is indicated by a split flag split_cu_flag that is in a bitstream and that corresponds to the node. A node A is split into four nodes Bi once, where i=0 to 3, Bi is referred to as a child node of A, and A is referred to as a parent node of Bi. A QT depth (qtDepth) of a root node is 0, and the QT depth of the node is a value obtained by adding 1 to 4×QT depth of the parent node of the node.

In the H.265/HEVC standard, for a picture in a YUV4:2:0 format, a CTU includes one luma block and two chroma blocks. The luma block and the chroma block may be split in a same manner, and a coding tree is referred to as a luma-chroma joint coding tree. In the VVC, if a current frame is an I frame, when a CTU is a node of a preset dimension (for example, 64×64) in an intra coded frame (I frame), a luma block included in the node is split, by a luma coding tree, into a group of coding units that include only luma blocks, and a chroma block included in the node is split, by a chroma coding tree, into a group of coding units that include only chroma blocks. Luma coding tree splitting and chroma coding tree splitting are independent of each other. Coding trees independently used for the luma block and chroma block are referred to as separate trees (separate trees). In the H.265, a CU includes a luma pixel and a chroma pixel. In standards such as the H.266 and the AVS3, in addition to a CU that includes both a luma pixel and a chroma pixel, there are also a luma CU that includes only a luma pixel and a chroma CU that includes only a chroma pixel.

As described above, the video encoder 20 is configured to determine or select a best or optimal prediction mode from a (pre-determined) prediction mode set. The prediction mode set may include, for example, an intra prediction mode and/or an inter prediction mode.

Intra prediction

An intra prediction mode set may include 35 different intra prediction modes, for example, non-directional modes such as a DC (or average) mode and a planar mode, or directional modes such as those defined in the HEVC, or may include 67 different intra prediction modes, for example, non-directional modes such as a DC (or average) mode and a planar mode, or directional modes such as those defined in the VVC. For example, several conventional angular intra prediction modes are adaptively replaced with wide-angle intra prediction modes for non-square blocks as defined in the VVC. For another example, to avoid division operations for DC prediction, only a longer side is used to compute an average for the non-square blocks. In addition, results of intra prediction of the planar mode may be further modified by using a position dependent intra prediction combination (position dependent intra prediction combination, PDPC) method.

The intra prediction unit 254 is configured to use reconstructed pixels of neighboring blocks of a same current picture to generate an intra prediction block 265 based on an intra prediction mode in the intra prediction mode set.

The intra prediction unit 254 (or usually the mode selection unit 260) is further configured to output an intra prediction parameter (or usually information indicating a selected intra prediction mode for a block) to be sent to the entropy encoding unit 270 in a form of a syntax element 266, to be included in the encoded picture data 21, so that the video decoder 30 may perform an operation, for example, receive and use a prediction parameter for decoding.

Inter prediction

In a possible implementation, an inter prediction mode set depends on available reference pictures (namely, previous at least partially decoded pictures, for example, stored in the DBP 230) and other inter prediction parameters, for example, whether the whole reference picture or only a part, for example, a search window area around the area of the current block, of the reference picture is used for searching for a best matching reference block, and/or for example, whether pixel interpolation is applied, for example, half/semi-pel, quarter-pel and/or 1/16 pel interpolation, or not.

In addition to the foregoing prediction modes, a skip mode and/or a direct mode may further be applied.

For example, a merge candidate list of an extended merge prediction mode includes the following five types of candidates in order: spatial MVP from spatial neighboring CUs, temporal MVP from collocated CUs, history-based MVP from a FIFO table, pairwise average MVP, and zero MVs. Bilateral matching-based decoder side motion vector refinement (decoder side motion vector refinement, DMVR) may be used to increase accuracy of the MVs of the merge mode. A merge mode with MVD (merge mode with MVD, MMVD) comes from a merge mode with motion vector differences. An MMVD flag is sent right after a skip flag and a merge flag are sent, to specify whether the MMVD mode is used for a CU. A CU-level adaptive motion vector resolution (adaptive motion vector resolution, AMVR) scheme may be used. AMVR supports encoding of an MVD of the CU at different precision. An MVD of a current CU may be adaptively selected based on a prediction mode of the current CU. When a CU is encoded in the merge mode, a combined inter/intra prediction (combined inter/intra prediction, CIIP) mode may be applied to the current CU. Weighted averaging is performed on inter and intra prediction signals to achieve CIIP prediction. For affine motion compensation prediction, an affine motion field of a block is described by using motion information of a motion vector of two control points (four parameters) or three control points (six parameters). Subblock-based temporal motion vector prediction (subblock-based temporal motion vector prediction, SbTMVP), which is similar to the temporal motion vector prediction (temporal motion vector prediction, TMVP) in HEVC, but predicts a motion vector of a sub-CU in a current CU. A bi-directional optical flow (bi-directional optical flow, BDOF), previously referred to as BIO, is a simpler version that requires much less computation, especially in terms of a quantity of multiplications and a value of a multiplier. In a triangle partition mode, a CU is split evenly into two triangular portions through diagonal splitting and anti-diagonal splitting. In addition, a bi-prediction mode is extended beyond simple averaging to allow weighted averaging of two prediction signals.

The inter prediction unit 244 may include a motion estimation (motion estimation, ME) unit and a motion compensation (motion compensation, MC) unit (both not shown in FIG.2). The motion estimation unit may be configured to receive or obtain the picture block 203 (the current picture block 203 of the current picture 17) and a decoded picture 231, or at least one or more previously reconstructed blocks, for example, reconstructed blocks of one or more other/different previously decoded pictures 231, for motion estimation. For example, a video sequence may include the current picture and the previously decoded picture 231, or in other words, the current picture and the previously decoded picture 231 may be part of or form a sequence of pictures forming the video sequence.

For example, the encoder 20 may be configured to select a reference block from a plurality of reference blocks of a same picture or different pictures of a plurality of other pictures and provide a reference picture (or a reference picture index) and/or an offset (spatial offset) between a position (x and y coordinates) of the reference block and a position of the current block as inter prediction parameters to the motion estimation unit. This offset is also referred to as a motion vector (motion vector, MV).

The motion compensation unit is configured to obtain, for example, receive, an inter prediction parameter and perform inter prediction based on or using the inter prediction parameter to obtain an inter prediction block 246. Motion compensation performed by the motion compensation unit may include extracting or generating a prediction block based on a motion/block vector determined through motion estimation, and may further include performing interpolation on sub-pixel precision. Interpolation filtering may generate a pixel of another pixel from a pixel of a known pixel, thus potentially increasing a quantity of candidate prediction blocks that may be used to encode a picture block. Upon receiving the motion vector corresponding to the PU of the current picture block, the motion compensation unit may locate a prediction block to which the motion vector points in one of the reference picture lists.

The motion compensation unit may further generate syntax elements related to a block and a video slice for use by the video decoder 30 in decoding picture blocks of the video slice. In addition or as an alternative to slices and corresponding syntax elements, tile groups and/or tiles and corresponding syntax elements may be generated or used.

Entropy encoding

The entropy encoding unit 270 is configured to apply, for example, an entropy coding algorithm or scheme (for example, a variable length coding (variable length coding, VLC) scheme, a context adaptive VLC (context adaptive VLC, CALVC) scheme, an arithmetic coding scheme, a binarization algorithm, context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy coding methodology or technique) on the quantization residual coefficients 209, inter prediction parameters, intra prediction parameters, loop filter parameters and/or other syntax elements to obtain encoded picture data 21 which can be output via the output end 272, for example, in the form of an encoded bitstream 21, so that, for example, the video decoder 30 may receive and use the parameters for decoding. The encoded bitstream 21 may be transmitted to the video decoder 30, or stored in a memory for later transmission or retrieval by the video decoder 30.

Another structural variation of the video encoder 20 may be used to encode the video stream. For example, a non-transform-based encoder 20 may quantize a residual signal directly without the transform processing unit 206 for some blocks or frames. In another implementation, the encoder 20 may have the quantization unit 208 and the inverse quantization unit 210 combined into a single unit.

Decoder and decoding method

FIG. 3 is an example block diagram of the video decoder 30 according to an embodiment of this application. The video decoder 30 is configured to receive, for example, the encoded picture data 21 (for example, the encoded bitstream 21) encoded by the encoder 20, to obtain a decoded picture 331. The encoded picture data or bitstream includes information for decoding the encoded picture data, for example, data that represents picture blocks of an encoded video slice (and/or tile groups or tiles), and related syntax elements.

In the example in FIG. 3, the decoder 30 includes an entropy decoding unit 304, an inverse quantization unit 310, an inverse transform processing unit 312, a reconstruction unit 314 (for example, an adder 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may execute a decoding process generally reciprocal to the encoding process described with reference to the video encoder 100 in FIG. 2.

As explained with regard to the encoder 20, the inverse quantization unit 210, the inverse transform processing unit 212, the reconstruction unit 214, the loop filter 220, the decoded picture buffer DPB 230, the inter prediction unit 344, and the intra prediction unit 354 further form a "built-in decoder" of the video encoder 20. Accordingly, the inverse quantization unit 310 may be identical in function to the inverse quantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for corresponding units and functions of the video encoder 20 are correspondingly applicable to corresponding units and functions of the video decoder 30.

Entropy decoding

The entropy decoding unit 304 is configured to parse the bitstream 21 (or in general encoded picture data 21) and perform, for example, entropy decoding on the encoded picture data 21 to obtain, for example, quantization coefficients 309 and/or decoded coding parameters (not shown in FIG. 3), for example, any or all of inter prediction parameters (for example, a reference picture index and a motion vector), intra prediction parameters (for example, an intra prediction mode or an index), transform parameters, quantization parameters, loop filter parameters, and/or other syntax elements. The entropy decoding unit 304 may be configured to apply a decoding algorithm or scheme corresponding to the encoding scheme of the entropy encoding unit 270 of the encoder 20. The entropy decoding unit 304 may be further configured to provide the inter prediction parameter, the intra prediction parameter, and/or another syntax element to the mode application unit 360 and another parameter to another unit of the decoder 30. The video decoder 30 may receive the syntax elements at the video slice level and/or the video block level. In addition or as an alternative to slices and corresponding syntax elements, tile groups and/or tiles and corresponding syntax elements may be received or used.

Inverse quantization

The inverse quantization unit 310 may be configured to receive a quantization parameter (quantization parameter, QP) (or generally, information related to the inverse quantization) and a quantization coefficient from the encoded picture data 21 (for example, parsed and/or decoded by the entropy decoding unit 304) and to apply an inverse quantization on the decoded quantization coefficient 309 based on the quantization parameter to obtain a dequantization coefficient 311 that may also be referred to as a transform coefficient 311. The inverse quantization process may include use of a quantization parameter calculated by the video encoder 20 for each video block in a video slice to determine a degree of quantization and, likewise, a degree of inverse quantization that needs to be applied.

Inverse transform

The inverse transform processing unit 312 may be configured to receive the dequantization coefficients 311, also referred to as the transform coefficients 311, and apply a transform to the dequantization coefficients 311 to obtain a reconstructed residual block 213 in pixel domain. The reconstructed residual block 213 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, by parsing and/or decoding, for example, by the entropy decoding unit 304) to determine the transform to be applied to the dequantization coefficients 311.

Reconstruction

The reconstruction unit 314 (for example, an adder 314) is configured to add the reconstructed residual block 313 to the prediction block 365 to obtain a reconstructed block 315 in the pixel domain, for example, by adding the pixel values of the reconstructed residual block 313 and the pixel values of the prediction block 365.

Filtering

The loop filter unit 320 (either in a coding loop or after the coding loop) is configured to filter the reconstructed block 315 to obtain a filtered block 321, to perform smooth pixel conversion or improve video quality. The loop filter unit 320 may include one or more loop filters such as a de-blocking filter, a sample-adaptive offset (sample-adaptive offset, SAO) filter, or one or more other filters such as an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process called luma mapping with chroma scaling (luma mapping with chroma scaling, LMCS) (namely, an adaptive in-loop reshaper) is added. This process is performed before de-blocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 320 is shown in FIG. 3 as being a loop filter, in other configurations, the loop filter unit 320 may be implemented as a post-loop filter.

Decoded picture buffer

A decoded video block 321 of a picture is then stored in the decoded picture buffer 330 that stores a decoded picture 331 as a reference picture, where the reference picture is used for subsequent motion compensation for other pictures and/or for output respectively display.
The decoder 30 is configured to output the decoded picture 311, for example, via an output end 312, for presentation or viewing to a user.

Prediction

The inter prediction unit 344 may be identical in function to the inter prediction unit 244 (in particular to the motion compensation unit), and the intra prediction unit 354 may be identical in function to the inter prediction unit 254. The inter prediction unit 344 and the intra prediction unit 354 perform splitting or partitioning decisions and prediction based on the partitioning and/or prediction parameter or respective information received from the encoded picture data 21 (for example, parsed and/or decoded by the entropy decoding unit 304). The mode application unit 360 may be configured to perform prediction (intra or inter prediction) on each block based on a reconstructed block, a block, or a corresponding pixel (filtered or unfiltered), to obtain the prediction block 365.
When the video slice is coded as an intra coded (intra coded, I) slice, the intra prediction unit 354 of the mode application unit 360 is configured to generate the prediction block 365 for a picture block of the current video slice based on an indicated intra prediction mode and data from previously decoded blocks of the current picture. When the video picture is coded as an inter coded (for example, B, or P) slice, the inter prediction unit 344 (for example, the motion compensation unit) of the mode application unit 360 is configured to produce the prediction block 365 for a video block of the current video slice based on the motion vectors and other syntax elements received from the entropy decoding unit 304. For inter prediction, the prediction blocks may be generated from one reference picture in one reference picture list. The video decoder 30 may construct reference frame lists: a list 0 and a list 1, by using a default construction technology based on reference pictures stored in the DPB 330. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.
The mode application unit 360 is configured to determine prediction information for a video block of the current video slice by parsing the motion vectors and other syntax elements, and use the prediction information to produce the prediction blocks for the current video block being decoded. For example, the mode application unit 360 uses some of the received syntax elements to determine a prediction mode (for example, intra or inter prediction) used to encode the video blocks of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information to decode the video blocks in the current video slice. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.

In an embodiment, the video encoder 30 shown in FIG. 3 may be further configured to partition and/or decode the picture by using slices (also referred to as video slices), where the picture may be partitioned or decoded using one or more slices (typically non-overlapping). Each slice may include one or more blocks (for example, CTUs) or one or more groups of blocks (for example, tiles in the H.265/HEVC/VVC standard and bricks in the VVC standard).

In an embodiment, the video decoder 30 shown in FIG. 3 may be further configured to partition and/or decode the picture by using slices/tile groups (also referred to as video tile groups) and/or tiles (also referred to as video tiles). The picture may be partitioned or decoded using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Other variations of the video decoder 30 may be used to decode the encoded picture data 21. For example, the decoder 30 may generate an output video stream without the loop filter unit 320. For example, a non-transform-based decoder 30 may inversely quantize the residual signal directly without the inverse transform processing unit 312 for some blocks or frames. In another implementation, the video decoder 30 may have the inverse quantization unit 310 and the inverse transform processing unit 312 combined into a single unit.

It should be understood that, in the encoder 20 and the decoder 30, a processing result of a current step may be further processed and then output to a next step. For example, after interpolation filtering, motion vector derivation, or loop filtering, a further operation, for example, a clip (clip) or shift (shift) operation, may be performed on a processing result of the interpolation filtering, motion vector derivation, or loop filtering.

It should be noted that further operations may be performed on derived motion vectors of the current block (including but not limit to control point motion vectors in an affine mode, sub-block motion vectors in affine, planar, and ATMVP modes, temporal motion vectors, and so on). For example, a value of a motion vector is constrained to a predefined range according to its representing bit. If the representation bit of the motion vector is bitDepth, a range is from $-2^{(bitDepth-1)}$ to $2^{(bitDepth-1)}-1$, where the "^" represents exponentiation. For example, if the bitDepth is set to 16, the range is -32768 to 32767; and if the bitDepth is set to 18, the range is $-131072$ to $131071$. For example, the value of the derived motion vector (for example, the MVs of four $4\times4$ sub-blocks within one $8\times8$ block) is constrained such that the max difference between integer parts of the four $4\times4$ sub-block MVs is no more than N pixels, such as no more than one pixel. Two methods for constraining the motion vector based on the bitDepth are provided herein.

Although video encoding and decoding are mainly described in the foregoing embodiments, it should be noted that the embodiments of the coding system 10, the encoder 20, and the decoder 30 and other embodiments described in this specification may also be used for still picture processing or encoding and decoding, that is, processing or encoding and decoding of a single picture independent of any preceding or consecutive pictures in video encoding and decoding. In general, if picture processing is limited to a single picture 17, the inter prediction unit 244 (encoder) and the inter prediction unit 344 (decoder) may not be available. All other functions (also referred to as tools or technologies) of the video encoder 20 and the video decoder 30 may equally be used for still picture processing, for example, residual calculation 204/304, transform 206, quantization 208, inverse quantization 210/310, (inverse) transform 212/312, partitioning 262/362, intra prediction 254/354 and/or loop filtering 220/320, entropy encoding 270, and entropy decoding 304.

FIG. 4 is an example block diagram of a video coding device 400 according to an embodiment of this application. The video coding device 400 is suitable for implementing the disclosed embodiments as described in this specification. In an embodiment, the video coding device 400 may be a decoder such as the video decoder 30 in FIG. 1A or an encoder such as the video encoder 20 in FIG. 1A.

The video coding device 400 includes: ingress ports 410 (or input ports 410) and a receiver unit (receiver unit, Rx) 420 that are configured to receive data; a processor, logic unit, or central processing unit (central processing unit, CPU) 430 for processing data; a transmitter unit (transmitter unit, Tx) 440 and egress ports 450 (or output ports 450) that are configured to transmit data; and a memory 460 for storing data. The video coding device 400 may also include optical-to-electrical (optical-to-electrical, OE) components and electrical-to-optical (electrical-to-optical, EO) components coupled to the ingress ports 410, the receiver unit 420, the transmitter unit 440, and the egress ports 450 for egress or ingress of optical or electrical signals.

The processing unit 430 is implemented by using hardware and software. The processing unit 430 may be implemented as one or more processor chips, cores (for example, a multi-core processor), FPGAs, ASICs, and DSPs. The processing unit 430 is in communication with the ingress ports 410, the receiver unit 420, the transmitter unit 440, the egress ports 450, and the memory 460. The processing unit 430 includes a coding module 470. The coding module 470 implements the embodiments disclosed above. For example, the coding module 470 implements, processes, prepares, or provides various coding operations. Therefore, the coding module 470 provides a substantial improvement to functions of the video coding device 400 and affects switching of the video coding device 400 to a different state. Alternatively, the coding module 470 is implemented by using instructions stored in the memory 460 and executed by the processing unit 430.

The memory 460 may include one or more disks, tape drives, and solid-state drives and may be used as an over-flow data storage device, to store programs when such programs are selected for execution, and to store instructions and data that are read during program execution. The memory 460 may be volatile and/or non-volatile, and may be a read-only memory (read-only memory, ROM), a random access memory (random access memory, RAM), a ternary content-addressable memory (ternary content-addressable memory, TCAM), and/or a static random access memory (static random-access memory, SRAM).

For ease of understanding, the following first explains and describes some technologies or terms used in embodiments of this application. The technologies or terms are also used as a part of content of the present invention.

1. Scalable video coding

Scalable video coding, also known as scalable video coding, is an extended coding standard of current video coding standards (generally, extended-standard scalable video coding (scalable video coding, SVC) of advanced video coding (advanced video coding, AVC) (H.264), or extended-standard scalable high efficiency video coding (scalable high efficiency video coding, SHVC) of high efficiency video coding (high efficiency video coding, HEVC) (H.265)). The scalable video coding is mainly used to resolve the problems of packet loss and delay jitter caused by a real-time change of network bandwidth in real-time video transmission.

In the scalable video coding, a basic structure may be referred to as a level. A scalable video coding technology may obtain bitstreams of levels of different resolution by performing spatial domain scaling (resolution scaling) on an original picture block. Resolution may be a dimension of a picture block in a unit of pixels. Resolution of a low level is low, and resolution of a high level is not lower than that of the low level. Alternatively, bitstreams of levels of different frame rates may be obtained by performing temporal domain scaling (frame rate scaling) on the original picture block. A frame rate may be a quantity of picture frames included in a video per unit time. A frame rate of a low level is low, and a frame rate of a high level is not lower than that of the low level. Alternatively, bitstreams of levels of different coding quality grades may be obtained by performing quality domain scaling on the original picture block. Coding quality may be quality of a video. A picture distortion degree of a low level is high, and a picture distortion degree of a high level is not higher than that of the low level.

Generally, a layer referred to as a base layer is a bottommost layer in the scalable video coding. In spatial domain scaling, a base layer picture block is coded using lowest resolution. In temporal domain scaling, a base layer picture block is coded using a lowest frame rate. In quality domain scaling, a base layer picture block is coded using a highest QP or a lowest bit rate. In other words, the base layer has lowest quality in the scalable video coding. A level referred to as an enhancement layer is a level above the base layer in the scalable video coding, and may be divided into a plurality of enhancement layers from low to high. A lowest-layer enhancement layer codes, based on coding information obtained by the base layer, to obtain a combined bitstream whose coding resolution is higher than that of the base layer, or frame rate is higher than that of the base layer, or bit rate is higher than that of the base layer. A higher-layer enhancement layer may code, based on coding information of a lower-layer enhancement layer, to obtain a picture block with higher quality.

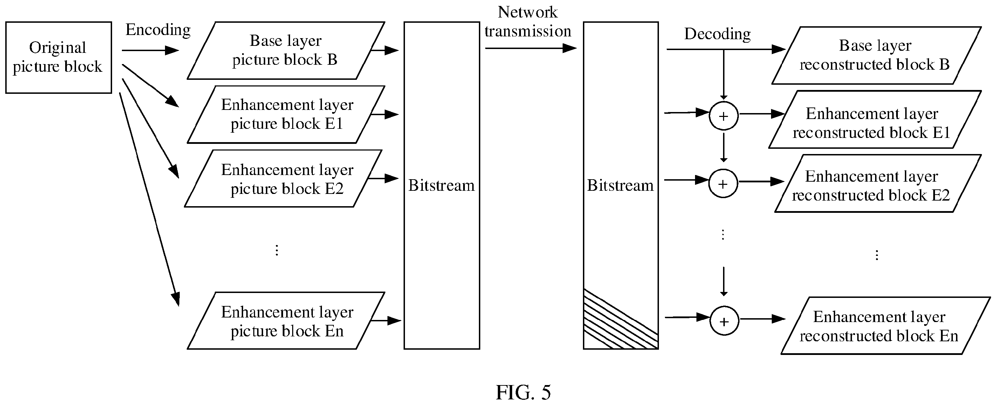

For example, FIG. 5 is a diagram of an example of a level of scalable video coding according to this application. As shown in FIG. 5, after an original picture block is sent to a scalable coder, the original picture block may be layered into a base layer picture block B and an enhancement layer picture block (E1 to En, where n is greater than or equal to 1) according to different coding configurations, and then coding is performed separately to obtain a bitstream including a base layer bitstream and an enhancement layer bitstream. The base layer bitstream is generally a bitstream obtained by using lowest resolution, a lowest frame rate, or a lowest coding quality parameter for a picture block. The enhancement layer bitstream is a bitstream obtained by coding a picture block by using high resolution, a high frame rate, or a high coding quality parameter on the basis of the base layer. As a quantity of enhancement layers increases, a spatial domain level, temporal domain level, or quality level of coding also increases. When an encoder transmits the bitstreams to a decoder, transmission of the base layer bitstream is ensured first. When a network has a margin, the bitstreams at higher layers are transmitted gradually. The decoder first receives and decodes the base layer bitstream, decodes received enhancement layer bitstreams in an ascending order of spatial domain, temporal domain, or quality layer by layer from a lower layer to a higher layer, and then superposes decoded information of a higher layer on a reconstructed block of a lower layer, to obtain a reconstructed block with higher resolution, a higher frame rate, or higher quality.

2. YUV

Usually, it refers to a representation mode of a picture in a YCbCr color space color format, including three color channels: Y, U, and V. The channel Y is a luma component channel, representing luma information of the picture. The channels U and V are chroma component channels, representing color information of the picture. There are mainly three sampling modes for a YUV picture: YUV4:4:4, YUV4:2:2, and YUV4:2:0. Sampling rates of components Y, U, and V in YUV4:4:4 are the same, sampling rates of components U and V in YUV4:2:2 are half of that of a component Y, and sampling rates of components U and V in YUV4:2:0 are one quarter of that of a component Y.

The sampling rates of the three components Y, U, and V in YUV4:4:4 are the same. In every two rows of pixels, each time four samples are selected for the luma component (Y), four samples are also selected for the chroma component (UV), as shown in FIG. 6a. In the figure, ○ represents a luma sample, and × represents a sample of a chroma component.

The sampling rates of the components U and V in YUV4:2:2 are half of that of the component Y. In every two rows of pixels, each time four samples are selected for the luma component (Y), two samples are selected for the chroma component (UV). For example, two samples in the first row and two samples in the second row are selected for the chroma component. A location of the chroma sample may be the same as or different from a location of the luma sample, and the chroma sample may be generated by performing interpolation on a chroma sampling pixel at a corresponding location, as shown in FIG. 6b.

The sampling rates of the components U and V in YUV4:2:0 are one quarter of that of the component Y. In every two rows of pixels, each time four samples are selected for the luma component (Y), one sample is selected for the chroma component (UV). For example, two samples in the first row and zero sample in the second row are selected for the chroma component, as shown in FIG. 6c.

3. High-sampling-rate chroma component YUV

Usually, it refers to a YUV picture with a chroma sampling rate higher than that of YUV4:2:0, for example, a YUV4:4:4 picture or a YUV4:2:2 picture. In this specification, the high-sampling-rate chroma component YUV may also be referred to as a high-resolution chroma component YUV, namely, a YUV picture with chroma resolution higher than that of YUV4:2:0 when luma resolution is the same.

4. Chroma increment signal

Usually, it refers to a signal in which a chroma component of a picture obtained through chroma downsampling is remaining compared with a chroma component of a source picture, and may also be referred to as a chroma differential signal or a UV chroma picture.

5. Phase

Any 2×2 picture block included in a YUV4:4:4 picture includes four pixels. Because locations of the four pixels are different, it may be considered that the four pixels correspond to four different phases. Therefore, it may be learned that a 2×2 picture block includes four pixels, and phases of the four pixels are different, and are respectively an upper left phase, an upper right phase, a lower left phase, and a lower right phase.

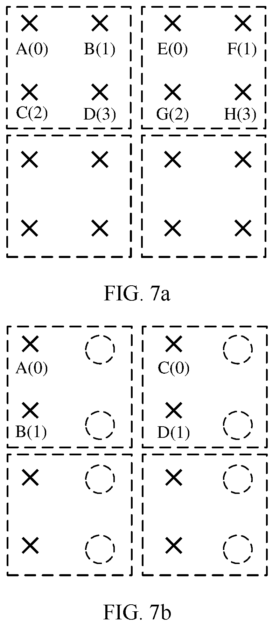

For a luma component and a chroma component in a YUV4:4:4 picture, there may be four luma phases and four chroma phases in a 2×2 picture block. In the YUV4:4:4 picture, a chroma sampling rate is the same as a luma sampling rate. A 2×2 picture block includes four chroma phases 0, 1, 2, and 3 that represent four locations: an upper left location, an upper right location, a lower left location, and a lower right location, respectively. As shown in FIG. 7a, in a 2×2 picture block, four pixels located at A, B, C, and D are respectively located at phases 0, 1, 2, and 3, and in another 2×2 picture block, four pixels located at E, F, G, and H are respectively located at phases 0, 1, 2, and 3. The rest may be deduced by analogy. For ease of description, in this specification, the numbers are used to represent four phases. However, it should be understood that the numbers are merely used as an example, and do not constitute a limitation on the chroma phase.

For a luma component and a chroma component in a YUV4:2:2 picture, there may be four luma phases and two chroma phases in a 2×2 picture block. In the YUV4:2:2 picture, a chroma sampling rate is half of a luma sampling rate. A 2×2 picture block includes two chroma phases 0 and 1 that represent two locations: an upper location and a lower location of the two chroma phases, respectively. As shown in FIG. 7b, in a 2×2 picture block, two pixels located at A and B are respectively located at phases 0 and 1, and in another 2×2 picture block, two pixels located at C and D are respectively located at phases 0 and 1. The rest may be deduced by analogy. For ease of description, in this specification, the numbers are used to represent two chroma phases. However, it should be understood that the numbers are merely used as an example, and do not constitute a limitation on the chroma phase.

6. Chroma plane

A plane formed by a component U and a component V in a picture (including an image, a picture frame in a video, and the like) may be referred to as a chroma plane, and is also referred to as a UV44 picture (or a UV44 signal). The component U includes all pixels that are in the picture and that are used to represent the component U, and the component V includes all pixels that are in the picture and that are used to represent the component V.

It can be learned that, if one or more pixels (namely, samples) in four pixels of each of all 2×2 picture blocks included in the UV44 picture are separately taken out, the one or more samples may form a new chroma plane. This manner may be referred to as chroma sampling. If n pixels are selected from four pixels in each of the component U and the component V to form a chroma plane (0≤n≤4), a newly formed chroma plane may be referred to as a UVnn picture (or a UVnn signal). For example, a UV11 picture is a chroma plane formed by selecting one pixel from every four pixels in each of the component U and the component V.

There may be multiple forms of chroma sampling. For example, a pixel is directly selected as a sample, and a pixel value of the pixel is used as a value of the sample; or a pixel is selected as a sample, and a value of the sample is obtained by performing weighting calculation on a pixel value of a surrounding pixel of the pixel.

According to the foregoing chroma sampling mode, a chroma component of a YUV4:2:0 picture may be considered as a UV11 picture, and a chroma component of a YUV4:2:2 picture may be considered as a UV22 picture.

Usually, YUV4:2:0 is used for most pictures input to an encoder for encoding. A standard video codec based on YUV4:2:0 is widely used in various products, for example, a video application (application, APP), a mobile phone (chip), and a television (chip). Therefore, it is a common requirement to encode a high-sampling-rate chroma component YUV picture by using an existing standard video codec based on YUV4:2:0. However, in a related technology, a large amount of data is encoded and decoded, resulting in high encoding and decoding complexity, high power consumption, and a low speed. In addition, encoding and decoding processes of a base layer and an enhancement layer include a redundant chroma signal, resulting in low compression efficiency, an increase in a bit rate, and occupation of a large amount of transmission bandwidth.

To resolve the foregoing technical problems, embodiments of this application provide a scalable picture encoding and decoding method and apparatus. The following describes the technical solutions of this application.

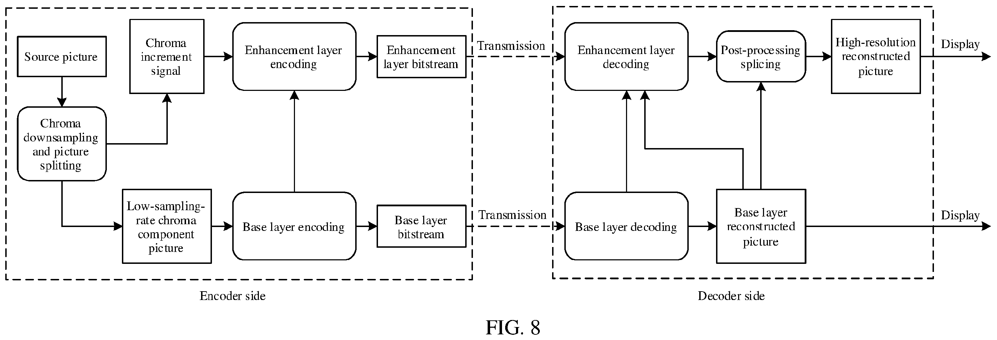

FIG. 8 is an example block diagram of a picture encoding and decoding architecture according to an embodiment of this application. As shown in FIG. 8, the architecture includes an encoder side and a decoder side. The encoder side may be implemented by a video encoder 20, and the decoder side may be implemented by a video decoder 30.

On the encoder side, a source picture is a high-sampling-rate chroma component YUV (for example, a YUV4:4:4 picture), and downsampling and/or splitting are/is performed on a chroma component of the source picture, to obtain a low-sampling-rate chroma component picture (for example, a YUV4:2:0 picture) and a chroma increment signal (for example, a UV22 picture or a UV11 picture). The low-sampling-rate chroma component picture may be used as a base layer picture for base layer encoding, to obtain a base layer bitstream. The chroma increment signal may be used as an enhancement layer picture for enhancement layer encoding, to obtain an enhancement layer bitstream. In addition, in an encoding process of an enhancement layer, encoding information of the base layer and a base layer reconstructed picture may be considered as auxiliary for encoding.

The decoder side performs base layer decoding on the base layer bitstream, to obtain the base layer reconstructed picture (for example, a YUV4:2:0 reconstructed picture), performs enhancement layer decoding on the enhancement layer bitstream, to obtain a reconstructed chroma enhancement signal (for example, a UV22 reconstructed chroma picture or a UV11 reconstructed picture), and then combines the base layer reconstructed picture and the reconstructed chroma enhancement signal to obtain a high-resolution reconstructed picture. On the decoder side, only the base layer reconstructed picture may be displayed, or the high-resolution reconstructed picture may be displayed to improve display effect.

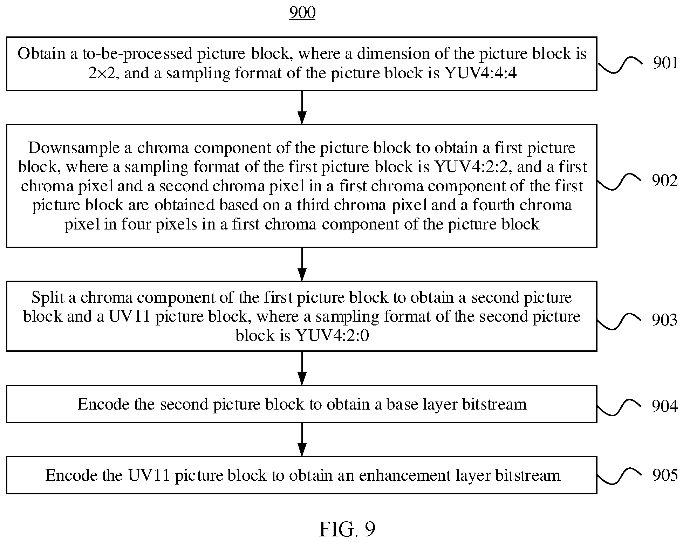

FIG. 9 is a flowchart of a process 900 of a picture encoding method according to this application. The process 900 may be performed by a video encoder 20 (or an encoder). The process 900 is described as a series of steps or operations. It should be understood that the process 900 may be performed in various sequences and/or simultaneously, and is not limited to an execution sequence shown in FIG. 9. The process 900 includes the following steps.

Step 901: Obtain a to-be-processed picture block, where a dimension of the picture block is 2×2, and a sampling format of the picture block is YUV4:4:4.

In a related video coding technology, a picture block may be a largest coding unit (largest coding unit, LCU) in an entire frame of picture. The entire frame of picture may be any picture frame in a picture sequence included in a video being processed by an encoder. The picture frame is not split, and a dimension of the picture frame is a dimension of a complete picture frame. In the H.265 standard, before video encoding is performed, an original picture frame is split into a plurality of coding tree units (coding tree units, CTUs). The CTU is a largest coding unit for video encoding, and may be split into CUs of different dimensions in a quad-tree manner. The CTU, as the largest coding unit, is also referred to as an LCU. Alternatively, the picture block may be an entire frame of picture. Alternatively, the picture block may be a region of interest (region of interest, ROI) in an entire frame of picture, that is, a picture region that needs to be processed and that is specified in the picture.

In this embodiment of this application, the to-be-processed picture block may be a picture block with a dimension of 2×2. In other words, after the picture block in the foregoing video coding technology is further split, a plurality of picture blocks with a dimension of 2×2 may be obtained. In this embodiment of this application, any 2×2 picture block may be used as the to-be-processed picture block, to perform chroma component processing.

In addition, the sampling format of the to-be-processed picture block in this embodiment of this application is YUV4:4:4 (refer to FIG. 6a). To be specific, the to-be-processed picture block includes a luma component, a first chroma component, and a second chroma component, and the three components have a same sampling rate. The luma component includes four pixels, and the first chroma component and the second chroma component each also include four pixels. It should be noted that the to-be-processed picture block in this embodiment of this application may alternatively be in another 4:4:4 sampling format, for example, YCbCr. This is not specifically limited.

For ease of description, in this specification, an upper left pixel, an upper right pixel, a lower left pixel, and a lower right pixel of a picture block are sequentially numbered 0, 1, 2, and 3. However, it should be understood that the numbers are merely used as an example, and do not constitute a limitation on locations of the pixels.

Step 902: Downsample a chroma component of the picture block to obtain a first picture block, where a sampling format of the first picture block is YUV4:2:2, and a first chroma pixel and a second chroma pixel in a first chroma component of the first picture block are obtained based on a third chroma pixel and a fourth chroma pixel in four pixels in the first chroma component of the picture block.

In addition, a fifth chroma pixel and a sixth chroma pixel in a second chroma component of the first picture block are obtained based on a seventh chroma pixel and an eighth chroma pixel in four pixels in a second chroma component of the picture block.

The first chroma component is a component U, and the second chroma component is a component V; or the first chroma component is a component V, and the second chroma component is a component U.

The following uses the first chroma component as an example to describe a processing process of the chroma component of the picture block. It may be understood that, for a processing process of the second chroma component, refer to this.

The sampling format of the first picture block is YUV4:2:2 (refer to FIG. 6b). To be specific, the first picture block includes a luma component, the first chroma component, and the second chroma component, and sampling rates of the three components are different. The luma component includes four pixels, and the first chroma component and the second chroma component each include two pixels.

In this embodiment of this application, the first chroma pixel and the second chroma pixel in the first chroma component of the first picture block are obtained based on the third chroma pixel and the fourth chroma pixel in the four pixels in the first chroma component of the picture block.

The third chroma pixel and the fourth chroma pixel may be obtained in the following three manners:

Manner 1: Chroma values of the four pixels in the first chroma component of the to-be-processed picture block are obtained; it is determined, based on the chroma values of the four pixels, that the first chroma component of the picture block includes n1 types of chrominance, where n1 is a positive integer; and the third chroma pixel and the fourth chroma pixel are determined based on a value of n1.

The first chroma component of the picture block includes n1 types of chrominance, where n1 is determined based on N, and N is a quantity of absolute values of chroma value differences that are greater than a first threshold (preset) and that are in absolute values of chroma value differences between every two of the four pixels. That is, the absolute values of the chroma value differences between every two of the foregoing four pixels are calculated to obtain absolute values of six chroma value differences, and the absolute values of the six chroma value differences are separately compared with the first threshold, where each time the absolute value of the chroma value difference is greater than the first threshold (the absolute value of the chroma value difference>the first threshold), N is increased by 1. It is represented by a formula: $\Delta A_{ij} = | A_i - A_j |$, where $i, j \in \{0, 1, 2, 3\}$. If $\Delta A_{ij} > \delta$, N is increased by 1, where $\delta$ represents the first threshold. It should be noted that, in this embodiment of this application, calculation related to calculation of a difference, for example, a chroma value difference, may be understood as calculation of an absolute value of the difference.

After the six chroma value differences are compared, the value of N is obtained:

When N=0, n1=1;
when 0<N≤4, n1=2;
when N=5, n1=3; or
when N=6, n1=4.

It should be noted that, in this embodiment of this application, the value of n1 may alternatively be obtained by using another method. This is not specifically limited.

In a possible implementation, when n1=1, n1=3, or n1=4 (representing that the first chroma component of the picture block includes one type of chrominance, three types of chrominance, or four types of chrominance), the third chroma pixel and the fourth chroma pixel are two pixels at preset locations in the four pixels. For example, the third chroma pixel and the fourth chroma pixel are two pixels at diagonal locations in the four pixels. In other words, the third chroma pixel and the fourth chroma pixel may be the pixels 0 and 3, or the third chroma pixel and the fourth chroma pixel may be the pixels 1 and 2.

When n1=2 (representing that the first chroma component of the picture block includes two types of chrominance), the third chroma pixel is a pixel at a preset location in the four pixels, and the fourth chroma pixel is a pixel, in the four pixels (preferably, the remaining three pixels other than the third chroma pixel in the four pixels), that has a largest value in absolute values of chroma value differences from the third chroma pixel. For example, the third chroma pixel is the upper left pixel (the pixel 0) of the picture block. Differences between the pixel 0 and the pixels 1 to 3 are separately calculated, to obtain three differences in total. A difference with a largest absolute value (for example, a difference of the pixel 3) in the three differences is determined, and then the pixel 3 is the fourth chroma pixel.

Manner 2: The third chroma pixel and the fourth chroma pixel are two pixels with a largest chroma value difference in the four pixels.

Absolute values of chroma value differences between every two of the four pixels are calculated, to obtain absolute values of six chroma value differences. The absolute values of the six chroma value differences are compared, to determine a largest value in the absolute values. Therefore, two pixels with the largest value obtained through calculation are the third chroma pixel and the fourth chroma pixel. It is represented by a formula: $\Delta A_{ij} = |A_i - A_j|$, where $i, j \in \{0, 1, 2, 3\}$. For example, $\Delta A_{12}$ is the largest, and therefore the third chroma pixel and the fourth chroma pixel are the pixels 1 and 2.

Manner 3: The third chroma pixel and the fourth chroma pixel are two pixels at diagonal locations in the four pixels.

For example, the third chroma pixel and the fourth chroma pixel may be the pixels 0 and 3, or the third chroma pixel and the fourth chroma pixel may be the pixels 1 and 2.

In this embodiment of this application, after the third chroma pixel and the fourth chroma pixel are determined, a chroma value of the first chroma pixel and a chroma value of the second chroma pixel in the first chroma component of the first picture block may be further obtained based on a chroma value of the third chroma pixel and a chroma value of the fourth chroma pixel. This can implement downsampling of the first chroma component of the picture block, thereby obtaining the first chroma component of the first picture block.

Optionally, the chroma value of the third chroma pixel and the chroma value of the fourth chroma pixel are first obtained; a first weight value corresponding to the third chroma pixel and a second weight value corresponding to the fourth chroma pixel are obtained; weighting is performed on the chroma value of the third chroma pixel and the chroma value of the fourth chroma pixel based on the first weight value and the second weight value, to obtain the chroma value of the first chroma pixel; and the chroma value of the fourth chroma pixel is determined as the chroma value of the second chroma pixel.

It can be learned that, in this embodiment of this application, the chroma value of the first chroma pixel is obtained through weighting (which may also be referred to as filtering) based on the chroma value of the third chroma pixel and the chroma value of the fourth chroma pixel. The chroma value of the fourth chroma pixel may be directly used as the chroma value of the second chroma pixel, so that a decoder side can restore the chroma value of the third chroma pixel, and better upsampling interpolation effect is obtained.

It should be noted that the chroma value of the third chroma pixel may alternatively be used as the chroma value of the second chroma pixel. In addition, in this embodiment of this application, the foregoing method may also be used to perform weighting based on the chroma value of the third chroma pixel and the chroma value of the fourth chroma pixel to obtain the chroma value of the second chroma pixel, and then determine the chroma value of the third chroma pixel or the chroma value of the fourth chroma pixel as the chroma value of the first chroma pixel. This is not specifically limited.

In a possible implementation, to obtain the first weight value corresponding to the third chroma pixel and the second weight value corresponding to the fourth chroma pixel, luma values of four pixels in the luma component of the picture block may be first obtained; and then the first weight value and the second weight value are obtained based on distribution of the luma values of the four pixels in the luma component of the picture block.

It can be learned that, in this embodiment of this application, the first weight value and the second weight value may be determined by using the luma component of the picture block as a reference basis. A general idea may include: A luma value of a first luma pixel and a luma value of a second luma pixel are measured with reference to the distribution of the luma values of the four pixels in the luma component of the picture block, a weight value corresponding to a luma value that is closer to a luma value of a third luma pixel and a luma value of a fourth luma pixel and that is in the luma value of the first luma pixel and the luma value of the second luma pixel is larger, and a weight value corresponding to a luma value that is farther from the luma value of the third luma pixel and the luma value of the fourth luma pixel and that is in the luma value of the first luma pixel and the luma value of the second luma pixel is smaller. The first luma pixel and the second luma pixel are pixels that are in the luma component of the picture block and that are respectively located at same locations as the third chroma pixel and the fourth chroma pixel, for example, the pixels 0 and 3. The luma value of the third luma pixel and the fourth luma pixel are the other two pixels in the luma component of the picture block, for example, the pixels 1 and 2. In this way, a chroma pixel is obtained in a weighted averaging manner, so that it can be ensured that a chroma plane including the chroma pixel seems smooth in subjective effect.

Optionally, that the first weight value w1 and the second weight value w2 are obtained based on the distribution of the luma values of the four pixels in the luma component of the picture block may include the following several cases, where w1+w2=1:

(1) When a difference between the luma value of the first luma pixel and the luma value of the second luma pixel is less than a second threshold, w1=w2=0.5. The second threshold may be a luma similarity threshold. If the difference is less than the second threshold, it may be considered that luminance of the first luma pixel is similar to that of the second luma pixel. Therefore, it may be determined that a value of w1 is approximate to that of w2.

(2) When the difference between the luma value of the first luma pixel and the luma value of the second luma pixel is greater than or equal to the second threshold, the luma value of the third luma pixel and the luma value of the fourth luma pixel are obtained; whether a first condition is met is determined, where the first condition is that a difference between the luma value of the first luma pixel and each of the luma value of the third luma pixel and the luma value of the fourth chroma pixel is less than the second threshold; and when the first condition is met, w1=0.75, and w2=0.25.

If the difference is greater than or equal to the second threshold, it may be considered that luminance of the first luma pixel is different from that of the second luma pixel. In this case, refer to the distribution of the luma values of the four pixels in the luma component of the picture block. The first condition is used to determine whether the luma value of the first luma pixel is closer to the luma value of the third luma pixel and the luma value of the fourth luma pixel. Therefore, when the first condition is met, a larger weight value is assigned to the third chroma pixel corresponding to the first luma pixel, and a smaller weight value is assigned to the fourth chroma pixel corresponding to the second luma pixel.

(3) When the first condition is not met, whether a second condition is met is determined, where the second condition is that a luma difference between the second chroma pixel and each of the third chroma pixel and the fourth chroma pixel is less than the second threshold; and when the second condition is met, w1=0.25, and w2=0.75.

If the first condition is not met, it represents that the luma value of the first luma pixel is farther from the luma value of the third luma pixel and the luma value of the fourth luma pixel. In this case, whether the second condition is met is determined. The second condition is used to determine whether the luma value of the second luma pixel is closer to the luma value of the third luma pixel and the luma value of the fourth luma pixel. Therefore, when the second condition is met, a larger weight value is assigned to the fourth chroma pixel corresponding to the second luma pixel, and a smaller weight value is assigned to the third chroma pixel corresponding to the first luma pixel.

(4) When the second condition is not met, the two weight values are both 0.5.

If the second condition is not met, it represents that the luma value of the second luma pixel is also farther from the luma value of the third luma pixel and the luma value of the fourth luma pixel. In this case, the third chroma pixel corresponding to the first luma pixel and the fourth chroma pixel corresponding to the second luma pixel may make similar contributions to the chroma value of the first chroma pixel. Therefore, it may be determined that the value of w1 is approximate to that of w2, for example, w1=w2=0.5.

It should be noted that, in the foregoing process of determining the values of w1 and w2, the assigned numbers are merely used as examples, and are not intended to limit the values of w1 and w2. "Approximate" is not limited to "equal", for example, 0.51 and 0.49 may also be considered as being approximate. The larger weight value and the smaller weight value are not limited to 0.75 and 0.25, and 0.8 and 0.2 may also fall within the described scope.

In this embodiment of this application, weighting may be performed according to $G_1=w1*A_3+w2*A_4$, where $G_1$ represents the chroma value of the first chroma pixel, $A_3$ represents the chroma value of the third chroma pixel, and $A_4$ represents the chroma value of the fourth chroma pixel.

Step 903: Split a chroma component of the first picture block to obtain a second picture block and a UV11 picture block, where a sampling format of the second picture block is YUV4:2:0.

The sampling format of the second picture block is YUV4:2:0 (refer to FIG. 6c). To be specific, the second picture block includes a luma component, a first chroma component, and a second chroma component, and sampling rates of the three components are different. The luma component includes four pixels, and the first chroma component and the second chroma component each include one pixel.

Therefore, the second picture block and the UV11 picture block may be obtained by splitting the first picture block. The UV11 picture block includes one pixel for the first chroma component and one pixel for the second chroma component. For example, the first chroma component and the second chroma component of the first picture block each include two pixels. A chroma value of one of the pixels may be obtained through the foregoing filtering, and the one pixel may be split into a chroma component of the second picture block, the pixel that directly uses a chroma value of the original pixel is split into a pixel in the UV11 picture block. In this way, the second picture block or a reconstructed block obtained based on the second picture block can achieve subjective effect and encoding compression efficiency that are similar to those of a common YUV4:2:0 picture block.

It should be noted that, in this embodiment of this application, the pixel on which filtering is performed may alternatively be split into a pixel in the UV11 picture block, and the pixel that directly uses the chroma value of the original pixel is split into a chroma component of the second picture block. This is not specifically limited.

Step 904: Encode the second picture block to obtain a base layer bitstream.

In this embodiment of this application, the second picture block may be encoded via a standard video encoder, or the second picture block may be encoded via another existing or future encoder. This is not specifically limited.

Step 905: Encode the UV11 picture block to obtain an enhancement layer bitstream.

Optionally, during encoding of the UV11 picture block, encoding guidance and reference may be performed with reference to encoding information of the base layer and the reconstructed block obtained based on the second picture block. For example, a chroma component of the reconstructed block may be used as a prediction reference, and a block split mode of a chroma component of the base layer may be used to guide block splitting.

Optionally, the UV11 picture block may be encoded without reference to the encoding information of the base layer and the reconstructed block obtained based on the second picture block.

In this embodiment of this application, an existing standard encoder or a non-standard encoder may be used for an encoding manner of the UV11 picture block. This is not limited herein.

In this embodiment of this application, an encoder side obtains, based on the picture block in the YUV4:4:4 format, the picture block in the YUV4:2:0 format and the UV11 picture block that includes only a chroma component, and performs base layer encoding and enhancement layer encoding respectively on the picture block in the YUV4:2:0 format and the UV11 picture block. Layered encoding and decoding can ensure a basic display requirement of the picture block. To be specific, after the base layer reconstructed block is obtained at a decoding layer, subjective effect similar to that of the common YUV4:2:0 picture block can be achieved, and display effect of a picture can be ensured even if the decoder side does not receive the enhancement layer bitstream, to ensure normal display of the picture. In addition, a combination of the base layer and the enhancement layer can adapt to network fluctuation, thereby improving transmission efficiency. In a process of obtaining the picture block in the YUV4:2:0 format, the chroma component of the picture block in the YUV4:4:4 format may be first downsampled to obtain the picture block in the YUV4:2:2 format. Two pixels in a chroma component of the picture block in the YUV4:2:2 format are obtained based on two of four pixels in a same-type chroma component of the picture block in the YUV4:4:4 format. In this way, during bitstream encoding, only information about the two pixels in the chroma component may be encoded without encoding all the four pixels in the chroma component, to reduce bitstream overheads.

In a possible implementation, in this embodiment of this application, phase sampling information may be obtained, where the phase sampling information includes information indicating a location of the third chroma pixel and a location of the fourth chroma pixel; and then the phase sampling information is encoded.

In the foregoing embodiment, after the third chroma pixel and the fourth chroma pixel are determined, the decoder side may be notified of the locations of the two chroma pixels based on the phase sampling information. The phase sampling information may include an identifier of a phase sampling mode, for example, a mode 0 (representing that the locations of the third chroma pixel and the fourth chroma pixel are in the pixels 0 and 3), a mode 1 (representing that the locations of the third chroma pixel and the fourth chroma pixel are in the pixels 0 and 1), and a mode 2 (representing that the locations of the third chroma pixel and the fourth chroma pixel are in the pixels 1 and 2). The phase sampling information may alternatively include pixel codes that correspond to the third chroma pixel and the fourth chroma pixel, for example, the pixels 0 and 3, or the pixels 1 and 2. An implementation of the phase sampling information is not specifically limited in embodiments of this application.

In this embodiment of this application, the phase sampling information may be encoded, written into a bitstream, and transmitted to the decoder side. Alternatively, the phase sampling information may be written into a file and transmitted to the decoder side. In addition, the phase sampling information may be transmitted to the decoder side in another manner. This is not specifically limited.

In a possible implementation, in this embodiment of this application, weight information may be obtained, where the weight information includes information indicating the first weight value and the second weight value; and then the weight information is encoded.

The weight information may include the first weight value and the second weight value, for example, w1=0.75, and w2=0.25. The weight information may alternatively include preset identifiers of several modes of the first weight value and the second weight value, for example, a mode 0 (representing w1=0.75 and w2=0.25). An implementation of the weight information is not specifically limited in embodiments of this application.

In this embodiment of this application, the weight information may be encoded, written into a bitstream, and transmitted to the decoder side. Alternatively, the weight information may be written into a file and transmitted to the decoder side. In addition, the weight information may be transmitted to the decoder side in another manner. This is not specifically limited.

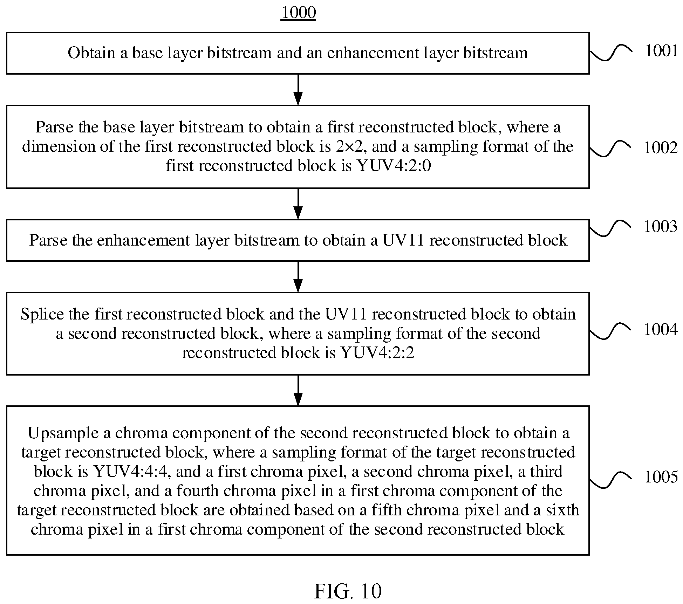

FIG. 10 is an example flowchart of a picture decoding method according to this application. A process 1000 may be performed by a video decoder 30 (or a decoder). The process 1000 is described as a series of steps or operations. It should be understood that the process 000 may be performed in various sequences and/or simultaneously, and is not limited to an execution sequence shown in FIG. 10. The process 1000 includes the following steps.

Step 1001: Obtain a base layer bitstream and an enhancement layer bitstream.

Step 1002: Parse the base layer bitstream to obtain a first reconstructed block, where a dimension of the first reconstructed block is $2\times2$, and a sampling format of the first reconstructed block is YUV4:2:0.

The sampling format of the first reconstructed block is YUV4:2:0 (refer to FIG. 6c). To be specific, the first reconstructed block includes a luma component, a first chroma component, and a second chroma component, and sampling rates of the three components are different. The luma component includes four pixels, and the first chroma component and the second chroma component each include one pixel.

In this embodiment of this application, the base layer bitstream may be decoded by using a standard video decoding technology, or the base layer bitstream may be decoded by using another existing or future decoding technology. This is not specifically limited.

A decoder side may perform decoding by using a decoder corresponding to an encoder used by an encoder side. Therefore, the sampling format of the first reconstructed block obtained by decoding the base layer bitstream is YUV4:2:0. As shown on the encoder side, chroma values of the pixels of the first chroma component and the second chroma component of the first reconstructed block may be obtained through filtering. In this way, the first reconstructed block may achieve subjective effect and encoding compression efficiency that are similar to those of a common YUV4:2:0 picture block, and display effect of a picture can be ensured even if the decoder side does not receive the enhancement layer bitstream.

Step 1003: Parse the enhancement layer bitstream to obtain a UV11 reconstructed block.

Optionally, decoding guidance and reference may be performed with reference to decoding information of a base layer and the first reconstructed block during decoding of the enhancement layer bitstream. For example, a chroma component of the first reconstructed block may be used as a prediction reference, and a block split mode of the chroma component of the first reconstructed block may be used to guide block splitting.

Optionally, the enhancement layer bitstream may be decoded without reference to decoding information of the first reconstructed block and the first reconstructed block.

In this embodiment of this application, an existing standard decoder or a non-standard decoder may be used for a decoding manner of the enhancement layer bitstream. This is not limited herein.

The decoder side may perform decoding by using the decoder corresponding to the encoder used by the encoder side. Therefore, the UV11 reconstructed block is obtained by decoding the enhancement layer bitstream.

Step 1004: Combine the first reconstructed block and the UV11 reconstructed block to obtain a second reconstructed block, where a sampling format of the second reconstructed block is YUV4:2:2.

The sampling format of the second reconstructed block is YUV4:2:2 (refer to FIG. 6b). To be specific, the second reconstructed block includes a luma component, a first chroma component, and a second chroma component, and sampling rates of the three components are different. The luma component includes four pixels, and the first chroma component and the second chroma component each include two pixels.

A combination of the first reconstructed block and the UV11 reconstructed block may increase a quantity of pixels included in each of the first chroma component and the second chroma component of the first reconstructed block from 1 to 2, to obtain the second reconstructed block.

Step 1005: Upsample a chroma component of the second reconstructed block to obtain a target reconstructed block, where a sampling format of the target reconstructed block is YUV4:4:4, and a first chroma pixel, a second chroma pixel, a third chroma pixel, and a fourth chroma pixel in a first chroma component of the target reconstructed block are obtained based on a fifth chroma pixel and a sixth chroma pixel in a first chroma component of the second reconstructed block.

In addition, a seventh chroma pixel, an eighth chroma pixel, a ninth chroma pixel, and a tenth chroma pixel in a second chroma component of the target reconstructed block are obtained based on an eleventh chroma pixel and a twelfth chroma pixel in the second chroma component of the second reconstructed block.

The first chroma component is a component U, and the second chroma component is a component V; or the first chroma component is a component V, and the second chroma component is a component U.

The following uses the first chroma component as an example to describe a processing process of the chroma component of the second reconstructed block. It may be understood that, for a processing process of the second chroma component, refer to this.

In this embodiment of this application, the first chroma pixel, the second chroma pixel, the third chroma pixel, and the fourth chroma pixel in the first chroma component of the target reconstructed block are obtained based on the fifth chroma pixel and the sixth chroma pixel in the first chroma component of the second reconstructed block.

In this embodiment of this application, decoding may be performed to obtain phase sampling information, where the phase sampling information includes information indicating a location of the first chroma pixel corresponding to the fifth chroma pixel and a location of the second chroma pixel corresponding to the sixth chroma pixel; and the first chroma pixel and the second chroma pixel are determined based on the phase sampling information.

The first chroma component of the second reconstructed block includes the fifth chroma pixel and the sixth chroma pixel, and the two pixels may correspond to two of the four pixels included in the first chroma component of the target reconstructed block. Therefore, locations of the two pixels (numbers of the pixels) in a 2×2 picture block need to be first determined.

The phase sampling information may include an identifier of a phase sampling mode, for example, a mode 0 (representing that the locations of the first chroma pixel and the second chroma pixel are in pixels 0 and 3), a mode 1 (representing that the locations of the first chroma pixel and the second chroma pixel are in pixels 0 and 1), and a mode 2 (representing that the locations of the first chroma pixel and the second chroma pixel are in pixels 1 and 2). The phase sampling information may alternatively include pixel codes that correspond to the first chroma pixel and the second chroma pixel, for example, the pixels 0 and 3, or the pixels 1 and 2. An implementation of the phase sampling information is not specifically limited in embodiments of this application.

In this embodiment of this application, after the first chroma pixel and the second chroma pixel are determined, a chroma value of the first chroma pixel and a chroma value of the second chroma pixel in the first chroma component of the target reconstructed block may be further obtained based on a chroma value of the fifth chroma pixel and a chroma value of the sixth chroma pixel. In this way, the two pixels of the first chroma component of the second reconstructed block may be first obtained.

The chroma value of the fifth chroma pixel and the chroma value of the sixth chroma pixel are first obtained; a first weight value of the fifth chroma pixel and a second weight value of the sixth chroma pixel are obtained; deweighting is performed on the chroma value of the fifth chroma pixel and the chroma value of the sixth chroma pixel based on the first weight value and the second weight value, to obtain the chroma value of the first chroma pixel; and the chroma value of the sixth chroma pixel is determined as the chroma value of the second chroma pixel.

It can be learned that, in this embodiment of this application, the chroma value of the first chroma pixel is obtained through deweighting (which may also be referred to as de-filtering) based on the chroma value of the fifth chroma pixel and the chroma value of the sixth chroma pixel. The chroma value of the sixth chroma pixel may be directly used as the chroma value of the second chroma pixel, so that the decoder side can restore the chroma value of the second chroma pixel, and better upsampling interpolation effect is obtained.

In this embodiment of this application, deweighting may be performed according to $A_1 = (G_5 - w2 * A_6)/w1$, where $A_1$ represents the chroma value of the first chroma pixel, $G_5$ represents the chroma value of the fifth chroma pixel, and $A_6$ represents the chroma value of the sixth chroma pixel.

It should be noted that the chroma value of the fifth chroma pixel may alternatively be used as the chroma value of the second chroma pixel. In addition, in this embodiment of this application, the foregoing method may also be used to perform deweighting based on the chroma value of the fifth chroma pixel and the chroma value of the sixth chroma pixel to obtain the chroma value of the second chroma pixel, and then determine the chroma value of the fifth chroma pixel or the chroma value of the sixth chroma pixel as the chroma value of the first chroma pixel. This is not specifically limited.

In this embodiment of this application, the decoder side may obtain the first weight value of the fifth chroma pixel and the second weight value of the sixth chroma pixel by using the following two methods:

Method 1: Decoding is performed to obtain weight information, where the weight information includes information indicating the first weight value and the second weight value; and information about the first weight value and the second weight value is obtained based on the weight information.

The weight information may include the first weight value and the second weight value, for example, w1=0.75, and w2=0.25. The weight information may alternatively include preset identifiers of several modes of the first weight value and the second weight value, for example, a mode 0 (representing w1=0.75 and w2=0.25). An implementation of the weight information is not specifically limited in embodiments of this application.

Method 2: Luma values of the four pixels in the luma component of the second reconstructed block are first obtained; and then the first weight value and the second weight value are obtained based on distribution of the luma values of the four pixels in the luma component of the second reconstructed block.

In this embodiment of this application, the first weight value and the second weight value may be obtained according to a same technical principle as that of the encoder side. For an implementation, refer to the related descriptions of Step 902. Details are not described herein again.

Because the first chroma component of the target reconstructed block includes the four pixels, after the first chroma pixel and the second chroma pixel are obtained, upsampling further needs to be performed to obtain the other two chroma pixels (the third chroma pixel and the fourth chroma pixel).

In a possible implementation, four neighboring luma pixels of a target luma pixel in a luma component of the target reconstructed block are first obtained, where the target luma pixel corresponds to a target chroma pixel (the third chroma pixel or the fourth chroma pixel), the four neighboring luma pixels correspond to four neighboring chroma pixels in a chroma component of the target reconstructed block, the four neighboring chroma pixels are respectively located above, below, on the left, or on the right of the target chroma pixel, and chroma values of the four neighboring chroma pixels have been obtained; a luma value of the target luma pixel and luma values of the four neighboring luma pixels are obtained; and a chroma value of the target chroma pixel is obtained based on the luma value of the target luma pixel and the luma values of the four neighboring luma pixels.

Four locations included in a 2×2 picture block are used as a correspondence basis. In the luma component, the first chroma component, and the second chroma component, upper left pixels correspond to each other, upper right pixels correspond to each other, lower left pixels correspond to each other, and lower right pixels correspond to each other. For example, if the target chroma pixel is an upper left pixel of the first chroma component, the target luma pixel is an upper left pixel of the luma component.

The four neighboring chroma pixels meet two conditions. One condition is that the four neighboring chroma pixels are respectively located above, below, on the left, or on the right of the target chroma pixel, and the other condition is that the chroma values of the four neighboring chroma pixels have been obtained. For descriptions that the chroma values of the four neighboring chroma pixels have been obtained, refer to the following embodiments.

In this embodiment of this application, the chroma value of the target chroma pixel may be obtained by using the following two methods:

Method 1: Differences between the luma value of the target luma pixel and the luma values of the four neighboring luma pixels are separately calculated; four weight values are obtained based on the differences between the luma value of the target luma pixel and the luma values of the four neighboring luma pixels; and weighting is performed on the chroma values of the four neighboring chroma pixels based on the four weight values to obtain the chroma value of the target chroma pixel.

For example, the weight value may be expressed by using the following formula:

$$w_{cj} = \begin{cases} \dfrac{a}{\Delta M_{cj}} + b, \Delta M_{cj} < \gamma \\ 0 \end{cases}$$

Herein, $\Delta M_{cj} = |M_c - M_j|$, where $M_c$ represents the luma value of the target luma pixel, $j\epsilon\{t, d, l, r\}$ represents one of the four neighboring luma pixels (t represents an upper neighboring pixel, d represents a lower neighboring pixel, l represents a left neighboring pixel, and r represents a right neighboring pixel), and $M_j$ represents the luma value of the foregoing neighboring luma pixel; $\gamma$ represents a preset luma similarity threshold; and $w_{cj}$ represents a weight value corresponding to a chroma value of a neighboring chroma pixel corresponding to the foregoing neighboring luma pixel.

It can be learned that $w_{cj}$ is negatively correlated with $\Delta M_{cj}$, that is, a smaller value of $\Delta M_{cj}$ indicates a larger value of $w_{cj}$. To be specific, a smaller absolute value of a difference between the luma value of the target luma pixel and a luma value of a neighboring luma pixel (representing that luminance of the target luma pixel and luminance of the neighboring luma pixel are closer) indicates a larger weight value corresponding to a chroma value of a neighboring chroma pixel corresponding to the neighboring luma pixel. In addition, a value of $\gamma$ is positively correlated with an encoding parameter (QP) obtained by the decoder side, that is, a larger QP indicates a larger value of $\gamma$.

Method 2: When there is a luma boundary around the target luma pixel or there is a chroma boundary around the target chroma pixel, a first quantity of neighboring luma pixels whose luminance is similar to that of the target luma pixel in the four neighboring luma pixels is obtained; and the chroma value of the target chroma pixel is obtained based on the first quantity.

In this embodiment of this application, differences between the luma value of the target luma pixel and the luma values of the four neighboring luma pixels may be separately calculated. If there is an absolute value of a difference that is less than a preset threshold and that is in absolute values of the four differences, it may be considered that luminance of the corresponding neighboring luma pixel is similar to that of the target luma pixel.

(1) When the first quantity is 1, a chroma value of a neighboring luma pixel whose luminance is similar to that of the target luma pixel in the four neighboring luma pixels is used as the chroma value of the target chroma pixel.

(2) When the first quantity is 2, whether chrominance of two neighboring chroma pixels corresponding to two neighboring luma pixels whose luminance is similar to that of the target luma pixel in the four neighboring luma pixels is similar; and if the chrominance of the two neighboring chroma pixels is similar, an average value of chroma values of the two neighboring chroma pixels is used as the chroma value of the target chroma pixel; or if the chrominance of the two neighboring chroma pixels is not similar, an average value of the chroma values of the four neighboring chroma pixels is used as the chroma value of the target chroma pixel.

(3) When the first quantity is 3, a second quantity of neighboring chroma pixels with similar chrominance in three neighboring chroma pixels corresponding to three neighboring luma pixels whose luminance is similar to that of the target luma pixel in the four neighboring luma pixels is obtained; and if the second quantity is 3, an average value of chroma values of the three neighboring chroma pixels is used as the chroma value of the target chroma pixel; or if the second quantity is 2, an average value of chroma values of two neighboring chroma pixels with similar chrominance in the three neighboring chroma pixels is used as the chroma value of the target chroma pixel; or if the second quantity is less than 2, an average value of chroma values of any two neighboring chroma pixels in the three neighboring chroma pixels is used as the chroma value of the target chroma pixel.

(4) When the first quantity is 4, the chroma values of the four neighboring luma pixels are clustered based on similarity to obtain n2 clusters, where n2 is a positive integer; an average difference between luma values of neighboring luma pixels in each of the n2 clusters and the luma value of the target luma pixel is separately obtained; and an average value of chroma values of neighboring chroma pixels corresponding to neighboring luma pixels in a cluster corresponding to a smallest average difference in the average differences is used as the chroma value of the target chroma pixel.

(5) When there is no luma boundary around the target luma pixel and there is no chroma boundary around the target chroma pixel, an average value of the chroma values of the four neighboring chroma pixels is used as the chroma value of the target chroma pixel.

In a possible implementation, when the phase sampling information is obtained, a difference between the chroma value of the target chroma pixel and the chroma value of the first chroma pixel is obtained, where the target chroma pixel is the third chroma pixel or the fourth chroma pixel; and when the difference is greater than a third threshold, the chroma value of the first chroma pixel is used as the chroma value of the target chroma pixel.

As described in the embodiment shown in FIG. 9, when determining two pixels (the third chroma pixel and the fourth chroma pixel on the encoder side) in the to-be-processed picture block, the encoder side may select the two pixels corresponding to the largest chroma value difference, or after determining one pixel, select a pixel with the largest chroma value difference from the one pixel. Therefore, it may be considered that the two pixels are two pixels whose chrominance is not similar in the four pixels included in the first chroma component of the to-be-processed picture block. Correspondingly, it may be considered that chrominance of the other two pixels is similar to that of one of the pixels. However, locations of the two chroma pixels determined in the foregoing manner are adaptive to the to-be-processed picture block, and the encoder side needs to send the phase sampling information to the decoder side.

Therefore, if the phase sampling information is obtained, the decoder side may check the chroma value of the target chroma pixel (the third chroma pixel or the fourth chroma pixel on the decoder side) obtained by using the foregoing method. For a principle thereof, refer to the descriptions in the previous paragraph. The target chroma pixel corresponds to the other two pixels above. In other words, the chroma value of the target chroma pixel is similar to the obtained chroma value of the first chroma pixel of the target reconstructed block. In this case, when the difference between the chroma value of the target chroma pixel and the chroma value of the first chroma pixel is greater than the third threshold, it represents that chrominance of the target chroma pixel is not similar to that of the first chroma pixel. This is contradictory. It further represents that the chroma value of the target chroma pixel obtained by using the foregoing method is inaccurate. In this case, the chroma value of the first chroma pixel is used as the chroma value of the target chroma pixel.

It should be noted that the chroma value of the target chroma pixel may alternatively be compared with the obtained chroma value of the second chroma pixel of the target reconstructed block. A principle is similar, and details are not described again.

In this embodiment of this application, the decoder side separately decodes the base layer bitstream and the enhancement layer bitstream to obtain the reconstructed block in the YUV4:2:0 format and the UV11 reconstructed block including only a chroma component, and obtains the picture block in the YUV4:4:4 format based on the two reconstructed blocks. Layered encoding and decoding can ensure a basic display requirement of the picture block. To be specific, after the base layer reconstructed block is obtained at a decoding layer, subjective effect similar to that of a common YUV4:2:0 picture block can be achieved, and display effect of a picture can be ensured even if the decoder side does not receive the enhancement layer bitstream, to ensure normal display of the picture. In addition, a combination of the base layer and the enhancement layer can adapt to network fluctuation, thereby improving transmission efficiency. In a process of obtaining the picture block in the YUV4:4:4 format, the picture block in the YUV4:2:2 format may be first obtained, and then the chroma component of the reconstructed block in the YUV4:2:2 format is upsampled to obtain the reconstructed block in the YUV4:4:4 format. Four pixels in a chroma component of the reconstructed block in the YUV4:4:4 format are obtained based on two pixels in a same-type chroma component of the reconstructed block in the YUV4:2:2 format. In this way, during bitstream decoding, only information about the two pixels may be obtained without obtaining, through decoding, all four pixels of the chroma component, to reduce a bitstream and improve decoding efficiency.

The following describes the solutions in the foregoing method embodiments by using several specific embodiments. For example, a to-be-processed picture is a YUV4:4:4 picture. Four pixels: an upper left pixel, an upper right pixel, a lower left pixel, and a lower right pixel in any $2 \times 2$ picture block included in the picture are sequentially numbered 0, 1, 2, and 3, and chroma values of the pixels 0, 1, 2, and 3 are A0, A1, A2, and A3, respectively. It should be understood that the following uses an example in which a YUV4:4:4 picture block with a dimension of $2 \times 2$ is used as a to-be-processed picture block for description. However, this does not constitute a limitation on the solutions of this application.

In addition, in the following embodiments, a YUV4:4:4 picture block is also referred to as a YUV4:4:4 source picture, and a YUV4:4:4 reconstructed block is also referred to as a YUV4:4:4 reconstructed picture; a YUV4:2:2 picture block is also referred to as a YUV4:2:2 picture, and a YUV4:2:2 reconstructed block is also referred to as a YUV4:2:2 reconstructed picture; a YUV4:2:0 picture block is also referred to as a YUV4:2:0 picture, and a YUV4:2:0 reconstructed block is also referred to as a YUV4:2:0 reconstructed picture; a UVnn picture (or picture block) is also referred to as a UVnn chroma signal, and a UVnn reconstructed picture (or reconstructed block) is also referred to as a UVnn reconstructed signal, where n is 1, 2, or 3; a phase sampling information stream is also referred to as a sampling information stream; and a pixel is also referred to as a sample. It should be understood that the foregoing names are not limited, and are used merely for a person skilled in the art to understand the solutions.

In addition, in processes in the following embodiments, a processing process of a first chroma component of the to-be-processed picture block is used as an example for description. For a processing process of a second chroma component, refer to this.

Embodiment 1

In this embodiment, adaptive chroma downsampling is performed based on a YUV4:4:4 picture block to obtain a YUV4:2:2 picture block, then the YUV4:2:2 picture block is split into a YUV4:2:0 picture block and a UV11 picture block, and layered encoding and corresponding decoding and reconstruction methods are performed. The YUV4:2:0 picture block is at a base layer, the UV11 picture block is at an enhancement layer, and phase sampling information is also included.

Encoder side

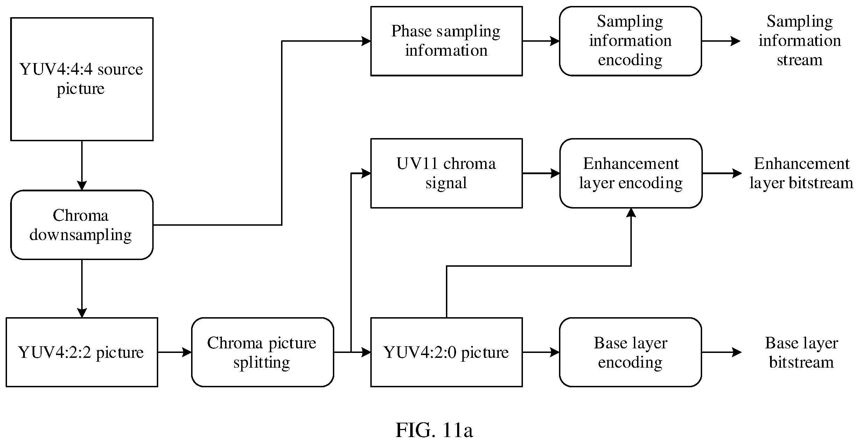

FIG. 11a is a diagram of an encoding framework. As shown in FIG. 11a, steps of the encoder side are as follows: Step 1: Obtain the YUV4:4:4 picture block, and separately perform adaptive chroma downsampling on a first chroma component and a second chroma component of the YUV4:4:4 picture block in a chroma pixel sampling mode, to obtain the YUV4:2:2 picture block. In addition, the phase sampling information is generated.

In this step, adaptive downsampling is performed on four pixels in the first chroma component of the YUV4:4:4 picture block, two pixels in a first chroma component of the YUV4:2:2 picture block are obtained based on two of the pixels, and the phase sampling information obtained due to adaptive pixel sampling is obtained.

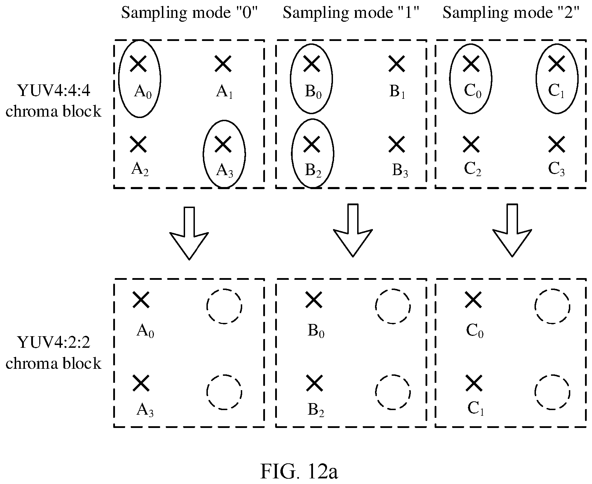

For example, FIG. 12a is a diagram of adaptive pixel sampling for chrominance. As shown in FIG. 12a, the adaptive pixel sampling may include three sampling modes (0 to 2), where two pixels sampled in the sampling mode 0 are an upper left pixel (a pixel $A_0$) and a lower right pixel (a pixel $A_3$) in the first chroma component (YUV4:4:4 chroma block) of the YUV4:4:4 picture block, and are respectively an upper pixel (a pixel $A_0$) and a lower pixel (a pixel $A_3$) in the first chroma component (YUV4:2:2 chroma block) of the YUV4:2:2 picture block; two pixels sampled in the sampling mode 1 are an upper left pixel (a pixel $B_0$) and a lower left pixel (a pixel $B_2$) in the first chroma component (YUV4:4:4 chroma block) of the YUV4:4:4 picture block, and are respectively an upper pixel (a pixel $B_0$) and a lower pixel (a pixel $B_2$) in the first chroma component (YUV4:2:2 chroma block) of the YUV4:2:2 picture block; and two pixels sampled in the sampling mode 2 are an upper left pixel (a pixel $C_0$) and an upper right pixel (a pixel $C_1$) in the first chroma component (YUV4:4:4 chroma block) of the YUV4:4:4 picture block, and are respectively an upper pixel (a pixel $C_0$) and a lower pixel (a pixel $C_1$) in the first chroma component (YUV4:2:2 chroma block) of the YUV4:2:2 picture block.

Specific steps of the process are as follows:

Step 1.1: For a to-be-processed picture block, determine a chroma similarity in the block by collecting statistics on a quantity of chroma difference groups. It is assumed that chroma values of pixels 0, 1, 2, and 3 in the picture block are $A_0$, $A_1$, $A_2$, and $A_3$ respectively. Absolute values $\Delta A_{ij}=|A_i-A_j|$ of differences between every two of the chroma values are calculated, where i, j $\in$ {0, 1, 2, 3}; and the absolute value is compared with a threshold $\delta$. If the absolute value is greater than the threshold $\delta$, that is, $\Delta A_{ij}>\delta$, the two corresponding pixels i and j are marked as having a difference, and the quantity N of difference groups is increased by 1. After all calculations are completed, a value of N may be counted, where $0 \le N \le 6$.

Step 1.2: Obtain a phase sampling mode, and two pixels in the picture block as samples based on the quantity N of difference groups and the absolute value of the chroma value difference between the two pixels.

If N>4, it represents that there are three or four different types of chrominance in the picture block, and the pixel 0 and the pixel 3 are used as the samples.

If N=0, it represents that there is only one type of chrominance in the picture block, and the pixel 0 and the pixel 3 are also used as the samples.

If $0<N \le 4$, it represents that there are two different types of chrominance in the picture block, and further determining is performed as follows: Which absolute value in three absolute values $\Delta A_{03}$, $\Delta A_{02}$, and $\Delta A_{01}$ is greater than the threshold $\delta$ is determined according to a sequence of numbers of the pixels. If $\Delta A_{0k}>\delta$, where k $\in$ {3, 2, 1}, the pixel 0 and a pixel k are used as the samples.

Specifically, it is first determined that if $\Delta A_{03}>\delta$, the pixel 0 and the pixel 3 are used as the samples. Otherwise, it is determined that if $\Delta A_{02}>\delta$, the pixel 0 and the pixel 2 are used as the samples. Otherwise, it is determined that if $\Delta A_{01}>\delta$, the pixel 0 and the pixel 1 are used as the samples. If none of $\Delta A_{03}>\delta$, $\Delta A_{02}z>\delta$, and $\Delta A_{01}>\delta$ is met, the pixel 0 and the pixel 3 are used as the samples.

In Step 1.1 and Step 1.2, when two pixels of the picture block are selected for sampling, a determining basis is mainly selection based on a quantity of several different types of chrominance in the picture block. If there is only one type of chrominance in the picture block, the pixel 0 and the pixel 3 are selected. If there are three or four types of chrominance in the picture block, the pixel 0 and the pixel 3 are also selected. If there are two types of chrominance in the picture block, the pixel 0 and a pixel that has a chroma difference from the pixel 0 are selected. Based on the foregoing determining basis, a method for obtaining a type of chrominance in the picture block through calculation may not be limited to the methods in Step 1.1 and Step 1.2 in this embodiment.

Step 1.3: Obtain the phase sampling information.

It is pre-specified that different phase sampling modes may be marked as different values. In this embodiment, when the pixel 0 and the pixel 3 of the picture block are used as the samples, the sampling mode is marked as "0"; when the pixel 0 and the pixel 2 are used as the samples, the sampling mode is marked as "1"; or when the pixel 0 and the pixel 1 are used as the samples, the sampling mode is marked as "2", as shown in FIG. 12a. Phase sampling modes of different picture blocks may be different. Phase sampling modes of all $2\times2$ picture blocks in a YUV4:4:4 picture are marked, and marked information forms phase sampling information of an entire frame of picture.

In this step, a manner of marking the sampling mode may not be limited. For example, a sampling mode used when the pixel 0 and the pixel 3 are used as the samples may be marked as "3".

Step 1.4: Process chroma values of two pixels used as the samples, and assign the chroma values to two pixels of the YUV4:2:2 picture block, to obtain the first chroma component of the YUV4:2:2 picture block.

The first chroma component of the YUV4:2:2 picture block is obtained by using several methods.

In a first method, the two selected pixels may be directly used as the two pixels of the YUV4:2:2 picture block, to form the first chroma component of the YUV4:2:2 picture block. For example, if the pixel 0 and the pixel 3 in the picture block are selected as the samples, the chroma value $A_0$ of the pixel 0 and the chroma value $A_3$ of the pixel 3 may be directly placed on a pixel 0 and a pixel 1 of the first chroma component of the YUV4:2:2 picture block respectively.

In a second method, the two selected pixels may be filtered and then used as the two pixels of the YUV4:2:2 picture block respectively. For example, the pixel 0 and the pixel 3 in the picture block are selected as the samples, an average value of the chroma values of the pixel 0 and the pixel 3 is obtained, and is placed on a pixel 0 of the first chroma component of the YUV4:2:2 picture block. In addition, the chroma value $A_3$ of the pixel 3 is placed on a pixel 1 of the first chroma component of the YUV4:2:2 picture block. In this case, a chroma value of the pixel 0 of the first chroma component of the YUV4:2:2 picture block is an average chroma value $(A_0+A_3)/2$, and a chroma value of the pixel 1 is the value $A_3$ of the pixel 3.

In this embodiment, a third method is used to provide a method for performing weighted filtering based on a luma value of a luma component.

After the pixel values $A_0$ and $A_k$ of the two pixels are obtained in Step 1.2, where $k\in\{1, 2, 3\}$, a luma value corresponding to a chroma sampling location is obtained from a luma component of the YUV4:4:4 picture block, and the luma value may be represented as $Y_i$, where $i\in\{0, 1, 2, 3\}$. A manner of calculating the chroma value $G_0$ of the pixel 0 of the first chroma component of the YUV4:2:2 picture block is as follows:

$$G_0 = w_0 A_0 + w_1 A_k, \quad k \in \{1, 2, 3\} \quad (1)$$

Herein, $w_0$ and $w_1$ are weight values, and a manner of determining $w_0$ and $w_1$ is as follows:

(1) It is determined whether luma values $Y_0$ and $Y_k$ corresponding to $A_0$ and $A_k$ satisfy $|Y_0-Y_k|<\varepsilon$, where $\varepsilon$ is a similarity threshold that may be given in a manner of being specified in advance or may be obtained through calculation. An obtaining manner is not limited. A fixed value is given in this example.

(2) If the luma values $Y_0$ and $Y_k$ corresponding to $A_0$ and $A_k$ do not satisfy $|Y_0-Y_k|<\varepsilon$, it is determined whether all luma values $Y_j$ ($j\in\{1, 2, 3\}$ and $j\neq k$) of remaining pixels satisfy $|Y_0-Y_j|<\varepsilon$ or $|Y_k-Y_j|<\varepsilon$.

(3) If $|Y_0-Y_j|<\varepsilon$, $w_0=0.75$, and $w_1=0.25$; otherwise, if $|Y_k-Y_j|<\varepsilon$, $w_0=0.25$, and $w_1=0.75$.

(4) In cases other than the foregoing cases, $w_0=w_1=0.5$.

In this way, the chroma value $G_0$ obtained through weighting may be obtained. The chroma value is placed on the pixel 0 of the first chroma component of the YUV4:2:2 picture block, and $A_k$ is placed on the pixel 1 of the first chroma component of the YUV4:2:2 picture block. Advantages of doing this are as follows: The pixel 0 is used as a first chroma component of the YUV4:2:0 picture block obtained in the following step 2, so that subjective effect and encoding compression efficiency that are similar to those of a common YUV4:2:0 picture can be obtained; and a decoder side may obtain the original chroma value $A_0$ through solving based on $G_0$ and $A_k$, to obtain better upsampling interpolation effect.

It is noted that a component Y of the YUV4:4:4 picture is directly used as a luma component of the YUV4:2:2 picture block without any processing.

Step 2: Split the YUV4:2:2 picture block into the YUV4:2:0 picture block and the UV11 picture block.

In this step, a component Y in the YUV4:2:2 picture block and the pixel 0 in the first chroma component form the YUV4:2:0 picture block, and the pixel 1 in the first chroma component in the YUV4:2:2 picture block forms the UV11 picture block.

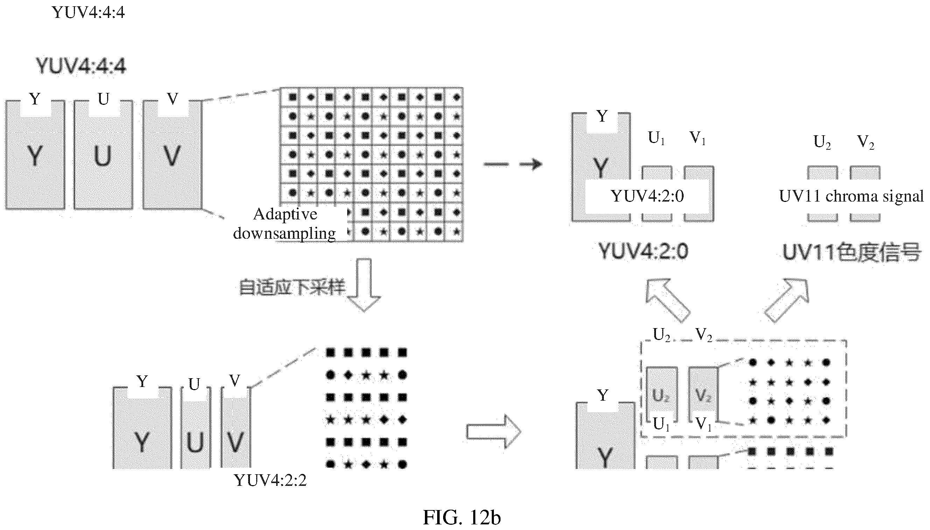

FIG. 12b is a diagram of an adaptive pixel sampling method for a first chroma component. As shown in FIG. 12b, Step 1 and Step 2 may alternatively be combined into one step, and downsampling and picture splitting are directly performed on the first chroma component of the YUV4:4:4 picture block to obtain the YUV4:2:0 picture block and the UV11 picture block, as shown by dashed-line arrows in FIG. 12b.

Step 3: Perform encoding based on the YUV4:2:0 picture block of the base layer, to obtain a base layer bitstream.

In this step, encoding information of the base layer may be obtained, including an encoding block prediction manner, a transform partition mode, an encoding parameter (for example, a quantization parameter), and the like, and a YUV4:2:0 reconstructed block of the base layer may be obtained. An existing standard encoder such as an AVC encoder or an HEVC encoder, or a non-standard encoder may be used for a base layer encoding manner. This is not limited herein.

Step 4: Perform encoding based on the UV11 picture block of the enhancement layer, to obtain an enhancement layer bitstream.

In this step, encoding guidance and reference may be performed based on the encoding information of the base layer and information about the reconstructed block. For example, a reconstructed chroma signal of the base layer may be used as a prediction reference of the enhancement layer UV11, and a chroma block split mode of the base layer may be used to guide block splitting of the enhancement layer UV11. Similarly, an existing standard encoder or a non-standard encoder may be used for an enhancement layer encoding manner. This is not limited herein.

Optionally, the UV11 picture block may alternatively be independently encoded without reference to the YUV4:2:0 reconstructed block and the encoding information of the base layer.

Step 5: Encode a phase sampling information stream, to obtain the phase sampling information stream. Lossless encoding needs to be performed for the encoding herein, so that the phase sampling information can be transmitted to the decoder side without distortion. In this step, an existing standard encoder or a non-standard encoder may be used for encoding. This is not limited herein.

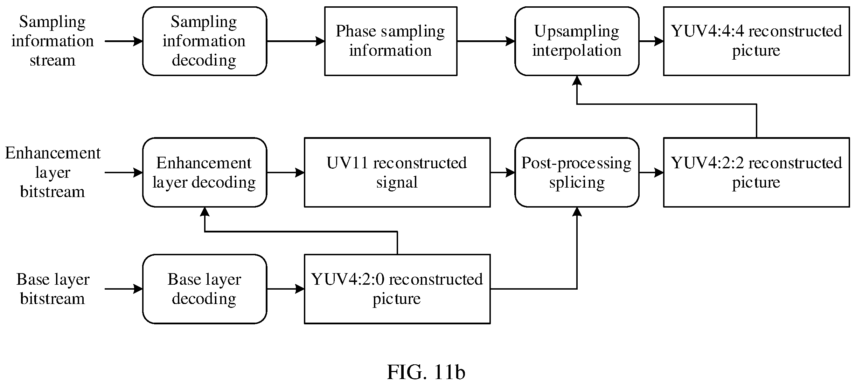

FIG. 11b is a diagram of a decoding framework. As shown in FIG. 11b, steps of the decoder side are as follows: Step 1: Obtain the base layer bitstream, and perform decoding to obtain the YUV4:2:0 reconstructed block of the base layer.

Herein, a decoder corresponding to encoding is used for decoding, and the decoder may be a standard or non-standard decoder. This is not limited herein.

Step 2: Obtain the enhancement layer bitstream, and perform decoding to obtain a UV11 reconstructed block of the enhancement layer.

Same as that on the encoder side, during decoding, the YUV4:2:0 reconstructed block and information included in the base layer, which are obtained through decoding the base layer, including the encoding block prediction manner, the transform partition mode, the encoding parameter, and the like, may be used to assist in decoding. For example, the first chroma component of the base layer may be used as a prediction reference of the enhancement layer UV11, and the block split mode of the first chroma component of the base layer may be used to guide block splitting of the enhancement layer UV11.

Optionally, during decoding to obtain the UV11 reconstructed block of the enhancement layer, decoding may alternatively be independently performed without reference to the YUV4:2:0 reconstructed block or the encoding information of the base layer.

Step 3: Perform post-processing combination on the YUV4:2:0 reconstructed block of the base layer and the UV11 reconstructed block of the enhancement layer, to obtain a YUV4:2:2 reconstructed block.

In this embodiment, the YUV4:2:0 reconstructed block of the base layer and the UV11 reconstructed block of the enhancement layer are combined to obtain the YUV4:2:2 reconstructed block, that is, a first chroma component of the YUV4:2:0 reconstructed block is placed on a pixel 0 of a first chroma component of the YUV4:2:2 reconstructed block, and the UV11 reconstructed block is placed on a pixel 1 of the first chroma component of the YUV4:2:2 reconstructed block, so that the first chroma component of the YUV4:2:0 reconstructed block and the UV11 reconstructed block are combined into the YUV4:2:2 reconstructed block.

Step 4: Obtain the phase sampling information stream, and perform decoding, to obtain phase sampling information.

The decoder is a decoder that can decode the phase sampling information stream and that matches the encoder side.

Step 5: Upsample the first chroma component of the YUV4:2:2 reconstructed block based on the phase sampling information, to obtain a YUV4:4:4 reconstructed block.

This step may be specifically performed in the following steps:

Step 5.1: Directly place a luma component of the YUV4:2:2 reconstructed block on a luma component of the YUV4:4:4 reconstructed block without any processing.

Step 5.2: Arrange, based on the phase sampling information, two pixels of the first chroma component of the YUV4:2:2 reconstructed block on two of pixels of a first chroma component of the YUV4:4:4 reconstructed block.

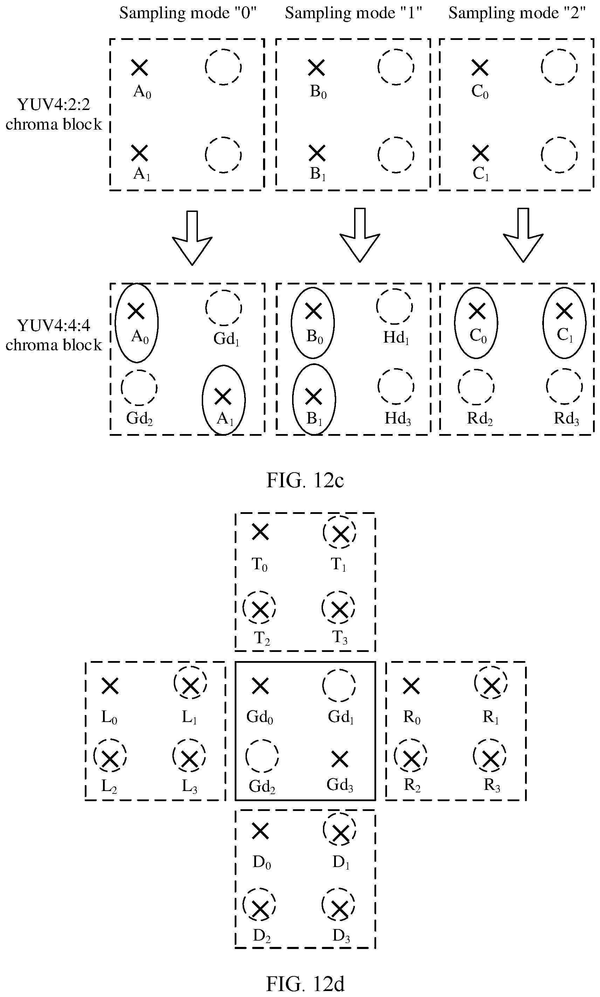

In this embodiment, corresponding to the encoder side, if the sampling mode of the picture block is "0", the pixel 0 and the pixel 1 of the first chroma component of the YUV4:2:2 reconstructed block are respectively placed on a pixel 0 and a pixel 3 of the first chroma component of the YUV4:4:4 reconstructed block. In this case, chroma values of the two obtained pixels are $Gd_0$' and $Gd_3$, and chroma values $Gd_1$ and $Gd_2$ of the other two pixels (1 and 2) are temporarily vacant. If the sampling mode of the picture block is "1", the pixel 0 and the pixel 1 of the first chroma component of the YUV4:2:2 reconstructed block are respectively placed on a pixel 0 and a pixel 2 of the first chroma component of the YUV4:4:4 reconstructed block. If the sampling mode of the picture block is "2", the pixel 0 and the pixel 1 of the first chroma component of the YUV4:2:2 reconstructed block are respectively placed on a pixel 0 and a pixel 1 of the first chroma component of the YUV4:4:4 reconstructed block. Refer to FIG. 12c (FIG. 12c is a diagram of performing pixel location restoration based on chroma sampling information).

A manner of marking the sampling mode used herein may not be limited, provided that a phase placement relationship corresponds to that of the encoder side.

Step 5.3: Process the chroma values of the two pixels, to restore the first chroma component of the YUV4:2:2 reconstructed block obtained in the sampling process of the encoder side.

This step corresponds to Step 1.4 in Step 1 of the encoder side.

This embodiment provides a method for restoring a filtered pixel based on the luma component of the YUV4:2:2 reconstructed block. After the chroma values $Gd_0$' and $Gd_k$ of the two pixels in the first chroma component of the YUV4:4:4 reconstructed block and their locations are obtained in Step 5.2, where $k \in \{1, 2, 3\}$, a luma value in the luma component may be represented as $Y_i$, where $i \in \{0, 1, 2, 3\}$. It may be learned according to corresponding processing steps of the encoder side that $Gd_0$' is a filtered chroma value, and $Gd_k$ corresponds to an unfiltered chroma value. Therefore, an unfiltered pixel $Gd_0$ of $Gd_0$' needs to be calculated based on $Gd_0$' and $Gd_k$. According to the formula (1) in Step 1.4 in Step 1 of the encoder side, an unfiltered pixel may be calculated according to the following formula:

$$Gd_0 = (Gd_0' - w_1 Gd_k)/w_0, \qquad k \in \{1, 2, 3\} \qquad (2)$$

Herein, $w_0$ and $w_1$ are weight values, and a manner of determining $w_0$ and $w_1$ is basically the same as that in Step 1.4 in Step 1 of the encoder side:

(1) It is determined whether luma values $Y_0$ and $Y_k$ corresponding to $Gd_0$' and $Gd_k$ satisfy $|Y_0 - Y_k| < \theta$, where $\theta$ is a similarity threshold that is positively correlated with an encoding parameter QP obtained through decoding for calculation, and a larger QP indicates a larger $\theta$ value;

(2) if the luma values $Y_0$ and $Y_k$ corresponding to $Gd_0$' and $Gd_k$ do not satisfy $|Y_0 - Y_k| < \theta$, it is determined whether all remaining luma values $Y_j$ ($j \in \{1, 2, 3\}$ and $j \neq k$) satisfy $|Y_0 - Y_j| < \theta$ or $|Y_k - Y_j| < \theta$;

(3) if $|Y_0 - Y_j| < \theta$, $w_0 = 0.75$, and $w_1 = 0.25$; otherwise, if $|Y_k - Y_j| < \theta$, $w_0 = 0.25$, and $w_1 = 0.75$; and

(4) in cases other than the foregoing cases, $w_0 = w_1 = 0.5$.

Therefore, a pixel value $Gd_0$ obtained through restoration may be obtained, and the pixel value is used to replace $Gd_0$' and placed on the pixel 0 of the first chroma component of the YUV4:4:4 reconstructed block.

Step 5.4: Restore chroma values of vacant pixels based on pixels whose chroma value has been obtained in the first chroma component of the YUV4:4:4 reconstructed block, to obtain the YUV4:4:4 reconstructed block.

In this step, the luma component of the YUV4:4:4 reconstructed block and the phase sampling information may be used for auxiliary restoration. In this embodiment, a specific restoration manner is provided.

(1) Based on a neighborhood block of the YUV4:2:2 reconstructed block and the phase sampling information, four neighboring chroma pixels: an upper neighboring chroma pixel, a lower neighboring chroma pixel, a left neighboring chroma pixel, and a right neighboring chroma pixel of a vacant pixel in the YUV4:2:2 reconstructed block are found. In general, pixels whose chroma values have been obtained in a $2 \times 2$ block in which the vacant pixel is located are used as two neighboring chroma pixels of the vacant pixel, and then in two neighboring $2 \times 2$ blocks, pixels that have chroma values and that are closest to the vacant pixel are found as other two neighboring chroma pixels.

For example, as shown in FIG. 12d (FIG. 12d is a diagram of selecting a neighborhood for a vacant pixel in a sampling mode "0"), in the sampling mode "0", the vacant pixels are a pixel 1 and a pixel 2. A current YUV4:2:2 reconstructed block is in a solid-line rectangular box in FIG. 12d, and four 2×2 blocks: an upper 2×2 block, a lower 2×2 block, a left 2×2 block, and a right 2×2 block of the YUV4:2:2 reconstructed block are marked in dashed-line rectangular boxes. In this embodiment, the pixel 0 is sampled in any sampling mode, and is represented by X in the figure. Whether the pixel k is sampled depends on the sampling mode, where $k \in \{1, 2, 3\}$. A pixel that may exist in a neighborhood 2×2 block is represented by a dashed-line surrounding box of X. Therefore, for the vacant pixel $Gd_1$, a left neighboring chroma pixel $Gd_0$ and a lower neighboring chroma pixel $Gd_3$ of the vacant pixel $Gd_1$ are first obtained from the current YUV4:2:2 reconstructed block. An upper neighboring chroma pixel is specified in the upper 2×2 block based on a sampling mode of the upper 2×2 block. If the sampling mode of the upper 2×2 block is "0", $T_3$ is an existing pixel, and $T_3$ is used as an upper neighboring pixel. If the sampling mode of the upper 2×2 block is "1", $T_2$ is an existing pixel, and $T_2$ is used as an upper neighboring pixel. If the sampling mode of the upper 2×2 block is "2", $T_1$ is an existing pixel, and $T_1$ is used as an upper neighboring pixel. Similarly, a right neighboring chroma pixel is specified in the right 2×2 block, where $R_0$ is an existing pixel. Therefore, $R_0$ is used as a right neighboring pixel. Similarly, for the vacant pixel $Gd_2$, an upper neighboring chroma pixel is $Gd_0$, a right neighboring chroma pixel is $Gd_3$, a lower neighboring chroma pixel is $D_0$, and a left neighboring chroma pixel is $L_3$, $L_2$, and $L_1$ respectively when a phase sampling mode of the left 2×2 block is "0", "1", and "2". If the current YUV4:2:2 reconstructed block is located at an upper boundary, a lower boundary, a left boundary, or a right boundary of the picture, and consequently there is no neighborhood block of the current YUV4:2:2 reconstructed block, a neighboring chroma pixel may be specified by using different solutions. For example, a chroma value of the neighboring chroma pixel is set to 0; or an existing chroma value that is close is used for replacement. For example, for the pixel $Gd_1$, the upper neighboring chroma pixel is replaced with the left neighboring chroma pixel, and the right neighboring chroma pixel is replaced with the lower neighboring chroma pixel.

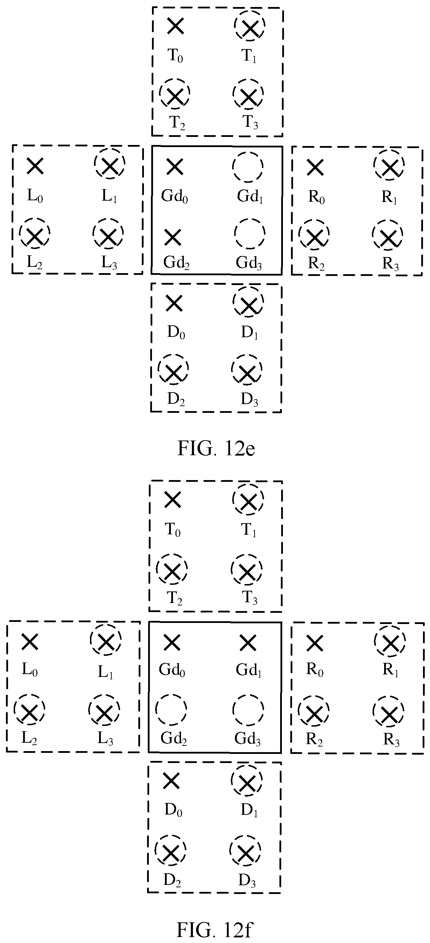

As shown in FIG. 12e (FIG. 12e is a diagram of selecting a neighborhood of a vacant pixel in a sampling mode "1"), in the sampling mode "1", the vacant pixels are a pixel 1 and a pixel 3. Similar to the foregoing descriptions, for the vacant pixel $Gd_1$, a left neighboring chroma pixel is $Gd_0$, a lower neighboring chroma pixel is $Gd_2$, a right neighboring chroma pixel is $R_0$, and an upper neighboring pixel is $T_3$, $T_2$, and $T_1$ respectively when a pixel sampling mode of an upper 2×2 block is "0", "1", and "2". For the vacant pixel $Gd_3$, a left neighboring chroma pixel is $Gd_2$, an upper neighboring chroma pixel is $Gd_0$, a right neighboring pixel is $R_0$, $R_2$, and $R_0$ respectively when a pixel sampling mode of a right 2×2 block is "0", "1", and "2", and a lower neighboring pixel is $D_0$, $D_0$, and Di respectively when a pixel sampling mode of a lower 2×2 block is "0", "1", and "2".

As shown in FIG. 12f (FIG. 12f is a diagram of selecting a neighborhood of a vacant pixel in a sampling mode "2"), in the sampling mode "2", the vacant pixels are a pixel 2 and a pixel 3. Similar to the foregoing descriptions, for the vacant pixel $Gd_2$, an upper neighboring chroma pixel is $Gd_0$, a right neighboring chroma pixel is $Gd_1$, a lower neighboring chroma pixel is $D_0$, and a left neighboring chroma pixel is $L_3$, $L_2$, and Li respectively when a pixel sampling mode of a left 2×2 block is "0", "1", and "2". For the vacant pixel $Gd_3$, a left neighboring chroma pixel is $Gd_0$, an upper neighboring chroma pixel is $Gd_1$, a right neighboring chroma pixel is $R_0$, $R_2$, and $R_0$ respectively when a pixel sampling mode of a right 2×2 block is "0", "1", and "2", and a lower neighboring chroma pixel is $D_0$, $D_0$, and Di respectively when a pixel sampling mode of a lower 2×2 block is "0", "1", and "2".

(2) A location corresponding to a vacant chroma pixel in the luma component of the YUV4:4:4 reconstructed block is found, the luma value of the location is denoted as $M_c$, and luma values of locations corresponding to four neighborhood chroma pixels: an upper neighborhood chroma pixel, a lower neighborhood chroma pixel, a left neighborhood chroma pixel, and a right neighborhood chroma pixel of the vacant pixel are respectively denoted as Mt, $M_d$, $M_l$, and $M_r$.

(3) The chroma value of the vacant pixel is reconstructed based on luma information corresponding to the vacant chroma pixel and luma and chroma information of the neighborhood pixel.

In this step, the luma value corresponding to the location of the vacant pixel is compared with the luma values of the surrounding neighborhood pixels, and then chroma values of the surrounding neighborhood pixels are comprehensively analyzed, so that a value of the vacant pixel is obtained based on the chroma values of the neighborhood pixels through direct value assigning or weighted average calculating.

A method used in this example is as follows:

First, it is determined whether there is a luma boundary or a chroma boundary around the vacant pixel. Subtraction is performed on every two of four luma pixel values of neighborhoods to obtain absolute values of differences, where a maximum absolute value is $\Delta Y_{max}$, and a minimum absolute value is $\Delta Y_{min}$. If $\Delta Y_{max} - \Delta Y_{min} > \eta_y$, where $\eta_y$ is a given threshold, it is determined that there is a luma boundary near the vacant pixel. Similarly, it may be obtained whether there is a chroma boundary near the vacant pixel.

If there is the luma boundary or the chroma boundary, a quantity of surrounding neighboring pixels whose luminance is similar to that of a current vacant pixel is determined. To be specific, an absolute value of a difference between a luma pixel value of the current vacant pixel and a luma pixel value of a surrounding neighborhood is calculated, that is, $\Delta M_{cj} = |M_c - M_j|$, where $j \in \{t, d, l, r\}$, and a similarity threshold $\gamma$ is compared. If $\Delta M_{cj} < \gamma$, it is considered that the current vacant pixel is similar to the neighborhood pixel. Herein, the similarity threshold $\gamma$ is positively correlated with an encoding parameter QP obtained through decoding for calculation, and a larger QP indicates a larger $\gamma$ value. A quantity $N_p$ of neighborhood pixels that are similar to the current vacant pixel is counted, where $0 \leq N_p \leq 4$.

The vacant pixel is obtained based on the quantity $N_p$ of similarities.

When $N_p=1$, the current vacant pixel is similar to a neighborhood pixel, and chrominance of the pixel is used as a chroma pixel of the vacant pixel.

When $N_p=2$, the current vacant pixel is similar to two neighborhood pixels, and it is further determined whether chroma values of the two neighborhood pixels are similar (a determining method is still to calculate an absolute value of a difference and then compare the absolute value with a respective specified threshold). If the chroma values are still similar, an average chroma value of the two neighborhood pixels is used as a chroma pixel of the vacant pixel. If the chroma values are not similar, an average chroma value of four neighborhood pixels is used.

When Np=3, the current vacant pixel is similar to three neighborhood pixels, and it is further determined whether chroma pixels of the three neighborhood pixels are all similar (similarity between every two pixels is determined). If all the chroma pixels are similar, an average value of the three neighborhood pixels is used as a chroma pixel of the current vacant pixel. Otherwise, it is determined whether two neighborhood pixels having similar chroma pixels exist. If the two neighborhood pixels having similar chroma pixels exist, an average chroma value of the two neighborhood pixels is used as a chroma pixel of the vacant pixel. If the two neighborhood pixels having similar chroma pixels do not exist, an average chroma value of any two neighborhood pixels in the three neighborhood pixels is used as a chroma pixel of the vacant pixel.

When Np=4, the current vacant pixel is similar to all four neighborhood pixels, and chroma values of the four neighborhood pixels are clustered based on a similarity threshold $\gamma$, to obtain Nc types, where $0 < Nc \leq 4$. If it is determined that an average absolute value of differences between luma values of pixels in one type in the Nc types and a luma value Mc of the current vacant pixel is the smallest, an average value of chroma values of pixels in the one type is used as a chroma pixel of the vacant pixel.

If there is no luma boundary or chroma boundary, an average chroma value of the four neighborhood pixels is used as a chroma pixel value of the current vacant pixel.

In a possible implementation, after the chroma value of the vacant pixel is obtained, the phase sampling information may be further used for auxiliary correction on the chroma value. In Step 1 of the encoder side, when phase sampling is performed, the phase sampling information is determined based on whether there is a chroma difference between two samples. When the sampling mode is "1", it represents that chroma values of the pixel 0 and the pixel 3 are similar. Therefore, on the decoder side, if the sampling mode is "1", and the vacant pixel is located on the pixel 3, a difference between the chroma value $Gd_3$ obtained by using the foregoing method and the chroma value $Gd_0$ of the pixel 0 is compared (an absolute value of the difference is obtained). If the difference is large (greater than a specified threshold), the value is corrected to the chroma value of the pixel 0. Similarly, when the sampling mode is "2", according to a criterion that the pixel 2 and the pixel 3 need to be similar to the pixel 0 in chroma pixel value, and an obtained chroma value of a vacant location may also be corrected.

Chroma values of all vacant pixels in the YUV4:4:4 reconstructed block are obtained according to the foregoing steps, to obtain the YUV4:4:4 reconstructed block.

It is noted that Step 4 can be performed before Step 3, and then Step 3 and Step 5 can be combined into one step. In other words, Step 3 can be omitted, and the YUV4:2:0 reconstructed block of the base layer, the UV11 reconstructed block, and the phase sampling information can be directly used to perform an upsampling interpolation process, to obtain the YUV 4:4:4 reconstructed block.

In Embodiment 1, chroma downsampling is performed in a manner of selecting a pixel based on a chroma value, so that the method is simple, and a true chroma pixel value can be obtained to a maximum extent. Adaptive pixel sampling integrates difference information of chroma samples, to ensure that the chroma information is retained to the maximum extent while the amount of encoded data is reduced. The YUV4:2:0 picture block obtained through sampling is generated through weighted averaging of chroma pixels, and is consistent with a common YUV4:2:0 picture block in chrominance, so that the YUV4:2:0 picture block can be well compatible with a scalable encoding framework. According to an upsampling algorithm, corresponding luma information is used to perform to texture inferring, and a similar chroma pixel around the vacant chroma pixel is used for interpolation, so that the source chroma pixel can be better restored, and fidelity effect can be achieved at a color boundary. In this way, the solution can better restore the YUV4:4:4 picture block, and subjective visual effect is good.

In this embodiment, a chroma-scalable encoding transmission solution is used. After chroma sampling is performed on the YUV4:4:4 picture block, only the YUV4:2:0 picture block and the UV11 picture block are retained, so that a data amount of encoding of the YUV4:4:4 picture block is greatly reduced, encoding complexity is low, power consumption is low, and a speed is high. In addition, an encoding bit rate of the YUV4:4:4 picture block is reduced, and transmission bandwidth costs are reduced.

Embodiment 2

Embodiment 2 is a simplified solution of Embodiment 1. A main difference from Embodiment 1 lies in that a fixed pixel is used for sampling in a downsampling process of an encoder side, and therefore phase sampling information does not need to be generated, stored, or encoded; and when a YUV4:4:4 reconstructed block is restored through upsampling on a decoder side, a phase location of a neighboring chroma pixel of a vacant pixel is fixed, and thus finding and processing are convenient.

Encoder side

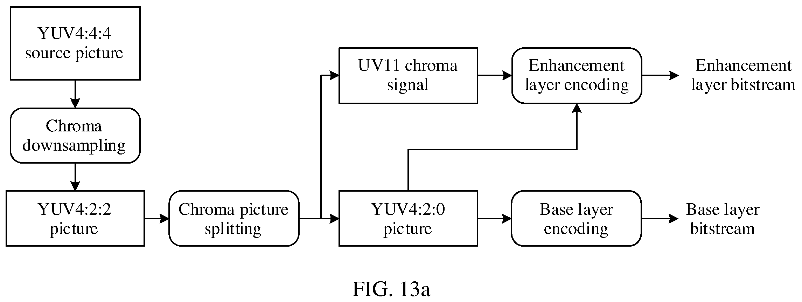

FIG. 13a is a diagram of an encoding framework. As shown in FIG. 13a, steps of the encoder side are as follows:
Step 1: A difference from Step 1 of the encoder side in Embodiment 1 lies in that downsampling is performed on a first chroma component and a second chroma component of a YUV4:4:4 picture block by using a pixel at a fixed location for sampling, to obtain a YUV4:2:2 picture block.

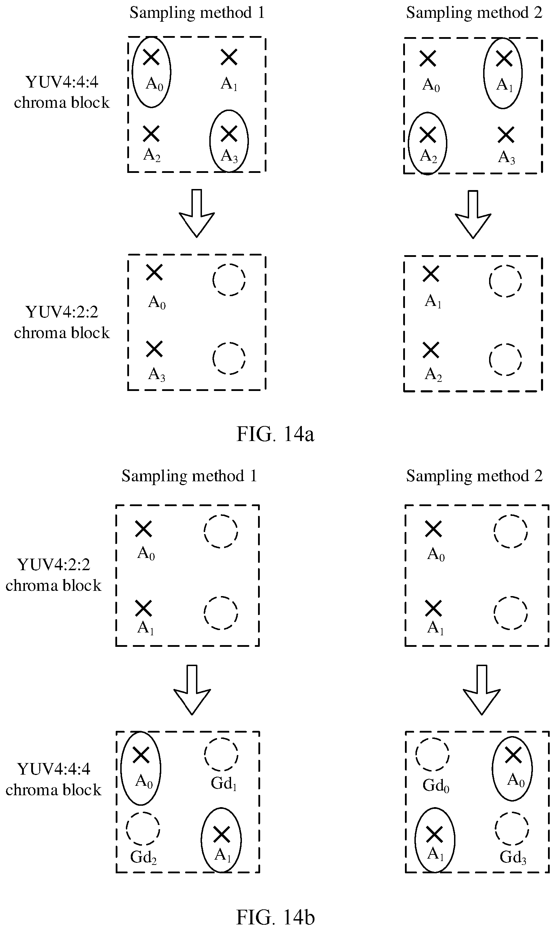

In this embodiment, the phase sampling information is not obtained. Specifically, in this step, in the YUV4:4:4 picture block, two pixels at cross locations are fixedly used to form a chroma component of the YUV4:2:2 picture block. There may be two sampling modes, as shown in FIG. 14a (FIG. 14a is a diagram of sampling using fixed pixels at cross locations).

In a first method, a pixel 0 and a pixel 3 of the first chroma component of the YUV4:4:4 picture block are used as samples. In a second method, a pixel 1 and a pixel 2 of the first chroma component of the YUV4:4:4 picture block are used as samples. It is noted that, different from adaptive phase sampling, in the two methods, a same sampling mode may be used for first chroma components of different YUV4:4:4 picture blocks.

The foregoing two pixels are placed into a first chroma component of the YUV4:2:2 picture block, so that the first chroma component of the YUV4:2:2 picture block obtained through sampling can be obtained. This step is the same as Step 1.4 of the encoder side in Embodiment 1.

Step 2 to Step 5: Same as Step 2 to Step 5 of the encoder side in Embodiment 1.

Decoder side

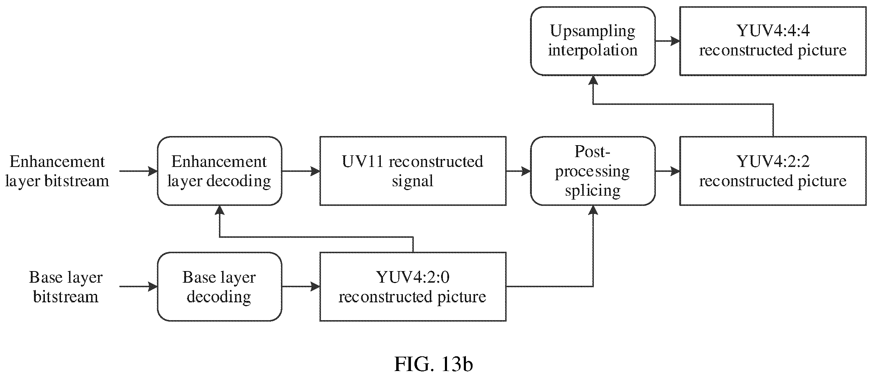

FIG. 13b is a diagram of a decoding framework. As shown in FIG. 13b, steps of the decoder side are as follows:

Step 1 to Step 3: Same as Step 1 to Step 3 of the decoder side in Embodiment 1.
Step 4: Basically the same as Step 5 of the decoder side in Embodiment 1, where upsampling interpolation is performed on a first chroma component of a YUV4:2:2 reconstructed block, to obtain the YUV4:4:4 reconstructed block.
Step 4.1: Same as Step 5.1 of the decoder side in Embodiment 1.
Step 4.2: Rearrange, based on information about a fixed phase sampling mode corresponding to the encoder side, two pixels of the first chroma component of the YUV4:2:2 reconstructed block to corresponding locations of a first chroma component of the YUV4:4:4 reconstructed block. Specifically, corresponding to the encoder side, if the encoder side performs sampling by using the sampling method 1 in FIG. 14a, a pixel 0 and a pixel 1 of the first chroma component of the YUV4:2:2 reconstructed block are respectively placed on the pixel 0 and the pixel 3 of the first chroma component of the YUV4:4:4 reconstructed block; or if the encoder side performs sampling by using the sampling method 2 in FIG. 14a, a pixel 0 and a pixel 1 of the first chroma component of the YUV4:2:2 reconstructed block are respectively placed on the pixel 1 and the pixel 2 of the first chroma component of the YUV4:4:4 reconstructed block, as shown in FIG. 14b (FIG. 14b is a diagram of restoring a location of a pixel of the first chroma component of the YUV4:4:4 reconstructed block in a sampling mode of the encoder side).
Step 4.3: Same as Step 5.3 of the decoder side in Embodiment 1.
Step 4.4: Basically the same as Step 5.4 of the decoder side in Embodiment 1, except that pixel sampling information is not used for neighboring chroma pixel selection and sampling interpolation anymore. Because the cross-pixel sampling mode is interval sampling, an upper, a lower, a left, or a right pixel of a location of the pixel may be directly selected as the neighboring chroma pixel of the vacant pixel. During sampling interpolation, the phase sampling information is also not used to correct the vacant pixel.

Technical effects are basically the same as those of Embodiment 1. A main difference lies in that calculation of downsampling and upsampling in Embodiment 2 is simpler, so that a calculation speed can be further improved, and power consumption of the encoder side and the decoder side can be reduced. However, because chroma information of a source picture may be lost during downsampling in a fixed manner, subjective visual effect of a reconstructed YUV4:4:4 picture block is not as good as that in Embodiment 1.

Embodiment 3

Embodiment 3 is an extension of Embodiment 1, where an adaptive sampling method slightly different from that in Embodiment 1 is used. When a pixel 1 and a pixel 2 are used as samples, a sampling mode is marked as "2", and a pixel 0 and the pixel 1 are used as samples in a substitutive manner for sampling.

Encoder side

Steps of the encoder side are as follows:

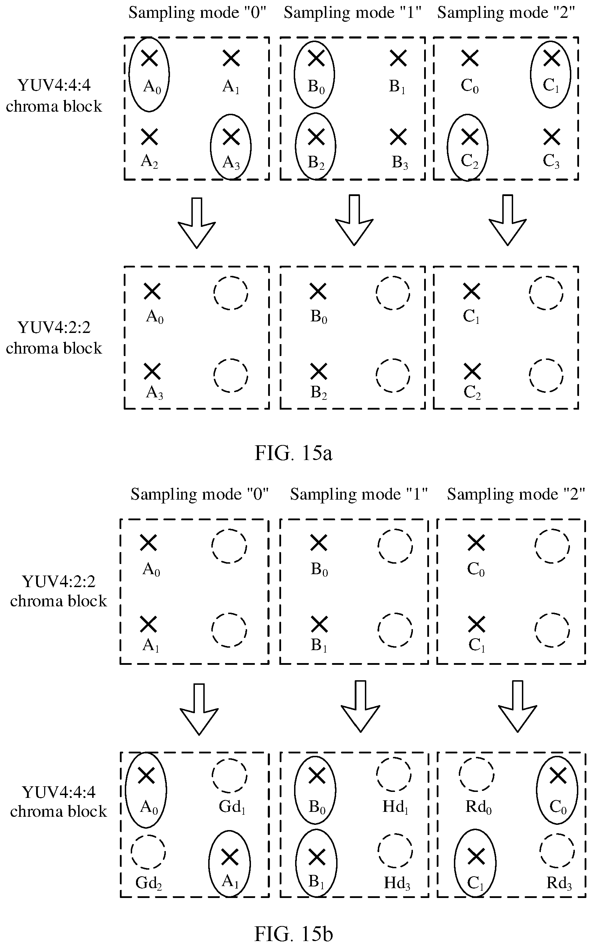

Step 1: Basically the same as Step 1 of the encoder side in Embodiment 1, where several differences are described as follows:
As shown in FIG. 15a (FIG. 15a shows an adaptive pixel sampling process for chrominance),
Step 1.1: Same as Step 1.1 of the encoder side in Embodiment 1.
Step 1.2: Basically the same as Step 1.2 of the encoder side in Embodiment 1. A difference lies in that, if $0<N\leq4$, it represents that there are two different chroma values in a picture block, and further determining is performed on pixels as follows: Which value among three values $\Delta A03$, $\Delta A02$, and $\Delta A12$ is greater than $\delta$ is determined in sequence. Specifically, it is first determined that if $\Delta A03>\delta$, a pixel 0 and a pixel 3 are used as samples. Otherwise, it is determined that if $\Delta A02>\delta$, the pixel 0 and a pixel 2 are used as the samples. Otherwise, it is determined that if $\Delta A12>\delta$, a pixel 1 and the pixel 2 are used as the samples. If none of $\Delta A03>\delta$, $\Delta A02>\delta$, and $\Delta A12>\delta$ is met, the pixel 0 and the pixel 3 are used as the samples.
Step 1.3: Basically the same as Step 1.2 of the encoder side in Embodiment 1. A difference lies in that a sampling mode used when the pixel 1 and the pixel 2 are used as the samples is marked as "2".
Step 1.4: Basically the same as Step 1.2 of the encoder side in Embodiment 1. Descriptions of weighted filtering are changed as follows:
Pixel values X0 and X1 of the two samples are obtained in Step 1.3, where X0 represents a value (which may be A0 or A1) of a sample in a first row of a 2x2 chroma block in a YUV4:4:4 chroma plane, and X1 represents a value (which may be A2 or A3) of a sample in a second row of the 2x2 chroma block. Then, a 2x2 pixel block corresponding to a chroma sampling location is obtained from a luma component (a component Y) of YUV4:4:4, and pixel values may be respectively represented as YX0, YX1, YXA, and YXB, where YX0 and YX1 respectively correspond to luma values of two samples, and YXA and YXB correspond to luma values of other two samples. A manner of calculating a pixel G0 generated by filtering the two pixels is as follows:

$$G_0=w_0X_0+w_1X_1 \quad (3)$$

Herein, w0 and w1 are weight values, and a manner of determining w0 and w1 is as follows:

(1) It is determined whether luma component pixel values YX0 and YX1 corresponding to X0 and X1 satisfy $|YX0-YX1|<\varepsilon$, where $\varepsilon$ is a similarity threshold that may be given in a manner of being specified in advance or may be obtained through calculation. An obtaining manner is not limited. A fixed value is given in this example.
(2) If the luma component pixel values YX0 and YX1 corresponding to X0 and X1 do not satisfy $|YX0-YX1|<\varepsilon$, it is determined whether both luma components YXA and YXB of the other two pixels satisfy $|YX0-YXA|<\varepsilon$ and $|YX0-YXB|<\varepsilon$, or $|YX1-YXA|<\varepsilon$ and $|YX1-YXB|<\varepsilon$.
(3) If $|YX0-YXA|<\varepsilon$ and $|YX0-YXB|<\varepsilon$ are satisfied, w0=0.75, and w1=0.25; otherwise, if $|YX1-YXA|<\varepsilon$ and $|YX1-YXB|<\varepsilon$ are satisfied, w0=0.25, and w1=0.75.
(4) In other cases, w0=w1=0.5.

Step 2 to Step 5: Same as Step 2 to Step 5 of the encoder side in Embodiment 1.

Decoder side

Steps of the decoder side are as follows:

Step 1 to Step 4: Same as Step 1 to Step 4 of the decoder side in Embodiment 1.
Step 5: Basically the same as Step 5 of the decoder side in Embodiment 1, where differences are described as follows:

Step 5.1: Same as Step 5.1 of the decoder side in Embodiment 1.

Step 5.2: Basically the same as Step 5.2 of the decoder side in Embodiment 1. A difference lies in that, if a sampling mode corresponding to a current 2x2 block is "2", chroma pixels of a phase point 0 and a phase point 1 of a YUV4:2:2 chroma plane are respectively placed on a phase 1 and a phase 2 of a YUV4:4:4 chroma plane, as shown in FIG. 15b (FIG. 15b is a diagram of restoring a location of a pixel of a first chroma component of a YUV4:4:4 reconstructed block).

Step 5.3: Basically the same as Step 5.3 of the decoder side in Embodiment 1. Descriptions of a method for restoring a filtered pixel are changed as follows:

Pixel values $Gd_0'$ and $Gd_1$ of two samples in the YUV4:4:4 chroma plane and their phase locations are obtained in Step 5.2, where $Gd_0'$ represents a value of a sample in a first row of a 2x2 chroma block in the YUV4:4:4 chroma plane, and $Gd_1$ represents a value of a sample in a second row of the 2x2 chroma block. Then, a 2x2 pixel block corresponding to a chroma sampling location is obtained from a luma component, and pixel values may be respectively represented as $Y_{Gd0'}$, $Y_{Gd1}$, $Y_{GdA}$, and $Y_{GdB}$, where $Y_{Gd0'}$ and $Y_{Gd1}$ respectively correspond to luma values of two samples, and $Y_{GdA}$ and $Y_{GdB}$ correspond to luma values of other two samples. It may be learned according to corresponding processing steps of the encoder side that $Gd_0'$ is a filtered pixel, and $Gd_1$ corresponds to an unfiltered pixel. Therefore, an unfiltered pixel $Gd_0$ of $Gd_0'$ needs to be calculated based on $Gd_0'$ and $Gd_1$. According to the formula (3) in Step 1.4 in Step 1 of the encoder side, an unfiltered pixel may be calculated according to the following formula:

$$Gd_0 = (Gd_0' - w_1 Gd_1)/w_0 \qquad (4)$$

Herein, $w_0$ and $w_1$ are weight values, and a manner of determining $w_0$ and $w_1$ is basically the same as that in Step 1.4 in Step 1 of the encoder side:

(1) it is determined whether luma component pixel values $Y_{Gd0'}$ and $Y_{Gd1}$ corresponding to $Gd_0'$ and $Gd_1$ satisfy $|Y_{Gd0'}-Y_{Gd1}|<\theta$, where $\theta$ is a similarity threshold that is positively correlated with an encoding parameter QP obtained through decoding, and a larger QP indicates a larger $\theta$ value;

(2) if the luma component pixel values $Y_{Gd0'}$ and $Y_{Gd1}$ corresponding to $Gd_0'$ and $Gd_1$ do not satisfy $|Y_{Gd0'}-Y_{Gd1}|<\theta$, it is determined whether both luma components $Y_{GdA}$ and $Y_{GdB}$ of the other two phases satisfy $|Y_{Gd0'}-Y_{GdA}|<\theta$ and $|Y_{Gd0'}-Y_{GdB}|<\theta$, or $|Y_{Gd1'}-Y_{GdA}|<\theta$ and $|Y_{Gd1'}-Y_{GdB}|<\theta$;

(3) if $|Y_{Gd0'}-Y_{GdA}|<\theta$ and $|Y_{Gd0'}-Y_{GdB}|<\theta$ ) are satisfied, $w_0=0.75$, and $w_1=0.25$; otherwise, if $|Y_{Gd1'}-Y_{GdA}|<\theta$ and $|Y_{Gd1'}-Y_{GdB}|<\theta$ are satisfied, $w_0=0.25$, and $w_1=0.75$; and

(4) in other cases, $w_0=w_1=0.5$.

In this way, a pixel value $Gd_0$ obtained through restoration may be obtained, and the pixel value is used to replace $Gd_0'$ and placed on a phase 0 of the YUV4:4:4 chroma plane.

Step 5.4: Basically the same as Step 5.4 of the decoder side in Embodiment 1, where there are two differences in processing based on phase sampling information.

A first difference lies in that a pixel of each phase of the 2x2 chroma block may be vacant. Therefore, finding of four neighboring chroma pixels: an upper chroma pixel, a lower chroma pixel, a left chroma pixel, and a right chroma pixel of a vacant chroma pixel of the current block is different.

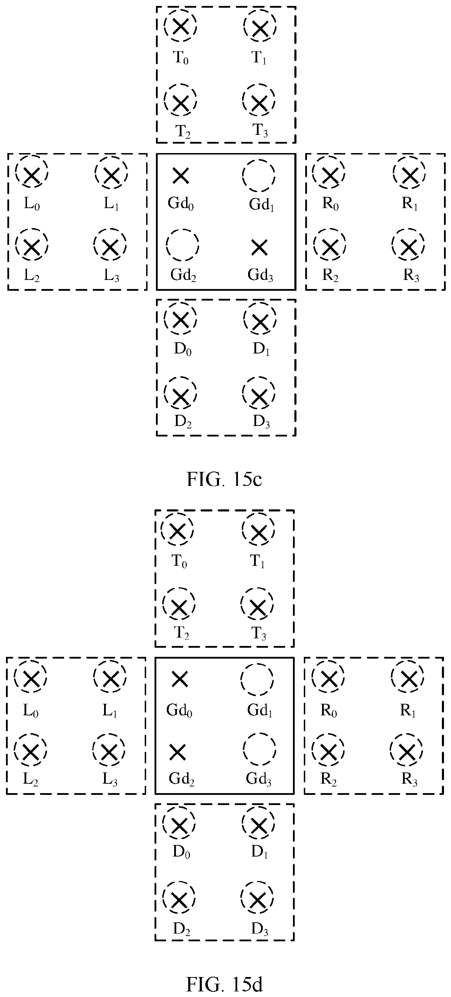

As shown in FIG. 15c (FIG. 15c is a diagram of selecting a vacant neighboring chroma pixel in a sampling mode "0"), in the sampling mode "0", vacant pixels are a pixel of a pixel 1 and a pixel of a pixel 2. A left neighboring pixel of a vacant pixel $Gd_1$ is $Gd_0$, a lower neighboring pixel is $Gd_3$, a right neighboring pixel is $R_0$, $R_0$, and $R_2$ respectively when a pixel sampling mode of a right neighborhood 2x2 block is "0", "1", and "2", and an upper neighboring pixel is $T_3$, $T_2$, and $T_2$ respectively when a pixel sampling mode of an upper neighborhood 2x2 block is "0", "1", and "2". An upper neighboring pixel of a vacant pixel $Gd_2$ is $Gd_0$, a right neighboring pixel is $Gd_3$, a left neighboring pixel is $L_3$, $L_2$, and Li respectively when a pixel sampling mode of a left neighborhood 2x2 block is "0", "1", and "2", and a lower neighboring pixel is $D_0$, $D_0$, and Di respectively when a pixel sampling mode of a lower neighborhood 2x2 block is "0", "1", and "2".

As shown in FIG. 15d (FIG. 15d is a diagram of selecting a vacant neighboring chroma pixel in a sampling mode "1"), in the sampling mode "1", vacant pixels are a pixel of a pixel 1 and a pixel of a pixel 3. A left neighboring pixel of a vacant pixel $Gd_1$ is $Gd_0$, a lower neighboring pixel is $Gd_2$, a right neighboring pixel is $R_0$, $R_0$, and $R_2$ respectively when a pixel sampling mode of a right neighborhood 2x2 block is "0", "1", and "2", and an upper neighboring pixel is $T_3$, $T_2$, and $T_2$ respectively when a pixel sampling mode of an upper neighborhood 2x2 block is "0", "1", and "2". An upper neighboring pixel of a vacant pixel $Gd_3$ is $Gd_0$, a left neighboring pixel is $Gd_2$, a right neighboring pixel is $R_0$, $R_2$, and $R_2$ respectively when a pixel sampling mode of a right neighborhood 2x2 block is "0", "1", and "2", and a lower neighboring pixel is $D_0$, $D_0$, and Di respectively when a pixel sampling mode of a lower neighborhood 2x2 block is "0", "1", and "2".

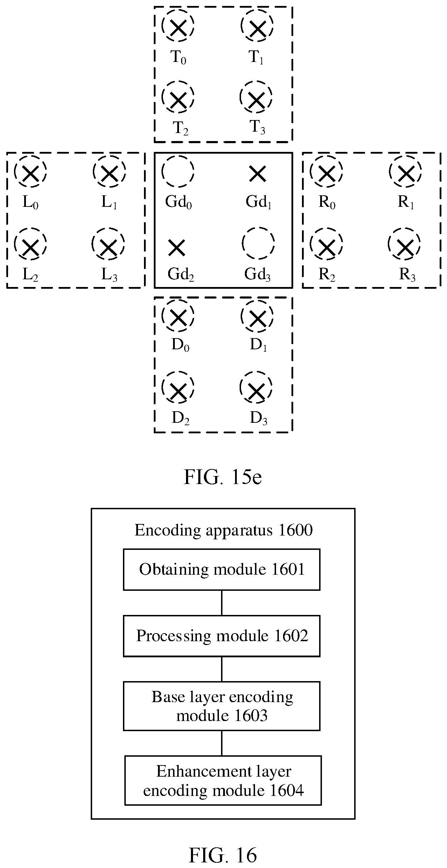

As shown in FIG. 15e (FIG. 15e is a diagram of selecting a vacant neighboring chroma pixel in a sampling mode "2"), in the sampling mode "2", vacant pixels are a pixel of a pixel 0 and a pixel of a pixel 3. A right neighboring pixel of a vacant pixel $Gd_0$ is $Gd_1$, a lower neighboring pixel is $Gd_2$, a left neighboring pixel is $L_3$, $L_0$, and Li respectively when a pixel sampling mode of a left neighborhood 2x2 block is "0", "1", and "2", and an upper neighboring pixel is $T_3$, $T_2$, and $T_2$ respectively when a pixel sampling mode of an upper neighborhood 2x2 block is "0", "1", and "2". An upper neighboring pixel of a vacant pixel $Gd_3$ is $Gd_1$, a left neighboring pixel is $Gd_2$, a right neighboring pixel is $R_0$, $R_2$, and $R_2$ respectively when a pixel sampling mode of a right neighborhood 2x2 block is "0", "1", and "2", and a lower neighboring pixel is $D_0$, $D_0$, and Di respectively when a pixel sampling mode of a lower neighborhood 2x2 block is "0", "1", and "2".

A second difference lies in that there are a part of differences in descriptions of using the sampling information for auxiliary correction on a vacant pixel. In this case, when the sampling mode of the current block is "2", the pixel 0 and the pixel 3 need to be similar to the pixel 2 in chroma pixel value, and obtained chroma pixel values of $Gd_0$ and Gd3 may be corrected based on the chroma pixel value of $Gd_2$.

Other parts are the same as those of Step 5.4 of the decoder side in Embodiment 1.

Embodiment 4

Embodiment 4 is an extended solution of the decoder side in all the foregoing embodiments. When upsampling interpolation is performed based on a YUV4:2:0 reconstructed block and a UV11 reconstructed block to generate a YUV4:4:4 reconstructed block, a chroma pixel value of a vacant pixel is obtained by weighting a value of a neighborhood chroma pixel based on a difference between a luma component of a neighborhood pixel and a luma component of a current vacant pixel.

The following describes specific steps based on a change of a decoder side algorithm in Embodiment 1. However, this embodiment may also be applied to corresponding steps of the decoder side in Embodiment 2 and Embodiment 3.

Step 1 to Step 4: Same as Step 1 to Step 4 of the decoder side in Embodiment 1.

Step 5: Perform upsampling interpolation on a chroma plane of the YUV4:2:2 reconstructed block based on pixel sampling information, to obtain the YUV4:4:4 reconstructed block.

This step may be specifically performed in the following steps:

Step 5.1 to Step 5.3: Same as Step 5.1 to Step 5.3 of the decoder side in Embodiment 1.

Step 5.4: In processing of a specific restoration manner, both Step (1) and Step (2) are the same as those of the decoder side in Embodiment 1, to find a neighborhood pixel corresponding to a location of a vacant pixel and luma and chroma pixel value information of the neighborhood pixel.

(3) A value of a vacant pixel is reconstructed based on luma information corresponding to the current vacant pixel and luma and chroma information of the neighborhood pixel. In this step, a luma value of the current vacant pixel is compared with a luma value of a surrounding neighborhood pixel, a difference between the two is considered to be merged into a weight value for chroma calculation, and the value of the vacant pixel is obtained by performing interpolation on a chroma value of the neighborhood pixel.

A method used in this example is as follows:
First, absolute values $\Delta Mcj=|Mc-Mj|$ of differences between luma pixel values Mt, Md, Ml, and Mr of locations corresponding to neighborhood pixels and a luma pixel value Mc of a location corresponding to the vacant pixel are obtained, where $j \in \{t, d, l, r\}$, and a weighted weight value wcj of each neighborhood chroma pixel is calculated based on the absolute values. Herein, wcj is negatively correlated with $\Delta Mcj$, that is, a smaller $\Delta M_{cj}$ indicates a larger wcj. An obtaining manner is as follows:

$$ w_{cj} = \begin{cases} \dfrac{a}{\Delta M_{cj}} + b & if \quad \Delta M_{cj} < \gamma \\ 0 & otherwise \end{cases} \qquad (5) $$

Herein, a and b are constants, $\gamma$ is a similarity threshold that is positively correlated with an encoding parameter QP obtained through decoding for calculation, and a larger QP indicates a larger $\gamma$ value.

Then, weighted averaging is performed, based on chrominance of the neighborhood pixel, on chrominance of the location corresponding to the vacant pixel, to obtain the vacant chroma pixel value through calculation:

$$ Gdc = (w_{ct}G_t + w_{cd}G_d + w_{cl}G_l + w_{cr}G_r) / (w_{ct} + w_{cd} + w_{cl} + w_{cr}) \qquad (6) $$

Herein, Gj is a chroma pixel value corresponding to four neighborhood pixels of the vacant pixel, where $j \in \{t, d, l, r\}$.

After the chroma pixel value of the vacant pixel is obtained through calculation, the pixel sampling information may still be used for auxiliary correction on the vacant pixel. A correction method is the same as that steps of the decoder side in Embodiment 1.

FIG. 16 is a diagram of a structure of an encoding apparatus 1600 according to an embodiment of this application. The encoding apparatus 1600 may be used in a video encoder 20 (or an encoder), and includes an obtaining module 1601, a processing module 1602, a base layer encoding module 1603, and an enhancement layer encoding module 1604.

The obtaining module 1601 is configured to obtain a to-be-processed picture block, where a dimension of the picture block is $2 \times 2$, and a sampling format of the picture block is YUV4:4:4. The processing module 1602 is configured to: downsample a chroma component of the picture block to obtain a first picture block, where a sampling format of the first picture block is YUV4:2:2, and a first chroma pixel and a second chroma pixel in a first chroma component of the first picture block are obtained based on a third chroma pixel and a fourth chroma pixel in four pixels in a first chroma component of the picture block; and split a chroma component of the first picture block to obtain a second picture block and a UV11 picture block, where a sampling format of the second picture block is YUV4:2:0. The base layer encoding module 1603 is configured to encode the second picture block to obtain a base layer bitstream. The enhancement layer encoding module 1604 is configured to encode the UV11 picture block to obtain an enhancement layer bitstream.

In a possible implementation, the third chroma pixel and the fourth chroma pixel are determined based on a value of n1, n1 is determined based on chroma values of the four pixels, n1 represents a type of chrominance of the first chroma component of the picture block, and n1 is a positive integer.

In a possible implementation, when n1=1, n1=3, or n1=4, the third chroma pixel and the fourth chroma pixel are two pixels at preset locations in the four pixels; or when n1=2, the third chroma pixel is a pixel at a preset location in the four pixels, and the fourth chroma pixel is a pixel, in the four pixels, that has a largest chroma value difference from the third chroma pixel.

In a possible implementation, n1 is determined based on N, and N is a quantity of chroma value differences that are greater than a first threshold and that are in chroma value differences between every two of the four pixels; and

    when N=0, n1=1;
    when $0 < N \leq 4$, n1=2;
    when N=5, n1=3; or
    when N=6, n1=4.

In a possible implementation, the third chroma pixel and the fourth chroma pixel are two pixels with a largest chroma value difference in the four pixels.

In a possible implementation, the third chroma pixel and the fourth chroma pixel are two pixels at diagonal locations in the four pixels.

In a possible implementation, the processing module 1602 is further configured to: obtain a first weight value corresponding to the third chroma pixel and a second weight value corresponding to the fourth chroma pixel; perform weighting on a chroma value of the third chroma pixel and a chroma value of the fourth chroma pixel based on the first weight value and the second weight value, to obtain a chroma value of the first chroma pixel; and determine the chroma value of the fourth chroma pixel as a chroma value of the second chroma pixel.

In a possible implementation, the processing module 1602 is specifically configured to: obtain luma values of four pixels in a luma component of the picture block; and obtain the first weight value and the second weight value based on distribution of the luma values of the four pixels in the luma component of the picture block.

In a possible implementation, the processing module 1602 is further configured to encode phase sampling information, where the phase sampling information includes information indicating a location of the third chroma pixel and a location of the fourth chroma pixel.

In a possible implementation, the processing module 1602 is further configured to encode weight information, where the weight information includes information indicating the first weight value and the second weight value.

In a possible implementation, a fifth chroma pixel and a sixth chroma pixel in a second chroma component of the first picture block are obtained based on a seventh chroma pixel and an eighth chroma pixel in four pixels in a second chroma component of the picture block.

In a possible implementation, the first chroma component is a component U, and the second chroma component is a component V; or the first chroma component is a component V, and the second chroma component is a component U.

The apparatus in this embodiment may be used to execute the technical solution of the method embodiment shown in FIG. 9. An implementation principle and technical effects of the apparatus are similar to those of the technical solution of the method embodiment shown in FIG. 9. Details are not described herein again.

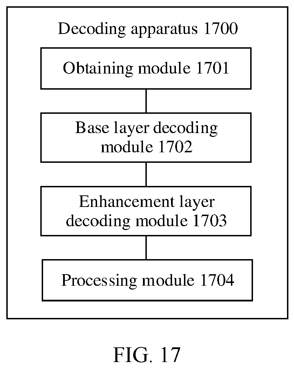

FIG. 17 is a diagram of a structure of a decoding apparatus 1700 according to an embodiment of this application.

The decoding apparatus 1700 may be used in a video decoder 30 (or a decoder), and includes an obtaining module 1701, a base layer decoding module 1702, an enhancement layer decoding module 1703, and a processing module 1704.

The obtaining module 1701 is configured to obtain a base layer bitstream and an enhancement layer bitstream. The base layer decoding module 1702 is configured to parse the base layer bitstream to obtain a first reconstructed block, where a dimension of the first reconstructed block is 2×2, and a sampling format of the first reconstructed block is YUV4:2:0. The enhancement layer decoding module 1703 is configured to parse the enhancement layer bitstream to obtain a UV11 reconstructed block. The processing module 1704 is configured to: combine the first reconstructed block and the UV11 reconstructed block to obtain a second reconstructed block, where a sampling format of the second reconstructed block is YUV4:2:2; and upsample a chroma component of the second reconstructed block to obtain a target reconstructed block, where a sampling format of the target reconstructed block is YUV4:4:4, and a first chroma pixel, a second chroma pixel, a third chroma pixel, and a fourth chroma pixel in a first chroma component of the target reconstructed block are obtained based on a fifth chroma pixel and a sixth chroma pixel in a first chroma component of the second reconstructed block.

In a possible implementation, the processing module 1704 is further configured to: perform decoding to obtain phase sampling information, where the phase sampling information includes information indicating a location of the first chroma pixel corresponding to the fifth chroma pixel and a location of the second chroma pixel corresponding to the sixth chroma pixel; and determine the first chroma pixel and the second chroma pixel based on the phase sampling information.

In a possible implementation, the processing module 1704 is specifically configured to: obtain a chroma value of the fifth chroma pixel and a chroma value of the sixth chroma pixel; obtain a first weight value of the fifth chroma pixel and a second weight value of the sixth chroma pixel; perform deweighting on the chroma value of the fifth chroma pixel and the chroma value of the sixth chroma pixel based on the first weight value and the second weight value, to obtain a chroma value of the first chroma pixel; and determine the chroma value of the sixth chroma pixel as a chroma value of the second chroma pixel.

In a possible implementation, the processing module 1704 is specifically configured to: perform decoding to obtain weight information, where the weight information includes information indicating the first weight value and the second weight value; and obtain information about the first weight value and the second weight value based on the weight information.

In a possible implementation, the processing module 1704 is specifically configured to: obtain luma values of four pixels in a luma component of the second reconstructed block; and obtain the first weight value and the second weight value based on distribution of the luma values of the four pixels in the luma component of the second reconstructed block.

In a possible implementation, the processing module 1704 is specifically configured to: obtain four neighboring luma pixels of a target luma pixel in a luma component of the target reconstructed block, where the target luma pixel corresponds to a target chroma pixel, the four neighboring luma pixels correspond to four neighboring chroma pixels in a chroma component of the target reconstructed block, the four neighboring chroma pixels are respectively located above, below, on the left, or on the right of the target chroma pixel, and chroma values of the four neighboring chroma pixels have been obtained; obtain a luma value of the target luma pixel and luma values of the four neighboring luma pixels; and obtain a chroma value of the target chroma pixel based on the luma value of the target luma pixel and the luma values of the four neighboring luma pixels, where the target chroma pixel is the third chroma pixel or the fourth chroma pixel.

In a possible implementation, the processing module 1704 is specifically configured to: separately calculate differences between the luma value of the target luma pixel and the luma values of the four neighboring luma pixels; obtain four weight values based on the differences between the luma value of the target luma pixel and the luma values of the four neighboring luma pixels; and perform weighting on the chroma values of the four neighboring chroma pixels based on the four weight values to obtain the chroma value of the target chroma pixel.

In a possible implementation, the processing module 1704 is specifically configured to: when there is a luma boundary around the target luma pixel or there is a chroma boundary around the target chroma pixel, obtain a first quantity of neighboring luma pixels whose luminance is similar to that of the target luma pixel in the four neighboring luma pixels; and obtain the chroma value of the target chroma pixel based on the first quantity.

In a possible implementation, the processing module 1704 is further configured to: when the phase sampling information is obtained, obtain a difference between the chroma value of the target chroma pixel and the chroma value of the first chroma pixel, where the target chroma pixel is the third chroma pixel or the fourth chroma pixel; and when the difference is greater than a third threshold, use the chroma value of the first chroma pixel as the chroma value of the target chroma pixel.

In a possible implementation, a seventh chroma pixel, an eighth chroma pixel, a ninth chroma pixel, and a tenth chroma pixel in a second chroma component of the target reconstructed block are obtained based on an eleventh chroma pixel and a twelfth chroma pixel in a second chroma component of the second reconstructed block.

In a possible implementation, the first chroma component is a component U, and the second chroma component is a component V; or the first chroma component is a component V, and the second chroma component is a component U.

The apparatus in this embodiment may be used to execute the technical solution of the method embodiment shown in FIG. 10. An implementation principle and technical effects of the apparatus are similar to those of the technical solution of the method embodiment shown in FIG. 10. Details are not described herein again.

In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

**In** the several embodiments provided in this application, it should be understood that the disclosed systems, apparatuses, and methods may be implemented in other manners. For example, the foregoing described apparatus embodiments are merely examples. For example, division into the units is merely logical function division and may be another division during actual implementation. For example, a plurality of units or components may be combined or integrated into another system, or some features may be ignored or may not be performed. **In** addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions in embodiments.

**In** addition, all functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A picture encoding method, comprising:

   obtaining a to-be-processed picture block, wherein a dimension of the picture block is 2×2, and a sampling format of the picture block is YUV4:4:4;

   downsampling a chroma component of the picture block to obtain a first picture block, wherein a sampling format of the first picture block is YUV4:2:2, and a first chroma pixel and a second chroma pixel in a first chroma component of the first picture block are obtained based on a third chroma pixel and a fourth chroma pixel in four pixels in a first chroma component of the picture block;

   splitting a chroma component of the first picture block to obtain a second picture block and a UV11 picture block, wherein a sampling format of the second picture block is YUV4:2:0;

   encoding the second picture block to obtain a base layer bitstream; and

   encoding the UV11 picture block to obtain an enhancement layer bitstream.

2. The method according to claim 1, wherein the third chroma pixel and the fourth chroma pixel are determined based on a value of n1, n1 is determined based on chroma values of the four pixels, n1 represents a type of chrominance of the first chroma component of the picture block, and n1 is a positive integer.

3. The method according to claim 2, wherein when n1=1, n1=3, or n1=4, the third chroma pixel and the fourth chroma pixel are two pixels at preset locations in the four pixels; or

   when n1=2, the third chroma pixel is a pixel at a preset location in the four pixels, and the fourth chroma pixel is a pixel, in the four pixels, that has a largest chroma value difference from the third chroma pixel.

4. The method according to claim 2 or 3, wherein n1 is determined based on N, and N is a quantity of chroma value differences that are greater than a first threshold and that are in chroma value differences between every two of the four pixels; and

   when N=0, n1=1;
   when 0<N≤4, n1=2;
   when N=5, n1=3; or
   when N=6, n1=4.

5. The method according to claim 1, wherein the third chroma pixel and the fourth chroma pixel are two pixels with a largest chroma value difference in the four pixels.

6. The method according to claim 1, wherein the third chroma pixel and the fourth chroma pixel are two pixels at diagonal locations in the four pixels.

7. The method according to any one of claims 1 to 6, wherein the downsampling a chroma component of the picture block to obtain a first picture block comprises:

   obtaining a first weight value corresponding to the third chroma pixel and a second weight value corresponding to the fourth chroma pixel;

   performing weighting on a chroma value of the third chroma pixel and a chroma value of the fourth chroma pixel based on the first weight value and the second weight value, to obtain a chroma value of the first chroma pixel; and

   determining the chroma value of the fourth chroma pixel as a chroma value of the second chroma pixel.

8. The method according to claim 7, wherein the obtaining a first weight value corresponding to the third chroma pixel and a second weight value corresponding to the fourth chroma pixel comprises:

obtaining luma values of four pixels in a luma component of the picture block; and

obtaining the first weight value and the second weight value based on distribution of the luma values of the four pixels in the luma component of the picture block.

9. The method according to any one of claims 1 to 8, further comprising:

encoding phase sampling information, wherein the phase sampling information comprises information indicating a location of the third chroma pixel and a location of the fourth chroma pixel.

10. The method according to claim 7 or 8, further comprising:

encoding weight information, wherein the weight information comprises information indicating the first weight value and the second weight value.

11. The method according to any one of claims 1 to 10, wherein a fifth chroma pixel and a sixth chroma pixel in a second chroma component of the first picture block are obtained based on a seventh chroma pixel and an eighth chroma pixel in four pixels in a second chroma component of the picture block.

12. The method according to claim 11, wherein the first chroma component is a component U, and the second chroma component is a component V; or the first chroma component is a component V, and the second chroma component is a component U.

13. A picture decoding method, comprising:

obtaining a base layer bitstream and an enhancement layer bitstream;

parsing the base layer bitstream to obtain a first reconstructed block, wherein a dimension of the first reconstructed block is $2\times2$, and a sampling format of the first reconstructed block is YUV4:2:0;

parsing the enhancement layer bitstream to obtain a UV11 reconstructed block;

combining the first reconstructed block and the UV11 reconstructed block to obtain a second reconstructed block, wherein a sampling format of the second reconstructed block is YUV4:2:2; and

upsampling a chroma component of the second reconstructed block to obtain a target reconstructed block, wherein a sampling format of the target reconstructed block is YUV4:4:4, and a first chroma pixel, a second chroma pixel, a third chroma pixel, and a fourth chroma pixel in a first chroma component of the target reconstructed block are obtained based on a fifth chroma pixel and a sixth chroma pixel in a first chroma component of the second reconstructed block.

14. The method according to claim 13, further comprising:

performing decoding to obtain phase sampling information, wherein the phase sampling information comprises information indicating a location of the first chroma pixel corresponding to the fifth chroma pixel and a location of the second chroma pixel corresponding to the sixth chroma pixel; and

determining the first chroma pixel and the second chroma pixel based on the phase sampling information.

15. The method according to claim 13 or 14, wherein the upsampling a chroma component of the second reconstructed block to obtain a target reconstructed block comprises:

obtaining a first weight value of the fifth chroma pixel and a second weight value of the sixth chroma pixel;

performing deweighting on a chroma value of the fifth chroma pixel and a chroma value of the sixth chroma pixel based on the first weight value and the second weight value, to obtain a chroma value of the first chroma pixel; and

determining the chroma value of the sixth chroma pixel as a chroma value of the second chroma pixel.

16. The method according to claim 15, wherein the obtaining a first weight value of the fifth chroma pixel and a second weight value of the sixth chroma pixel comprises:

performing decoding to obtain weight information, wherein the weight information comprises information indicating the first weight value and the second weight value; and

obtaining information about the first weight value and the second weight value based on the weight information.

17. The method according to claim 15, wherein the obtaining a first weight value of the fifth chroma pixel and a second weight value of the sixth chroma pixel comprises:

obtaining luma values of four pixels in a luma component of the second reconstructed block; and
obtaining the first weight value and the second weight value based on distribution of the luma values of the four pixels in the luma component of the second reconstructed block.

18. The method according to any one of claims 13 to 17, wherein the upsampling a chroma component of the second reconstructed block to obtain a target reconstructed block comprises:

obtaining four neighboring luma pixels of a target luma pixel in a luma component of the target reconstructed block, wherein the target luma pixel corresponds to a target chroma pixel, the four neighboring luma pixels correspond to four neighboring chroma pixels in a chroma component of the target reconstructed block, the four neighboring chroma pixels are respectively located above, below, on the left, or on the right of the target chroma pixel, and chroma values of the four neighboring chroma pixels have been obtained;
obtaining a luma value of the target luma pixel and luma values of the four neighboring luma pixels; and
obtaining a chroma value of the target chroma pixel based on the luma value of the target luma pixel and the luma values of the four neighboring luma pixels, wherein the target chroma pixel is the third chroma pixel or the fourth chroma pixel.

19. The method according to claim 18, wherein the obtaining a chroma value of the target chroma pixel based on the luma value of the target luma pixel and the luma values of the four neighboring luma pixels comprises:

separately calculating differences between the luma value of the target luma pixel and the luma values of the four neighboring luma pixels;
obtaining four weight values based on the differences between the luma value of the target luma pixel and the luma values of the four neighboring luma pixels; and
performing weighting on the chroma values of the four neighboring chroma pixels based on the four weight values to obtain the chroma value of the target chroma pixel.

20. The method according to claim 18, wherein the obtaining a chroma value of the target chroma pixel based on the luma value of the target luma pixel and the luma values of the four neighboring luma pixels comprises:

when there is a luma boundary around the target luma pixel or there is a chroma boundary around the target chroma pixel, obtaining a first quantity of neighboring luma pixels whose luminance is similar to that of the target luma pixel in the four neighboring luma pixels; and
obtaining the chroma value of the target chroma pixel based on the first quantity.

21. The method according to any one of claims 13 to 20, further comprising:

when the phase sampling information is obtained, obtaining a difference between the chroma value of the target chroma pixel and the chroma value of the first chroma pixel, wherein the target chroma pixel is the third chroma pixel or the fourth chroma pixel; and
when the difference is greater than a third threshold, using the chroma value of the first chroma pixel as the chroma value of the target chroma pixel.

22. The method according to any one of claims 13 to 21, wherein a seventh chroma pixel, an eighth chroma pixel, a ninth chroma pixel, and a tenth chroma pixel in a second chroma component of the target reconstructed block are obtained based on an eleventh chroma pixel and a twelfth chroma pixel in a second chroma component of the second reconstructed block.

23. The method according to claim 22, wherein the first chroma component is a component U, and the second chroma component is a component V; or the first chroma component is a component V, and the second chroma component is a component U.

24. An encoding apparatus, comprising:

an obtaining module, configured to obtain a to-be-processed picture block, wherein a dimension of the picture block is 2×2, and a sampling format of the picture block is YUV4:4:4;
a processing module, configured to: downsample a chroma component of the picture block to obtain a first picture block, wherein a sampling format of the first picture block is YUV4:2:2, and a first chroma pixel and a second chroma pixel in a first chroma component of the first picture block are obtained based on a third chroma pixel and a fourth chroma pixel in four pixels in a first chroma component of the picture block; and split a chroma component of the first picture block to obtain a second picture block and a UV11 picture block, wherein a sampling format of the second picture block is YUV4:2:0;
a base layer encoding module, configured to encode the second picture block to obtain a base layer bitstream; and
an enhancement layer encoding module, configured to encode the UV11 picture block to obtain an enhancement layer bitstream.

25. The apparatus according to claim 24, wherein the third chroma pixel and the fourth chroma pixel are determined based on a value of $n1$, $n1$ is determined based on chroma values of the four pixels, $n1$ represents a type of chrominance of the first chroma component of the picture block, and $n1$ is a positive integer.

26. The apparatus according to claim 25, wherein when $n1=1$, $n1=3$, or $n1=4$, the third chroma pixel and the fourth chroma pixel are two pixels at preset locations in the four pixels; or
when $n1=2$, the third chroma pixel is a pixel at a preset location in the four pixels, and the fourth chroma pixel is a pixel, in the four pixels, that has a largest chroma value difference from the third chroma pixel.

27. The apparatus according to claim 25 or 26, wherein $n1$ is determined based on $N$, and $N$ is a quantity of chroma value differences that are greater than a first threshold and that are in chroma value differences between every two of the four pixels; and

when $N=0$, $n1=1$;
when $0<N\leq4$, $n1=2$;
when $N=5$, $n1=3$; or
when $N=6$, $n1=4$.

28. The apparatus according to claim 24, wherein the third chroma pixel and the fourth chroma pixel are two pixels with a largest chroma value difference in the four pixels.

29. The apparatus according to claim 24, wherein the third chroma pixel and the fourth chroma pixel are two pixels at diagonal locations in the four pixels.

30. The apparatus according to any one of claims 24 to 29, wherein the processing module is specifically configured to: obtain a first weight value corresponding to the third chroma pixel and a second weight value corresponding to the fourth chroma pixel; perform weighting on a chroma value of the third chroma pixel and a chroma value of the fourth chroma pixel based on the first weight value and the second weight value, to obtain a chroma value of the first chroma pixel; and determine the chroma value of the fourth chroma pixel as a chroma value of the second chroma pixel.

31. The apparatus according to claim 30, wherein the processing module is specifically configured to: obtain luma values of four pixels in a luma component of the picture block; and obtain the first weight value and the second weight value based on distribution of the luma values of the four pixels in the luma component of the picture block.

32. The apparatus according to any one of claims 24 to 31, wherein the processing module is further configured to encode phase sampling information, wherein the phase sampling information comprises information indicating a location of the third chroma pixel and a location of the fourth chroma pixel.

33. The apparatus according to claim 30 or 31, wherein the processing module is further configured to encode weight information, wherein the weight information comprises information indicating the first weight value and the second weight value.

34. The apparatus according to any one of claims 24 to 33, wherein a fifth chroma pixel and a sixth chroma pixel in a second chroma component of the first picture block are obtained based on a seventh chroma pixel and an eighth chroma pixel in four pixels in a second chroma component of the picture block.

35. The apparatus according to claim 34, wherein the first chroma component is a component U, and the second chroma component is a component V; or the first chroma component is a component V, and the second chroma component is a component U.

36. A decoding apparatus, comprising:

an obtaining module, configured to obtain a base layer bitstream and an enhancement layer bitstream;
a base layer decoding module, configured to parse the base layer bitstream to obtain a first reconstructed block, wherein a dimension of the first reconstructed block is 2×2, and a sampling format of the first reconstructed block is YUV4:2:0;
an enhancement layer decoding module, configured to parse the enhancement layer bitstream to obtain a UV11 reconstructed block; and
a processing module, configured to: combine the first reconstructed block and the UV11 reconstructed block to obtain a second reconstructed block, wherein a sampling format of the second reconstructed block is YUV4:2:2; and upsample a chroma component of the second reconstructed block to obtain a target reconstructed block, wherein a sampling format of the target reconstructed block is YUV4:4:4, and a first chroma pixel, a second chroma pixel, a third chroma pixel, and a fourth chroma pixel in a first chroma component of the target reconstructed block are obtained based on a fifth chroma pixel and a sixth chroma pixel in a first chroma component of the second reconstructed block.

37. The apparatus according to claim 36, wherein the processing module is further configured to: perform decoding to obtain phase sampling information, wherein the phase sampling information comprises information indicating a location of the first chroma pixel corresponding to the fifth chroma pixel and a location of the second chroma pixel corresponding to the sixth chroma pixel; and determine the first chroma pixel and the second chroma pixel based on the phase sampling information.

38. The apparatus according to claim 36 or 37, wherein the processing module is specifically configured to: obtain a first weight value of the fifth chroma pixel and a second weight value of the sixth chroma pixel; perform deweighting on a chroma value of the fifth chroma pixel and a chroma value of the sixth chroma pixel based on the first weight value and the second weight value, to obtain a chroma value of the first chroma pixel; and determine the chroma value of the sixth chroma pixel as a chroma value of the second chroma pixel.

39. The apparatus according to claim 38, wherein the processing module is specifically configured to: perform decoding to obtain weight information, wherein the weight information comprises information indicating the first weight value and the second weight value; and obtain information about the first weight value and the second weight value based on the weight information.

40. The apparatus according to claim 38, wherein the processing module is specifically configured to: obtain luma values of four pixels in a luma component of the second reconstructed block; and obtain the first weight value and the second weight value based on distribution of the luma values of the four pixels in the luma component of the second reconstructed block.

41. The apparatus according to any one of claims 36 to 40, wherein the processing module is specifically configured to: obtain four neighboring luma pixels of a target luma pixel in a luma component of the target reconstructed block, wherein the target luma pixel corresponds to a target chroma pixel, the four neighboring luma pixels correspond to four neighboring chroma pixels in a chroma component of the target reconstructed block, the four neighboring chroma pixels are respectively located above, below, on the left, or on the right of the target chroma pixel, and chroma values of the four neighboring chroma pixels have been obtained; obtain a luma value of the target luma pixel and luma values of the four neighboring luma pixels; and obtain a chroma value of the target chroma pixel based on the luma value of the target luma pixel and the luma values of the four neighboring luma pixels, wherein the target chroma pixel is the third chroma pixel or the fourth chroma pixel.

42. The apparatus according to claim 41, wherein the processing module is specifically configured to: separately calculate differences between the luma value of the target luma pixel and the luma values of the four neighboring luma pixels; obtain four weight values based on the differences between the luma value of the target luma pixel and the luma values of the four neighboring luma pixels; and perform weighting on the chroma values of the four neighboring chroma pixels based on the four weight values to obtain the chroma value of the target chroma pixel.

43. The apparatus according to claim 41, wherein the processing module is specifically configured to: when there is a luma boundary around the target luma pixel or there is a chroma boundary around the target chroma pixel, obtain a first quantity of neighboring luma pixels whose luminance is similar to that of the target luma pixel in the four neighboring luma pixels; and obtain the chroma value of the target chroma pixel based on the first quantity.

44. The apparatus according to any one of claims 36 to 43, wherein the processing module is further configured to: when the phase sampling information is obtained, obtain a difference between the chroma value of the target chroma pixel and the chroma value of the first chroma pixel, wherein the target chroma pixel is the third chroma pixel or the fourth chroma pixel; and when the difference is greater than a third threshold, use the chroma value of the first chroma pixel as the chroma value of the target chroma pixel.

45. The apparatus according to any one of claims 36 to 44, wherein a seventh chroma pixel, an eighth chroma pixel, a ninth chroma pixel, and a tenth chroma pixel in a second chroma component of the target reconstructed block are obtained based on an eleventh chroma pixel and a twelfth chroma pixel in a second chroma component of the second reconstructed block.

46. The apparatus according to claim 45, wherein the first chroma component is a component U, and the second chroma component is a component V; or the first chroma component is a component V, and the second chroma component is a component U.

47. An encoder, comprising:

   one or more processors; and
   a non-transitory computer-readable storage medium coupled to the processor and storing a program executed by the processor, wherein when the program is executed by the processor, the encoder is enabled to perform the method according to any one of claims 1 to 12.

48. A decoder, comprising:

   one or more processors; and
   a non-transitory computer-readable storage medium coupled to the processor and storing a program executed by the processor, wherein when the program is executed by the processor, the decoder is enabled to perform the method according to any one of claims 13 to 23.

49. A computer-readable storage medium, comprising program code, wherein the program code is executed by a computer device, to perform the method according to any one of claims 1 to 23.

50. A computer-readable storage medium, comprising a bitstream coded by using the method according to any one of claims 1 to 23.

10

FIG. 1A

FIG. 1B

FIG. 2

FIG. 3

Decoder 30

Encoded picture data 21

302

Entropy decoding unit 304

Syntax element 366

Quantization coefficient 309

Mode application unit 360

Intra prediction unit 344

Inter prediction unit 354

Prediction block 365

Inverse quantization unit 310

Dequantization coefficient 311

Inverse transform processing unit 312

Reconstructed residual block 313

Reconstruction unit 314

Reconstructed block 315

Loop filter 320

Filtered block 321

Decoded picture buffer 330

Decoded picture 311

Decoded picture 331

Output end 332

FIG. 4

FIG. 5

FIG. 6a

FIG. 6b

FIG. 6c

FIG. 7a

FIG. 7b

FIG. 8

900

Obtain a to-be-processed picture block, where a dimension of the picture block is 2×2, and a sampling format of the picture block is YUV4:4:4 — 901

Downsample a chroma component of the picture block to obtain a first picture block, where a sampling format of the first picture block is YUV4:2:2, and a first chroma pixel and a second chroma pixel in a first chroma component of the first picture block are obtained based on a third chroma pixel and a fourth chroma pixel in four pixels in a first chroma component of the picture block — 902

Split a chroma component of the first picture block to obtain a second picture block and a UV11 picture block, where a sampling format of the second picture block is YUV4:2:0 — 903

Encode the second picture block to obtain a base layer bitstream — 904

Encode the UV11 picture block to obtain an enhancement layer bitstream — 905

FIG. 9

<u>1000</u>

| | |
|---|---|
| Obtain a base layer bitstream and an enhancement layer bitstream | 1001 |

↓

| | |
|---|---|
| Parse the base layer bitstream to obtain a first reconstructed block, where a dimension of the first reconstructed block is 2×2, and a sampling format of the first reconstructed block is YUV4:2:0 | 1002 |

↓

| | |
|---|---|
| Parse the enhancement layer bitstream to obtain a UV11 reconstructed block | 1003 |

↓

| | |
|---|---|
| Splice the first reconstructed block and the UV11 reconstructed block to obtain a second reconstructed block, where a sampling format of the second reconstructed block is YUV4:2:2 | 1004 |

↓

| | |
|---|---|
| Upsample a chroma component of the second reconstructed block to obtain a target reconstructed block, where a sampling format of the target reconstructed block is YUV4:4:4, and a first chroma pixel, a second chroma pixel, a third chroma pixel, and a fourth chroma pixel in a first chroma component of the target reconstructed block are obtained based on a fifth chroma pixel and a sixth chroma pixel in a first chroma component of the second reconstructed block | 1005 |

FIG. 10

```
┌─────────────────┐
│ YUV4:4:4 source │
│     picture     │
└─────────────────┘
         │
         ▼
┌─────────────────┐
│     Chroma      │──────────┐
│  downsampling   │          │
└─────────────────┘          │
         │                   │
         ▼                   │
┌─────────────────┐          │
│ YUV4:2:2 picture│          │
└─────────────────┘          │
```

┌──────────────┐    ┌──────────────┐         Sampling
│Phase sampling│ ──▶│   Sampling   │ ──▶   information
│ information  │    │ information  │          stream
└──────────────┘    │   encoding   │
                    └──────────────┘

┌──────────────┐    ┌──────────────┐      Enhancement
│ UV11 chroma  │ ──▶│ Enhancement  │ ──▶  layer bitstream
│    signal    │    │layer encoding│
└──────────────┘    └──────────────┘

┌──────────────┐    ┌──────────────┐    ┌──────────────┐      Base layer
│Chroma picture│ ──▶│ YUV4:2:0     │ ──▶│  Base layer  │ ──▶    bitstream
│  splitting   │    │   picture    │    │   encoding   │
└──────────────┘    └──────────────┘    └──────────────┘

FIG. 11a

FIG. 11b

FIG. 12a

FIG. 12b

Sampling mode "0"   Sampling mode "1"   Sampling mode "2"

YUV4:2:2 chroma block

YUV4:4:4 chroma block

FIG. 12c

FIG. 12d

FIG. 12e

FIG. 12f

```
┌─────────────────┐
│   YUV4:4:4      │
│  source picture │
└────────┬────────┘
         │
         ▼
┌─────────────────┐                              ┌─────────────────┐      ┌─────────────────┐
│    Chroma       │                              │   UV11 chroma   │─────▶│  Enhancement    │────▶ Enhancement
│  downsampling   │                         ┌───▶│     signal      │      │ layer encoding  │      layer bitstream
└────────┬────────┘                         │    └─────────────────┘      └────────▲────────┘
         │                                  │                                      │
         ▼                                  │                             ┌────────┘
┌─────────────────┐   ┌─────────────────┐   │    ┌─────────────────┐      │         ┌─────────────────┐
│   YUV4:2:2      │──▶│ Chroma picture  │───┼───▶│   YUV4:2:0      │──────┴────────▶│   Base layer    │────▶ Base layer
│    picture      │   │    splitting    │        │    picture      │                │   encoding      │      bitstream
└─────────────────┘   └─────────────────┘        └─────────────────┘                └─────────────────┘
```

FIG. 13a

YUV4:4:4 reconstructed picture

YUV4:2:2 reconstructed picture

Upsampling interpolation

Post-processing splicing

UV11 reconstructed signal

YUV4:2:0 reconstructed picture

Enhancement layer decoding

Base layer decoding

Enhancement layer bitstream

Base layer bitstream

FIG. 13b

Sampling method 1          Sampling method 2

YUV4:4:4 chroma block

YUV4:2:2 chroma block

FIG. 14a

Sampling method 1          Sampling method 2

YUV4:2:2 chroma block

YUV4:4:4 chroma block

FIG. 14b

Sampling mode "0"    Sampling mode "1"    Sampling mode "2"

YUV4:4:4
chroma block

$A_0$    $A_1$
$A_2$    $A_3$

$B_0$    $B_1$
$B_2$    $B_3$

$C_0$    $C_1$
$C_2$    $C_3$

YUV4:2:2
chroma block

$A_0$

$A_3$

$B_0$

$B_2$

$C_1$

$C_2$

FIG. 15a

Sampling mode "0"    Sampling mode "1"    Sampling mode "2"

YUV4:2:2
chroma block

$A_0$

$A_1$

$B_0$

$B_1$

$C_0$

$C_1$

YUV4:4:4
chroma block

$A_0$    $Gd_1$
$Gd_2$    $A_1$

$B_0$    $Hd_1$
$B_1$    $Hd_3$

$Rd_0$    $C_0$
$C_1$    $Rd_3$

FIG. 15b

FIG. 15c

FIG. 15d

FIG. 15e

FIG. 16

Decoding apparatus 1700

Obtaining module 1701

Base layer decoding module 1702

Enhancement layer decoding module 1703

Processing module 1704

FIG. 17

## INTERNATIONAL SEARCH REPORT

| International application No. |
|---|
| **PCT/CN2023/104087** |

**A. CLASSIFICATION OF SUBJECT MATTER**

H04N19/132(2014.01)i; H04N19/186(2014.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT, WPABS, ENTXT: 图像, 编码, 采样, 取样, 格式, 4: 4: 4, 4: 2: 2, 4: 2: 0, 色度, 图像块, 位置, 相位, 第三, 第四, 像素, 基层, 基本层, 增强层, 分层, 分级, 层级, 差, 种类, 权重, 加权, 权值, 亮度, image, encode, sample, format, chroma, block, position, phase, third, forth, pixel, based layer, enhanced layer, layer, difference, weight, luma

**C. DOCUMENTS CONSIDERED TO BE RELEVANT**

| Category* | Citation of document, with indication, where appropriate, of the relevant passages | Relevant to claim No. |
|---|---|---|
| X | CN 104782135 A (LG ELECTRONICS INC.) 15 July 2015 (2015-07-15) description, paragraphs [0083]-[0094] and [0139]-[0149] | 1, 9, 11-14, 22-24, 32, 34-37, 45-50 |
| A | CN 102523458 A (SHANDONG UNIVERSITY) 27 June 2012 (2012-06-27) entire document | 1-50 |
| A | CN 113422961 A (HANGZHOU ARCVIDEO TECHNOLOGY CO., LTD.) 21 September 2021 (2021-09-21) entire document | 1-50 |
| A | CN 1728833 A (DAEYANG FOUNDATION; SAMSUNG ELECTRONICS CO., LTD.) 01 February 2006 (2006-02-01) entire document | 1-50 |
| A | US 2018115776 A1 (MICROSOFT TECHNOLOGY LICENSING LLC.) 26 April 2018 (2018-04-26) entire document | 1-50 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 October 2023** | **13 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## EP 4 611 369 A1

| Patent document cited in search report | | | Publication date (day/month/year) | Patent family member(s) | | | Publication date (day/month/year) |
|---|---|---|---|---|---|---|---|
| CN | 104782135 | A | 15 July 2015 | JP | 2016501458 | A | 18 January 2016 |
| | | | | JP | 6126234 | B2 | 10 May 2017 |
| | | | | CA | 2890508 | A1 | 15 May 2014 |
| | | | | CA | 2890508 | C | 15 August 2017 |
| | | | | KR | 20150087209 | A | 29 July 2015 |
| | | | | EP | 2919471 | A1 | 16 September 2015 |
| | | | | EP | 2919471 | A4 | 13 July 2016 |
| | | | | US | 2015304693 | A1 | 22 October 2015 |
| | | | | US | 9554162 | B2 | 24 January 2017 |
| | | | | WO | 2014073927 | A1 | 15 May 2014 |
| CN | 102523458 | A | 27 June 2012 | None | | | |
| CN | 113422961 | A | 21 September 2021 | None | | | |
| CN | 1728833 | A | 01 February 2006 | KR | 20060006183 | A | 19 January 2006 |
| | | | | KR | 100657268 | B1 | 14 December 2006 |
| | | | | EP | 1617679 | A2 | 18 January 2006 |
| | | | | EP | 1617679 | A3 | 08 February 2006 |
| | | | | US | 2006013308 | A1 | 19 January 2006 |
| US | 2018115776 | A1 | 26 April 2018 | WO | 2018075287 | A1 | 26 April 2018 |
| | | | | US | 10368080 | B2 | 30 July 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211350403X